(19) Europäisches Patentamt
European Patent Office
Office européen des brevets

(11) EP 0 559 844 B1

(12) **EUROPEAN PATENT SPECIFICATION**

(45) Date of publication and mention of the grant of the patent:
**10.02.1999 Bulletin 1999/06**

(21) Application number: **92905922.8**

(22) Date of filing: **26.11.1991**

(51) Int. Cl.$^6$: **B01J 35/04**, F23R 3/40, F23C 11/00, B01J 37/02

(86) International application number:
**PCT/US91/08918**

(87) International publication number:
**WO 92/09848 (11.06.1992 Gazette 1992/13)**

# (54) PALLADIUM PARTIAL COMBUSTION CATALYSTS AND A PROCESS FOR USING THEM

PALLADIUM KATALYSATOREN FÜR UNVOLLSTÄNDIGE VERBRENNUNG UND VERFAHREN ZU DEREN VERWENDUNG

CATALYSEURS DE COMBUSTION PARTIELLE AU PALLADIUM ET LEUR PROCEDE D'UTILISATION

(84) Designated Contracting States:
**AT BE CH DE DK ES FR GB GR IT LI LU NL SE**

(30) Priority: **26.11.1990 US 617974**
**26.11.1990 US 617975**
**26.11.1990 US 617979**
**26.11.1990 US 617981**

(43) Date of publication of application:
**15.09.1993 Bulletin 1993/37**

(73) Proprietors:
- **CATALYTICA, INC.**
  **Mountain View, CA 94043-5272 (US)**
- **TANAKA KIKINZOKU KOGYO KABUSHIKI KAISHA**
  **Hiratsuka-City, Kanagawa 254 (JP)**

(72) Inventors:
- **DALLA BETTA, Ralph, A.**
  **Mountain View, CA 94040 (US)**
- **TSURUMI, Kazunori**
  **Kanagawa 251 (JP)**
- **SHOJI, Toru**
  **Sunnyvale, CA 94086 (US)**
- **EZAWA, Nobuyasu**
  **Tokyo 135 (JP)**
- **RIBIERO, Fabio, H.**
  **Mountain View, CA 94040 (US)**
- **GARTEN, Robert, L.**
  **Cupertino, CA 95014 (US)**

(74) Representative:
**Goldin, Douglas Michael et al**
**J.A. KEMP & CO.**
**14 South Square**
**Gray's Inn**
**London WC1R 5LX (GB)**

(56) References cited:
**EP-A- 198 948**
**EP-A- 356 197**
**EP-A- 370 244**
**FR-A- 2 382 584**
**US-A- 4 270 896**
**US-A- 4 603 547**
**US-A- 4 870 824**
**US-A- 4 893 465**
**US-A- 5 026 611**

EP 0 559 844 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

RELATED APPLICATIONS

This is a continuation-in-part of U.S. Ser. No. 07/617,974, to Dalla Betta, Tsurumi, and Shoji, entitled "A GRADED PALLADIUM-CONTAINING PARTIAL COMBUSTION CATALYST AND A PROCESS OF USING IT (PA-0029)"; U.S. Ser. No. 07/617,975, to Dalla Betta, Shoji, Tsurumi, and Ezawa, entitled "A PARTIAL COMBUSTION PROCESS AND A CATALYST FOR USE IN THE PROCESS (PA-0006)"; U.S. Ser. No. 07/617,979, to Dalla Betta, Tsurumi, Shoji, and Garten, entitled "A PARTIAL COMBUSTION CATALYST OF PALLADIUM ON A ZIRCONIA SUPPORT AND A PROCESS OF USING IT (PA-0026)"; and U.S. Ser. No. 07/617,981, to Dalla Betta, Ezawa, Tsurumi, Shoji, and Ribeiro entitled "A MIXED METAL PARTIAL COMBUSTION CATALYST CONTAINING PALLADIUM AND A PROCESS OF USING IT (PA-0025)". Each was filed on November 26, 1990 and the entirety of which are incorporated by notice.

FIELD OF THE INVENTION

This invention is a catalyst comprising palladium on a support and a partial combustion process in which fuel is partially combusted using that catalyst. The palladium catalyst may also comprise palladium mixed with metals selected from Group VIII or IB, may be graded such as to have higher activity in the forward edge of the catalyst, or may be placed on a support comprising zirconia. The choice of catalysts and supports specified each solves a variety of problems dealing with the long term stability of the palladium as a partial combustion catalyst. The catalyst structure is stable in operation, has a comparatively low operating temperature, has a low temperature at which oxidation begins, and yet is not susceptible to temperature "runaway". The combustion gas produced by the catalytic process typically is at a temperature below the autocombustive temperature and may be used at that temperature or it may be fed to other combustion stages for further use in a gas turbine, furnace, boiler, or the like.

BACKGROUND OF THE INVENTION

With the advent of modern antipollution laws in the United States and around the world, significant and new methods of minimizing various pollutants are being investigated. The burning of fuel --be the fuel wood, coal, oil, or a natural gas-- likely causes a majority of the pollution problems in existence today. Certain pollutants, such as $SO_2$, which are created as the result of the presence of a contaminant in the fuel source may be removed either by treating the fuel to remove the contaminant or by treating the exhaust gas eventually produced. Other pollutants such as carbon monoxide, which are created as the result of imperfect combustion, may be removed by post-combustion oxidation or by improving the combustion process. The other principal pollutant, $NO_x$ (an equilibrium mixture mostly of NO, but also containing very minor amounts of $NO_2$), may be dealt with either by controlling the combustion process to minimize $NO_x$ production or by later removal. Removal of $NO_x$, once produced, is a difficult task because of its relative stability and its low concentrations in most exhaust gases. One solution found in automobiles is the use of carbon monoxide chemically to reduce $NO_x$ to nitrogen while oxidizing the carbon monoxide to carbon dioxide. However, in some combustion processes (such as gas turbines) the carbon monoxide concentration is insufficient to react with and to remove to the $NO_x$.

It must be observed that unlike the situation with sulfur pollutants where the sulfur contaminant may be removed from the fuel, removal of nitrogen from the air fed to the combustion process is clearly impractical. Unlike the situation with carbon monoxide, improvement of the combustion reaction would likely increase the level of $NO_x$ produced due to the higher temperatures present in the combustion process.

Nevertheless, the challenge to reduce $NO_x$ in combustion processes remains and several different methods have been suggested. The $NO_x$ abatement process chosen must not substantially conflict with the goal for which the combustion gas was created, i.e., the recovery of its heat value in a turbine, boiler, or furnace.

Many recognize that a fruitful way of controlling $NO_x$ production in combustion processes used for turbine feed gases is to limit the localized and bulk temperatures in the combustion zone to something less than 1800°C. See, for instance, U.S. Patent No. 4,731,989 to Furuya et al. at column 1, lines 52-59 and U.S. Patent No. 4,088,135 to Hindin et al. at column 12.

EP-A-0198948 refers to a multistage process for combustion of methane or a lower hydrocarbon fuel where the catalysts contain palladium and some other catalytic metal (such as platinum or nickel). The Examples use ceramic honeycomb catalysts none of which use a zirconia washcoat.

US-A-4270896 refers to a staged catalytic process where the initial or light off-portion of a catalytic honeycomb monolith is protected against thermal conductivity and radiant heat transfer. The catalyst structure is a ceramic structure coated with a cerium and alumninum oxide washcoat.

FR-A-2392584 refers to a catalyst which has platinum on alumina on a monolith support. The platinum operates at a higher temperature than the palladium TGA transition temperature.

There are a number of ways of controlling the temperature, such as by dilution with excess air, controlled oxidation using one or more catalysts, or staged combustion using variously lean or rich fuel mixtures. Combinations of these methods are also known.

One widely attempted method is the use of multi-stage catalytic combustion. Most of these disclosed processes utilize multi-section catalysts of metal oxide on ceramic catalyst carriers. Typical of such disclosures are:

| Country | Document | 1st Stage | 2nd Stage | 3rd Stage |
|---|---|---|---|---|
| Japan | Kokai 60-205129 | Pt-group/$Al_2O_3$&$SiO_2$ | La/$SiO_2$·$Al_2O_3$ | |
| Japan | Kokai 60-147243 | La&Pd&Pt/$Al_2O_3$ | ferrite/$Al_2O_3$ | |
| Japan | Kokai 60-66022 | Pd&Pt/$ZrO_2$ | Ni/$ZrO_2$ | |
| Japan | Kokai 60-60424 | Pd/- | CaO&$Al_2O_3$&NiO&w/noble metal | |
| Japan | Kokai 60-51545 | Pd/* | Pt/* | $LaCoO_3$/* |
| Japan | Kokai 60-51543 | Pd/* | Pt/* | |
| Japan | Kokai 60-51544 | Pd/* | Pt/* | base metal oxide/* |
| Japan | Kokai 60-54736 | Pd/* | Pt or Pt-Rh or Ni base metal oxide or $LaCO_3$/* | |
| Japan | Kokai 60-202235 | $MoO_4$/- | $CoO_3$&$ZrO_2$&noble metal | |
| Japan | Kokai 60-200021 | Pd&$Al_2O_3$/+* | Pd&$Al_2O_3$/** | Pt/** |
| Japan | Kokai 60-147243 | noble metal/heat resistant carrier | ferrite/heat resistant carrier | |
| Japan | Kokai 60-60424 | La or Nd/$Al_2O_3$ 0.5%$SiO_2$ | Pd or Pt/NiO&$Al_2O_3$& CaO 0.5%SiO | |
| Japan | Kokai 60-14938 | Pd/? | Pt/? | |
| Japan | Kokai 60-14939 | Pd&Pt/refractory | ? | ? |
| Japan | Kokai 61-252409 | Pd&Pt/*** | Pd&Ni/*** | Pd&Pt/*** |
| Japan | Kokai 62-080419 | Pd&Pt | Pd,Pt&NiO | Pt or Pt&Pd |
| Japan | Kokai 62-080420 | Pd&Pt&NiO | Pt | Pt&Pd |
| Japan | Kokai 63-080848 | Pt&Pd | Pd&Pt&NiO | Pt or Pt&Pd |
| Japan | Kokai 63-080849 | Pd,Pt,NiO/? | Pd&Pt(orNiO)/? | Pt or Pd&Pt/? |

*alumina or zirconia on mullite or cordierite
**Ce in first layer; one or more of Zr, Sr, Ba in second layer; at least one of La and Nd in third layer.
***monolithic support stabilized with lanthanide or alkaline earth metal oxide
Note: the catalysts in this Table are characterized as "a"/"b" where "a" is the active metal and "b" is the carrier

It is, however, difficult to control intermediate, or between-stage, temperatures in these processes. Since the object of each of the processes is to produce a maximum amount of heat in a form which can be efficiently used in some later process, the combustive steps are essentially adiabatic. Consequently, a minor change in any of fuel rate, air rate, or operating processes will cause significant changes in the inter-stage temperatures. Very high temperatures place thermal strain on downstream catalytic elements.

This list also makes clear that platinum group metals, including palladium, are considered useful in catalytic combustion processes. However, conventional catalytic combustion processes often mix the fuel and air and then pass this mixture over a catalyst with essentially complete combustion in the catalyst bed. This results in extremely high temperatures, typically 1100°C to 1500°C. For this reason, much of the catalyst development work is directed at catalysts and supports that can withstand those high temperatures and yet remain active. Some have relied on process control schemes in which the flow rate of an intermediate stream of air or fuel is introduced between catalyst stages and is controlled based upon bulk gas temperature. Furuya et al., mentioned above, describes one approach in circumventing the problems associated with a high catalyst temperature through dilution of the fuel/air mixture with air fed to the catalyst so that the resulting mixture has an adiabatic combustion temperature of 900°C to 1000°C. This mixture is passed through the catalyst and partial or complete reaction gives a maximum catalyst temperature less than 1000°C and a gas temperature less than 1000°C. Additional fuel is added after the catalyst and homogeneous combustion of this mixture gives the required temperature, 1200°C to 1500°C. This process, however, suffers from the need to add fuel at two stages and the requirements to mix this additional fuel with hot gases without obtaining a conventional high temperature diffusion flame and the associated production of $NO_x$.

The process of our invention mixes air and fuel at the beginning of the combustor in a ratio such that the final combustion temperature is, after further combustion step or steps, that required by some later process or device which recovers the heat from the combustion gas, e.g., a gas turbine. A typical mixture might be methane and air at a volume fuel/volume air ratio of 0.043. Such a mixture (after being preheated to 350°C) could produce a combustion temperature of about 1300°C. This mixture passes over a catalyst and is only partially combusted with the catalyst limiting the maximum catalyst temperature to a level substantially less than the adiabatic combustion temperature of the gas. The limiting effect is believed to be due to the reaction:

$$PdO \rightarrow Pd + \tfrac{1}{2}\, O_2$$

at the partial pressure of oxygen present during the reaction. The limiting temperature has been found to be the temperature at which the palladium/palladium oxide transition occurs in a thermogravimetric analysis (TGA) procedure. As a rule of thumb, this transition temperature for pure palladium is about 780°C to 800°C in air at one atm and 930°C to 950°C in air at ten atm.

We have found that palladium catalysts can become unstable in partial combustion operation: the reaction dies with time and the level of preheat temperature required for stable operation increases. We have found a number of solutions to this problem. For instance we have observed that use of the stable temperature self-controlling feature of this invention takes place by employing one or more of the following:

a. Use of palladium (and optionally another Group VIII noble metal, such as platinum, osmium, rhodium, ruthenium; preferably platinum; or a Group IB metal, such as copper, gold, silver; preferably silver) as the active catalytic metal,

b. Use of a diffusion barrier applied over the catalyst surface to limit the rate at which the fuel diffuses to the catalyst and, therefore, limits the catalytic reaction rate and allows palladium to limit the maximum temperature,

c. Use of a zirconia-containing support (preferably, in turn, on a metal substrate) to support the catalyst layer and provide a catalyst structure very resistant to thermal shock, or

d. placement of the catalytic metals on the support so that a leading portion of the catalyst structure in the flowing gas stream contains catalytic material of higher activity.

The interconversion of palladium oxide and palladium at approximately 800°C has been described previously, for example, by Furuya et al. in U.S. Patent No. 4,731,989. However, this patent describes this interconversion as a disadvantage since the active palladium oxide species is converted to a less active palladium species thus preventing the combustion reaction from going to completion on the catalyst. The inventive process herein uses this palladium oxide/palladium interconversion process stabilized or promoted variously as specified herein to limit the catalyst temperature and thereby permit the use of very high activity and stable catalysts.

By maintaining the catalyst temperature at a level substantially below the adiabatic combustion temperature, problems associated with thermal sintering of the catalyst, vaporization of the palladium, and thermal shock of the support can be minimized or eliminated.

The use of metal catalyst supports for platinum group metals has been suggested in passing. For instance, see U.S. Patent No. 4,088,435 to Hindin et al., "platinum group metals" at column 4, lines 63 et seq., and "the support may be metallic or ceramic..." at column 6, line 45. Conversely, the use of a platinum group alloy monolithic catalyst as a combustion catalyst is suggested in U.S.Pat. No. 4,287,856 to Hindin et al. at column 1, line 65 et al. Other similar disclosures are found in the earlier U.S. Patent Nos. 3,966,391; 3,956,188; 4,008,037; and 4,021,185 all to Hindin et al. Platinum on a steel ("Fecralloy") support as a combustion catalyst for low heating value gas is suggested in U.S. Patent No. 4,366,668 to Madgavkar et al.

Other disclosures of metals and metal supports used mainly for automotive catalytic converters include:

| Country | Document | Patentee |
|---|---|---|
| U.S. | 3,920,583 | Pugh |
| U.S. | 3,969,082 | Cairns et al. |
| U.S. | 4,279,782 | Chapman et al. |
| U.S. | 4,318,828 | Chapman et al. |
| U.S. | 4,331,631 | Chapman et al. |
| U.S. | 4,414,023 | Aggen et al. |
| U.S. | 4,521,532 | Cho |
| U.S. | 4,601,999 | Retallick et al. |
| U.S. | 4,673,663 | Maqnier |
| U.S. | 4,742,038 | Matsumoto |
| U.S. | 4,752,599 | Nakamura et al. |
| U.S. | 4,784,984 | Yamanaka et al. |
| Great Britain | 1,528,455 | Cairns et al. |

As a group, these patents generally discuss ferritic catalyst supports upon which alumina is found as microcrystals, coatings, whiskers, etc. Many disclose that platinum group metals are suitably placed on those supports as catalysts. None suggest the catalysts comprising palladium nor their abilities stably to limit the catalyst temperature.

Moreover, in a practical sense the use of metal substrates has been limited to applications where the adiabatic combustion temperature is below 1100°C or 1000°C where the complete combustion of the fuel/air mixture will result in a substrate temperature that would not damage the metal. This limitation caps the final gas temperature that can be achieved or requires the use of staged fuel or air addition further complicating the combustor design. The use of the inventive process limits the metal substrate temperature to less than 850°C at 0.1 MPa (one atm) pressure and to less than 950°C at 1.6 MPa (16 atm) pressure even for fuel/air mixtures with adiabatic combustion temperatures of 1300 °to 1600°C.

Our inventive process for stably limiting the substrate temperature also offers advantage for ceramic substrates since limiting the substrate temperature reduces thermal stress and failure due to thermal shock during start up and shutdown of the combustor. This protection is especially important for fuel/air ratios corresponding to adiabatic combustion temperatures of 1300°C to 1600°C. In summary, although the literature suggests various unrelated portions of the inventive process and the catalyst structure, none of these documents suggests that the disclosed palladium-containing catalysts offer the disclosed advantages in addition to stably limiting the substrate temperature.

## SUMMARY OF THE INVENTION

This invention is a combustion catalyst comprising palladium. The combustion catalyst may optionally contain a Group IB or VIII noble metal and may be placed on a support comprising zirconium. Additionally, the combustion catalyst may be graded, that is, may have a higher activity portion at the leading edge of the catalyst structure. The invention includes a partial combustion process in which the fuel is partially combusted using that catalyst. The choice of catalysts and supports solves a problem in the art dealing with the long term stability of palladium as a partial combustion catalyst. The catalyst structure is stable in operation, has a comparatively low operating temperature, has a low "light off" temperature, and yet is not susceptible to temperature "runaway". The combustion gas produced by the catalytic process may be at a temperature below the autocombustive temperature, may be used at that temperature, or fed to other combustive stages for further use in a gas turbine, furnace, boiler, or the like.

BRIEF DESCRIPTION OF THE DRAWINGS

Figures 1 and 2 show schematic, cross section closeups of a number of catalysts within the scope of the invention.

Figure 3 is a graph comparing the respective operating temperatures of palladium or platinum catalysts at various of fuel/air ratios.

Figure 4A is a graph of the TGA of palladium oxide/palladium at one atm air.

Figure 4B is a graph of the TGA of palladium oxide/palladium at one atm of pure $O_2$.

Figure 5 is a graph of various process outlet temperatures as a function of catalyst preheat temperature for a particular uncoated catalyst.

Figure 6 is a graph of various process outlet temperatures as a function of catalyst preheat temperature for a particular catalyst having a diffusion barrier.

Figures 7A and 7B are graphs of LOT and steady state operation temperatures for a zirconia-coated cordierite monolith.

Figures 8A and 8B are graphs of LOT and steady state operation temperatures for a zirconia-coated metal monolith.

Figures 9A and 9B are temperature graphs showing operation of the invention using a zirconia coated ceramic support.

Figures 10A and 10B are temperature graphs for comparison to Figures 9A and 9B.

Figures 11A and 11B are temperature graphs showing operation of the invention using a zirconia coated metal support.

Figures 12A and 12B are temperature graphs for comparison to Figures 11A and 11B.

Figures 13A-13D and 14A-14D are graphs showing the effect of varying amounts of platinum on the operation of a cordierite supported palladium combustion catalyst.

Figures 15A-15B and 16A-16B are graphs showing the effect of platinum on the operation of a metal supported palladium combustion catalyst.

Figures 17 and 18 are temperature graphs showing the operation of the inventive gradedand comparative catalyst properties.

DESCRIPTION OF THE INVENTION

This invention is a combustion catalyst comprising palladium and may optionally contain a Group IB or VIII noble metal and may be placed on a support comprising zirconium. Additionally, the combustion catalyst may be graded, that is, may have a higher activity portion at the leading edge of the catalyst structure. The invention includes a partial combustion process in which the fuel is partially combusted using that catalyst. The choice of catalysts and supports solves a problem in the art dealing with the long term stability of palladium as a partial combustion catalyst. The catalyst structure is stable in operation, has a comparatively low operating temperature, has a low "light off" temperature, and yet is not susceptible to temperature "runaway". The combustion gas produced by the catalytic process may be at a temperature below the autocombustive temperature, may be used at that temperature, or fed to other combustive stages for further use in a gas turbine, furnace, boiler, or the like.

Catalyst and Catalytic Structures

The catalyst contains palladium and, optionally, one or more Group VIII noble metal (platinum, ruthenium, rhodium, osmium, or iridium; preferably platinum) or Group IB metal (preferably silver) in an amount no more than equimolar to palladium. Palladium is fairly active as an oxidation catalyst at temperatures of 325°C and lower and consequently is useful in a partial combustion process as a "light off" catalyst. As was discussed above, the catalytic activity of palladium as a fuel oxidation catalyst is believed to be due to the presence of palladium oxide. Palladium metal does not appear to be a very active as a catalyst except at fairly high temperatures, e.g., above 750°C to 890°C. Palladium metal is readily oxidized to palladium oxide in the presence of excess oxygen at temperatures as low as 325°C according to the equilibrium reaction:

$$\frac{1}{2} O_2 + Pd \leftrightarrow PdO.$$

However, as the temperature rises, the equilibrium shifts to the left, i.e., the palladium oxide decomposes. This transition causes the reaction temperature to be self-limiting. In 0.1 MPa (one atm) pressure air the combustion goes readily up to a temperature of about 750°C to 800°C, the palladium oxide becomes the lesser present species, and the reaction consequently slows.

The temperature at which palladium oxide converts to palladium depends in part on the oxygen partial pressure. That conversion temperature appears to be readily determinable through thermogravimetric analysis ("TGA" -- a procedure that measures the weight loss of a sample of palladium oxide as it is subjected to a temperature increase). The PdO-Pd transition point establishes the self-limiting substrate temperature for those operating conditions. A palladium catalyst used as a combustion catalyst will generally limit the substrate temperature to this TGA transition limiting temperature.

We have found however that the use of palladium on some substrates, notably those containing alumina, results in a partial oxidation catalyst having an unpredictable life. The reason for the deactivation is unclear although the resulting decline in outlet temperature may be quite pronounced. The effect is observed on both alumina coated metal supports and with neat aluminas. The addition of a discrete amount of a Group VIII noble metal or Group IB metal (such as platinum or silver) to the palladium catalyst provides long term stabliity to the catalyst composition and does not substantially affect the desirable low "light off" temperatures found with palladium catalysts. We have also found that the use of a catalyst support comprising zirconium (preferably in the form of zirconia) also stabilizes the steady-state operation of palladium-based partial oxidation catalysts.

The palladium metal is added in an amount sufficient to provide catalytic activity. The specific amount added depends on a number of requirements, e.g., the fuel used, economics, activity, life, contaminant presence, etc. The theoretical maximum amount of metal is likely enough to cover the maximum amount of support without causing undue metal crystallite growth and concomitant loss of activity. These clearly are competing factors: maximum catalytic activity requires higher surface coverage but higher surface coverage can promote growth between adjacent crystallites. Furthermore, the form of the catalyst support must be considered. If the support is used in a high space velocity environment, the catalyst loadings should be high to maintain sufficient conversion even though the residence time is low. Economics has, as its general goal, the use of the smallest amount of catalytic metal which will do the required task. Finally, the presence of contaminants in the fuel would mandate the use of higher catalyst loadings to offset deterioration in the catalyst due to deactivation.

The palladium metal content of this catalyst composite typically should be from 0.01% to 25% by weight. The amount also is affected by the make up of the feed.

The palladium may be incorporated onto the support in a variety of different methods using palladium complexes, compounds, or dispersions of the metal. The compounds or complexes may be water or hydrocarbon soluble. The palladium metal may be precipitated from solution. The liquid carrier generally needs only to be removable from the catalyst carrier by volatilization or decomposition while leaving the palladium in a dispersed form on the support. Examples of the palladium complexes and compounds suitable in producing the catalysts used in this invention are palladium chloride, palladium diammine di-nitrite, palladium nitrate, palladium tetrammine chloride, sodium palladium chloride, palladium 2-ethylhexanoic acid, and a variety of other palladium salts or complexes. Although the chloride compounds produce catalysts which are typically quite active, chlorides are not an excellent choice when the catalyst is used in a combustor for a gas turbine. Chlorides, even in very small amounts, cause significant turbine blade and bucket corrosion. Consequently, nitrogen-containing palladium precursors are most desirable.

As mentioned above, the catalyst may contain an adjunct catalyst such as a Group IB metal (such as silver) or a Group VIII noble metal (such as platinum) in an amount up to slightly more than the molar amount of the palladium found in the catalyst composition. Molar ratios of the palladium to adjunct metal between 0.95 and 25 are effective. Although the adjunct metal may be added by inclusion in the liquid carrier containing the palladium as a complex, compound, or metallic dispersion, the resulting catalyst is more predictably stable if the adjunct metal is added in a subsequent step. Examples of platinum complexes and compounds suitable in producing the optional catalysts of this invention are platinum chloride, platinum diammine dinitrite, platinum nitrate, platinum tetrammine chloride, sodium platinum chloride, and a variety of other platinum salts or complexes. Similar salts and complexes are known for the other Group VIII noble metals or Group IB metals.

Also as mentioned above, we have observed that use of a catalyst structure in which the front edge of the catalyst structure is higher in activity than that of the trailing portions results in a structure which has the benefit of a lower light-off temperature, no "hot-spotting" in the latter portion of the catalyst structure, and an overall operationally stable catalyst.

The graded structure can be produced a number of different ways. As shown in Figure 1, the substrate metal or ceramic (102) can be coated with three different catalysts (104, 106, and 108). Each catalyst has a different activity: catalyst 104 having the highest activity, catalyst 106 having an intermediate activity, and catalyst 108 having the lowest activity. Catalysts 104, 106, and 108 can be obtained by varying the loading of the active catalytic material, for instance, catalyst 104 would have 20% palladium, catalyst 106 would have 10% palladium, and catalyst 108 would have 5% palladium. Alternatively, the palladium dispersion could be varied with catalyst 104 having the highest dispersion and catalyst 108 the lowest dispersion.

Another approach to a graded catalyst would be to use a washcoat containing both an oxidic material and a catalytic material but having a constant activity and to vary the thickness along the catalyst. In Figure IB, a constant activity catalytic washcoat is applied to the substrate (110) in a thick (of higher activity) layer at the inlet (112), thinner in the middle (114), and very thin at the outlet (116).

A third approach is to use catalytic washcoats of different activity as in Figure 1(a) but apply these washcoats in overlapping layers as in Figure 1(c) where the low activity catalytic washcoat (120) is applied over the entire substrate (118) followed by the medium activity washcoat covering a portion (122) of the substrate and finally the high activity washcoat (124) at the inlet only. An additional structure is shown in Figure 1(d) where the high activity washcoat (126) is first applied at the inlet followed by the medium (128) and low activity washcoat (130).

The high, medium, and low activity washcoats can be produced by a variety of approaches. The active component (such as palladium) can be varied from a high concentration to a low concentration. Alternatively, the dispersion of the active palladium can be varied by using different preparation procedures or by heat treating the catalyst at different temperatures. Another procedure would be to vary the surface upon which the active component is deposited. For example, a palladium/$Al_2O_3$ or palladium/$ZrO_2$ catalyst using different surface area $Al_2O_3$ or $ZrO_2$ supports would result in catalysts of different activity, the higher surface area support would have a higher activity.

These graded catalyst structures can be manufactured by several procedures. For example, the structure shown in Figure 1(d) can be prepared on a ceramic honeycomb monolith by partially dipping the monolith in washcoat and blowing the excess out of the channels. Subsequently, the process is repeated by dipping further into the washcoat sol. This same general procedure can be used to prepare the structure found in Figure 1(c). The same procedures can be applied to metal monoliths by rolling the metal foil into a spiral or folding the metal foil into the desired shape for dipping as described for the ceramic monolith.

An alternative approach would be to apply the graded catalyst layers to a suitably corrugated metal foil that is then rolled into a spiral structure to form the final catalyst unit. The washcoat can be sprayed or painted onto the metal foil surface or applied by other known obvious techniques such as by chemical vapor deposition, sputtering, etc. To achieve the desired graded structure the foil may be partially masked to restrict the catalyst to the desired region. Using this procedure structures such as seen in Figures 1(a), 1(b), 1(c), and 1(d) may be prepared by spraying or painting onto the foil. The washcoat can be applied to one side only of the metal foil or to both sides.

It should be noted that in these assembly procedures, the catalyst can be applied as a combined mixture of active catalyst (such as palladium) and the high surface area support ($Al_2O_3$, $ZrO_2$, and $SiO_2$, etc.). These would be prepared by impregnating the palladium onto the high surface area oxide powder, calcining, then converting to a colloidal sol. In a second method, the high surface area washcoat may be applied first to the monolith or metal foil and fixed in place. Then the catalyst, e.g. palladium, may be applied by the same dipping or spraying procedure. The structure shown in Figure 1(d) may be prepared by using a single washcoat oxide sol and a single catalyst (palladium) solution and repeating the process.

Figure 2 shows another series of catalysts where the catalytic coating is made using any of the methods discussed above. In Figure 2(a) the thicker (and hence, more active) catalytic layer (202) is placed upstream of the thinner catalytic layer (206). Similarly, in Figure 2(b) a shorter thick layer (208) is applied. Such a configuration might be applied (as opposed to that of Figure 2(a)) where using a higher activity catalyst or using a higher level of preheat. Figure 2(c) shows a stepped varied catalyst and Figure 2(d) shows a constant variation.

The support for this catalyst is a ferrous alloy. Metallic supports in the form of honeycombs, spiral rolls of corrugated sheet (which may be interspersed with flat separator sheets), columnar (or "handful of straws"), or other configurations having longitudinal channels or passageways permitting high space velocities with a minimal pressure drop are desireable in this service. They are malleable, can be mounted and attached to surrounding structures more readily, and offer lower flow resistance due to the thinner walls than can be readily manufactured in ceramic supports.

Another practical benefit attributable to metallic supports is the ability to survive thermal shock. Such thermal shocks occur in gas turbine operations when the turbine is started and stopped and, in particular, when the turbine must be rapidly shut down. In this latter case, the fuel is cut off or the turbine is "tripped" because the physical load on the turbine --e.g, a generator set-- has been removed. Fuel to the turbine is immediately cut off to prevent overspeeding. The temperature in the combustion chambers (where the inventive process takes place) quickly drops from the temperature of combustion to the temperature of the compressed air. This drop could span more than 1000°C in less than one second. In any event, the catalyst is deposited (or otherwise placed) on the walls within the channels or passageways of the metal support in the amounts specified above. Several types of support materials are satisfactory in this service: aluminum, aluminum containing or aluminum-treated steels, and certain stainless steels or any high temperature metal alloy, including cobalt or nickel alloys where a catalyst layer can be deposited on the metal surface.

The preferred materials are aluminum-containing steels such as those found in U.S. Patent Nos. 4,414,023 to Aggen et al., 4,331,631 to Chapman et al., and 3,969,082 to Cairns, et al. These steels, as well as others sold by Kawasaki Steel Corporation (River Lite 20-5 SR), Vereinigte Deutchse Metallwerke AG (Alumchrom I RE), and Allegheny Ludlum Steel (Alfa-IV) contain sufficient dissolved aluminum so that, when oxidized, the aluminum forms alumina whiskers or crystals on the steel's surface to provide a rough and chemically reactive surface for better adherence of the washcoat.

The steels (after alumina whiskers formation) are treated with a zirconium-containing compound or, preferably, a suspension or sol of zirconium oxide or hydrated zirconium oxide. The palladium compounds and any other catalyst precursors typically are applied to the zirconia coating although the zirconium coating may be formulated to incorporate the palladium. The washcoat of zirconium may be applied using one or more coats of zirconia sols or sols of mixed oxides containing silicon or titanium and additives such as barium, cerium, lanthanum, chromium, or a variety of other components. After application of the suspension, it may be dried and calcined to form a high surface area adherent oxide layer on the metal surface.

The washcoat may be applied in the same fashion one would apply paint to a surface, e.g., by spraying, direct application, dipping the support into the washcoat material, etc. An alternative process for adding the catalyst layer to the support structure is first to add the catalytic metals to the inert oxide powder. The catalyst metal is fixed on the oxide by heat treatment or by chemical treatment. The palladium/inert oxide mixture may then be milled to form a colloidal so. The sol is applied to the substrate by spraying, dipping, or the like.

Aluminum structures are also suitable for use in this invention and may be treated or coated in essentially the same manner. Aluminum alloys are somewhat more ductile and likely to deform or even to melt in the temperature operating envelope of the process. Consequently, they are less desireable supports but may be used if the temperature criteria can be met.

Once the washcoat, palladium, and and any adjunct catalytic metals have been applied to the metallic support and calcined, one or more coatings of a refractory oxide may then be applied as a diffusion barrier to prevent the temperature "runaway" discussed above. This barrier layer may be silica, zirconia, titania, or a variety of other oxides with a low catalytic activity for oxidation of the fuel or mixed oxides or oxides plus additives similar to those described for the washcoat layer. Alumina is not desirable as the barrier layer but may be acceptable in some circumstances. The barrier layer may range in thickness from 1% of the washcoat layer thickness to a thickness substantially thicker than the washcoat layer, preferably from 10% to 100% of the washcoat layer thickness. The preferred thickness will depend on the operating conditions of the catalyst, including the fuel type, the gas flow velocity, the preheat temperature, and the catalytic activity of the washcoat layer. It has also been found that the application of the diffusion barrier coating only to a downstream portion of the catalyst structure, e.g., 30% to 70% of the length, can provide sufficient protection for the catalyst under certain conditions. As with the washcoat, the barrier layer or layers may be applied using the same application techniques one would use in the application of paint.

The washcoat, catalyst, and diffusion or barrier coat may be applied to all surfaces of a catalyst support such as described herein, or may be applied only to a surface opposite a non-coated surface. For instance, the spiral corrugated structure noted above may be coated on one side with the washcoat, catalyst, and diffusion barrier coat. The treated corrugated structure may then be rolled into a monolith. A separator sheet of similar material may also be coated on one side with the catalytic material and rolled along with the corrugated sheet into the spiral monolith. In any event, the surface in the monolith having the catalyst placed thereon produces heat during the combustion process. This heat may pass to the gas flowing by or may be conducted through the catalyst structure to the adjacent non-catalytic --and hence, cooler-- surface. From there the heat would pass into the non-combusted gas passing along that surface. This allows control of the temperature of the catalytic surface of the catalyst structure by an integral heat exchange without resorting to such measures as air dilution or extraneous heat exchange structures. Such a control might be desireable where, for instance, the preheat temperature of the inlet gas is quite high and the gas flow rate is unstable.

This catalyst structure should be made in such a size and configuration that the average linear velocity of the gas through the longitudinal channels in the catalyst structure is greater than about 0.2 m/second throughout the catalytic structure and no more than about 40 m/second. This lower limit is greater than the flame front speed for methane and the upper limit is a practical one for the type of supports currently commercially available. These average velocities may be somewhat different for fuels other than methane.

## The Process

This process may be used with a variety of fuels and at a broad range of process conditions.

Although normally gaseous hydrocarbons, e.g., methane, ethane, and propane, are highly desireable as a source of fuel for the process, most carbonaceous fuels capable of being vaporized at the process temperatures discussed below are suitable. For instance, the fuels may be liquid or gaseous at room temperature and pressure. Examples include the low molecular weight aliphatic hydrocarbons mentioned above as well as butane, pentane, hexane, heptane, octane; gasoline; aromatic hydrocarbons such as benzene, toluene, ethylbenzene, and xylene; naphthas; diesel fuel and kerosene; jet fuels; other middle distillates; heavier fuels (preferably hydrotreated to remove nitrogenous and sulfurous compounds); oxygen-containing fuels such as alcohols including methanol, ethanol, isopropanol, butanol, or the like; and ethers such as diethlyether, ethyl phenyl ether, MTBE, etc. Low-BTU gases such as town gas or syngas may also be used as fuels.

The fuel is typically mixed into the combustion air in an amount to produce a mixture having an adiabatic combustion temperature greater than the temperature achieved by this inventive process. Preferably the adiabatic combustion temperature is above 900°C, most preferably above 1000°C. Non-gaseous fuels should be at least partially vaporized prior to their contacting the catalyst zone. The combustion air may be at atmospheric pressure or lower -25.33 kPa (-0.25 atm) or may be compressed to a pressure of 3546 kPa (35 atm) or more. Stationary gas turbines, which ultimately could use the gas produced by this process, often operate at gauge pressures in the range of 810 to 3546 kPa (eight atm to 35 atm). Consequently, this process may operate at a pressure between -25.33 and 3546 kPa (-0.25 atm and 35 atm), preferably between 0 and 1722.1 kPa (zero atm and 17 atm).

The fuel/air mixture supplied to the catalyst should be well mixed and the gas inlet temperature may be varied depending on the fuel used. This temperature may be achieved by preheating the gas through heat exchange or by adiabatic compression.

The process uses a catalytic amount of a palladium-containing material on a catalyst, preferably metal, support with low resistance to gas flow having a zirconium-containing coating. The bulk outlet temperature of the partially combusted gas leaving the zone containing the catalyst and the wall temperature of the catalyst will be at temperatures significantly lower than the adiabatic or autocombustive temperature of the gas. Generally, neither temperature will be more than about 800°C, preferably no greater than 550°C to 650°C. In addition, the catalyst temperature should not exceed 1000°C and preferably not exceed 950°C. These temperatures will depend on a variety of factors including the pressure of the system, the partial pressure of the oxygen, the calorific value of the fuel, and the like. Nevertheless the catalyst will partially oxidize the fuel but will limit the ultimate temperature to a value lower than the adiabatic combustion temperature.

## EXAMPLES

These examples show the production of catalysts within the scope of the invention and its use in the inventive process. Comparative catalysts and processes are also shown.

The catalysts are tested for two parameters: stability during steady-state operation and "light-off temperature" (LOT).

The LOT is determined by placing the catalyst in the combustion reactor and initiating a flow of fuel and air to the catalyst. Although these tests were conducted at atmospheric pressure, others are conducted at higher pressure. The temperature of the gas/air mixture is increased at a constant rate. The temperature of the gas leaving the catalyst and the temperatures at several points in the catalyst are monitored. If the catalyst is active, at some point during this temperature increase, the catalyst will begin to oxidize the fuel and an increase in both the outlet gas temperature and the intermediate catalyst will be observed. For ease of comparison, the LOT is the average temperature between the preheat temperature and the self-limiting temperature value.

The stability of the catalyst is determined by measuring the temperatures at the same points in the catalyst and gas stream as in the LOT determination but after an appropriate (and non-varying) preheat temperature for the mixture of fuel and air is chosen.

### Example 1

This example is in several parts and demonstrates the temperature limiting capabilities of the inventive palladium-based catalyst as compared to a similar platinum-based combustion catalyst.

Part A (Comparative Platinum Catalyst Preparation)

A platinum catalyst was prepared as follows: 250 g of a low alkali gamma-alumina, 422 ml distilled water, and 42 ml concentrated (70.3%) nitric acid were placed in a 2 litre (half gallon) polymer-lined ball mill. The ball mill was filled half full with alpha-alumina grinding media.

The mixture was ball milled for eight hours to produce a colloidal alumina sol containing approximately 35% by weight $Al_2O_3$.

A 15.5 cell/$cm^2$ or 100 cell/$inch^2$ (cpsi) cordierite monolith (two inch (5 cm) diameter by 5 cm (two inch) length) was dipped in this alumina sol and the excess blown from the channels of the monolith with air. This monolith was then dried at 100°C and calcined in a muffle furnace at 850°C for ten hours. The final monolith contained approximately 20% by weight alumina washcoat.

The alumina washcoated monolith was dipped in an $H_2PtCl_6$ solution containing approximately 0.14 g platinum/g solution. The excess solution was blown out with air and the monolith dried and calcined at 500°C. The platinum impregnation was repeated twice more. The final catalyst was calcined at 850°C for ten hours. The final catalyst contained 4.5% by weight platinum.

Part B (Palladium Catalyst Preparation)

A palladium catalyst was prepared. An alumina washcoated cordierite monolith was prepared and calcined as described above. A palladium solution was prepared by dissolving $PdCl_2$ in two equivalents of hydrochloric acid and diluting to 0.042 g palladium/ml. The washcoated monolith was dipped in this solution, the excess solution blown out with air, and the catalyst dried and calcined at 850°C for ten hours. The final catalyst contained approximately 0.5% palladium by weight.

Part C

In this Part each of the two catalysts from Parts A and B were installed In a combustion test reactor. The reactor had a 5 cm (two inch) inside diameter and allowed careful control of the preheat temperature of the $CH_4$/air mixture prior to contact with the catalyst. The reactor was also equipped with thermocouples to measure a variety of different gas and catalyst wall temperatures.

Platinum Catalyst

The comparative platinum catalyst made in Part A was installed in the reactor. Air at 500 Standard Liters Per Minute (SLPM) was passed over an electric heater, a static gas mixer, and through the catalyst. Natural gas containing approximately 93% methane was introduced into the air stream just upstream of the gas mixer. Gas temperatures were measured before and after the catalyst with ceramic covered thermocouples suspended in the gas stream. The catalyst substrate temperature was measured by a thermocouple positioned in one of the channels of the ceramic monolithic catalyst near the outlet of the catalyst.

Air was heated to 550°C and methane flow increased to 1.1 SLPM corresponding to a fuel/air ratio of .0022. The substrate temperature was monitored. The fuel/air ratio was increased in steps to .002 and the substrate temperature recorded for each fuel/air ratio. These data are presented in Figure 3. At a fuel/air ratio of .010, the catalyst was sufficiently active to raise the substrate temperature to 740°C. This value approximated the calculated adiabatic combustion temperature for the mixture of 760°C. As the fuel/air ratio is increased, the substrate temperature closely matched the adiabatic combustion temperature. This showed that the platinum catalyst was combusting all of the fuel at the catalyst surface.

Palladium Catalyst

The palladium catalyst prepared above was then tested in a similar manner. Again, as the fuel/air ratio was increased the substrate temperature rose and tracked the calculated adiabatic combustion temperature. However, as shown in Figure 3 (at fuel/air ratio between 0.013 and 0.020) the substrate temperature remained at 800°C.

As displayed in Figure 3, this example shows that a combustion catalyst comprising palladium limits the temperature of the catalyst composition to approximately 780°C. The temperature of the platinum catalyst, on the other hand, clearly tracks the calculated adiabatic combustion temperature.

Example 2

This example demonstrates measurement of the temperature at which palladium oxide converts to palladium metal and, therefore, the temperature limit of the catalyst substrate during methane combustion in excess air.

A sample of 21.9 mg of palladium oxide powder was loaded into a TGA apparatus and the sample chamber purged with dry air flowing at 40 ml/minute. The temperature of the sample was increased at 10°C/minute and the sample weight monitored continuously to produce the TGA curve shown in Figure 4A. At 795°C the palladium oxide decomposed into palladium and evolved oxygen resulting in a weight loss. The measured weight loss of 2.74 mg resulting sample corresponded to 12.5% of the original palladium oxide sample weight. The theoretical weight loss for the equation:

$$PdO \rightarrow Pd + O_2$$

was 13.1%. Repetition of the TGA experiment at a 5°C/minute heating rate also gave a palladium oxide to palladium transition point at 795°C.

The transition from palladium oxide to palladium in air at atmospheric pressure measured by TGA occurs at approximately the same temperature as the limiting substrate temperature (approximately equal to 780°C) determined when using palladium as the catalyst as found in Example 1 above.

The TGA experiment was repeated with a new sample of palladium oxide but with the sample chamber purged with pure oxygen. As is shown in Figure 4B, the measured palladium oxide to palladium transition temperature was 880°C. At higher oxygen partial pressure, the palladium oxide to palladium transition point would occur at even higher temperatures.

This example shows that the TGA for palladium oxide/platinum is a function of the particular oxygen partial pressure.

Example 3

This example is in two parts. Part A shows the preparation of a steel monolith using palladium but having no protective diffusion barrier layer above the catalyst layer; Part B shows the use of the monolith and its propensity for "runaway" even when used at low temperatures. Part A A 192 cm (75.5 inch) long sample of two inch wide Kawasaki River Lite 20-5SR corrugated steel and a 185 cm (73 inch) long sample of two inch wide Kawasaki River the 20-5SR flat steel strip were heat-treated in an oven in open air at 950°C for 16 hours. The heat treatment resulted in the growth of alumina whiskers on the steel surface due to the aluminum contained in the steel.

A primer coat was applied to both flat and corrugated strips on both sides by spraying with a 5% by weight pseudo-boehmite colloidal aqueous suspension to obtain a layer representing approximately 1% by weight of the metal. The metal was dried at 90°C.

A high surface area washcoat was applied by spraying with a 20% by weight colloidal suspension of gamma-alumina, drying at 90°C, and calcining in air at 850°C for five hours. The final washcoat represented 20% of the final catalyst weight.

A palladium-containing solution was prepared by dissolving $Pd(NH_3)_2(NO_2)_2$ in nitric acid. This palladium solution was applied to the washcoated foil strips by spraying to obtain a final catalyst loading of approximately 2% by weight palladium metal. The strips were dried at 90°C and calcined in air at 850°C for four hours.

The corrugated and flat strips were layered together and rolled to form a spiral monolith of approximately 5 cm (two inches) diameter and with approximately 47 channels/$cm^2$ (300 channels per square inch) of geometric area. The open area of the monolith was approximately 15.2 $cm^2$ (2.36 $inch^2$) (or approximately 77% open).

Part B

This Part shows the operation of the catalyst monolith fabricated in Part A in "normal" inlet gas temperature ranges of between 325°C and 400°C.

The catalyst structure was placed in the reactor system discussed above. Two thermocouples were installed in the downstream end of the monolith to measure monolith wall temperature. The bulk gas temperature at the outlet was also monitored.

A flow of 1500 SLPM of air and 70 SLPM of $CH_4$ were introduced into the monolith. The mixed gas was initially preheated to 300°C. The preheat temperature was slowly increased at a rate of approximately 20°C/minute.

No substantial reaction was observed until the gas preheat temperature reached 350°C to 355°C. At that point the catalyst lit-off, that is, the bulk gas temperature at the outlet increased to approximately 550°C. The temperature at one of the monolith wall thermocouples increased quickly to 1000°C and then began to oscillate quickly between approximately 700°C and 1100°C as shown in Figure 5.

This test sequence was then terminated. The catalyst was cooled.

A second test was performed at the monolith using the same test sequence. The catalyst lit-off between 325°C and 335°C. The wall temperature oscillation was again in evidence.

Consequently, even though the palladium component is considered in the art to limit the temperature increase of the catalyst, the use of palladium alone does not appear always adequate to limit the wall temperature.

Example 4

This example shows the preparation of a steel monolith support using palladium but having a barrier or diffusion barrier overcoat.

Part A

A 178 cm (70.0 inch) section of Kawasaki River Lite 20-5SR corrugated steel strip and a 178 cm (70.0 inch) section of Kawasaki River Lite 20-5SR flat steel strips were heat treated in an oven in the open air at 950°C for 16 hours to cause surface alumina whisker growth.

Using the procedure of Example 3, the two metal strips were sprayed with primer pseudo-boehmite, gamma-alumina washcoat, and palladium. The various drying and calcining steps were also done exactly as found in Example 3.

A diffusion barrier coating was then applied to the catalyst surface by spraying a 30% gamma-alumina colloidal sol, drying at 90°C, and a calcining at 850°C for five hours. The barrier coating was approximately 5% of the total catalyst weight.

The two strips were then rolled together to make a spiral monolith of approximately 5 cm (two inch) diameter.

The free open area of the monolith was 15.2 $cm^2$ (2.36 $inch^2$) (or approximately. 78% open).

Part B

This Part shows the operation of the catalytic monolith fabricated in Part A in the same temperature range and using the same temperature rate increase as that used in Example 3.

The rolled monolith was inserted into the reactor system. The air rate was 1500 SLPM and $CH_4$ was the fuel at 60.5 SLPM. The catalyst lit off at approximately 365°C. The bulk gas temperature at the catalyst outlet quickly reached 600°C and stabilized. The wall temperature did not oscillate as it had in Example 4.

This catalyst structure was then cooled and the test sequence repeated four more times. The catalyst lit off in the 335°C to 345°C range each time and the wail temperature did not oscillate in the normal preheat range between 325°C and 410°C.

Example 5

This example shows the temperature limiting effect of the inventive catalyst with a single fuel/air ratio and a constantly increasing preheat temperature. In spite of the increasing inlet temperature and the resulting outlet partially combusted gas temperature, the wall of the catalyst structure remains at approximately 800°C.

A high concentration palladium catalyst was prepared. A 50 mm diameter by 50 mm length cordierite monolith with 100 cpsi was coated with alumina washcoat as described above. The washcoated monolith was calcined at 850°C for ten hours. A $PdCl_4^{2-}$ solution was prepared by dissolving $PdCl_2$ in two equivalents of hydrochloric acid. The final solution concentration was 0.081 g palladium/ml. The washcoated monolith was dipped in this palladium solution and the excess solution blown out with air. $H_2S$ gas was then passed through the monolith structure to entirely convert the $PdCl_4^{2-}$ to PdS. The monolith was then calcined at 500°C in air. The palladium impregnation procedure was repeated and the final calcination performed at 850°C for ten hours.

This catalyst was placed in the test reactor described above. Thermocouples were installed in a single channel at a distance from the inlet of ten mm, 25 mm, and 48 mm. This channel was sealed with ceramic cement so that the thermocouples measured the substrate ceramic temperature.

Air at 1000 SLPM and natural gas at 40 SLPM were passed through the catalyst. This feed gas mixture was heated to 300°C and then increased slowly to monitor catalyst activity as shown in Figure 6. At 360°C, the catalyst lit-off and its temperature rose above the gas temperature. At approximately 390°C, the substrate temperature from ten mm to the outlet (48 mm) was constant at approximately 800°C. As the inlet gas temperature is further increased, the substrate temperature limited at approximately 800°C.

At this fuel/air ratio and 400°C, the calculated adiabatic combustion temperature was approximately 1240°C. The fact that this high activity catalyst did not cause the substrate temperature to increase to 1240°C is due to the strong temperature limiting behavior of palladium.

Example 6

This example shows the LOT and steady state operation of a palladium catalyst having a zirconia coated cordierite support.

The palladium/zirconia/cordierite catalyst was prepared by first producing a zirconium sol. A 125 gm sample of $ZrO_2$ having a specific surface area of 95 $m^2$/gm was mixed with 211 ml water and 15 ml of concentrated nitric acid in polymer lined ball mill containing $ZrO_2$ grinding media. The mixture was milled for eight hours. A cordierite monolithic honeycomb having 15.5 square cells/$cm^2$ (100 cpsi) was dipped into the sol, dried, and calcined as described above. This process was repeated until the monolith contained about 18% by weight of the $ZrO_2$ washcoat.

A palladium solution was made by dissolving $Pd(NO_2)_2(NH_3)_2$ in aqueous $HNO_3$ and diluting with water until a concentration of 0.083 g palladium/ ml was attained. The monolith was dipped into the palladium solution, excess solution blown out with air, dried, and calcined at 850°C in air. The process was repeated until the catalyst composition contained 2.2% palladium.

This catalyst composition was placed in an adiabatic combustion reactor. An air flow of 1500 SLPM and a natural gas flow of 60 SLPM is initiated through the catalyst. The mixed gas temperature ("preheat") is increased at a constant rate. At 350°C the catalyst becomes active. As is shown in Figure 7A, at 370°C of preheat the catalyst outlet becomes constant at about 800°C. Further increases in the preheat temperature do not cause the catalyst outlet temperature to increase. The palladium limits the catalyst outlet temperature to that point.

The catalyst was additionally tested for steady state operation at 1000 SLPM of air and 40 SLPM of fuel. The catalyst was operated at a constant preheat of 400°C. As is shown in Figure 7B, the catalyst was very stable and maintained a catalyst outlet temperature of about 770°C. No decline in activity was noted.

Example 7

This example is similar to Example 6 but shows instead the beneficial effect in our partial combustion catalyst of utilizing zirconia on a metal support.

A monolithic metal-foil-based partial combustion catalyst having a $ZrO_2$ coating was prepared and tested for steady-state stability using the following procedure.

A $ZrO_2$ colloidal so was first produced by hydrolyzing 66 gm of zirconium isoperoxide with water and mixing the resultant mixture with 100 gm of $ZrO_2$ powder and an additional 100 gm of water. The zirconia powder had a specific area of 100 $m^2$/gm. This slurry was ball milled in a polymer lined ball mill with cylindrical $ZrO_2$ media for eight hours. The resultant so was diluted to a concentration of 15% $ZrO_2$ with additional water.

An Fe/Cr/Al foil was corrugated in a herringbone pattern and oxidized in air at 900°C to form surface alumina whiskers. The foil was sprayed with the sol using an air atomizer, dried, and calcined in air at 850°C. The resulting foil contained 2 mg $ZrO_2/cm^2$ of foil surface.

A solution containing 0.1 gm palladium/ml was formed by dissolving palladium 2-ethylhexanoic acid in toluene. This solution was sprayed onto the coated metal foil. The foil was dried and calcined and contained about 0.5 mg palladium/$cm^2$ of surface.

The corrugated foil was rolled into a spiral structure having longitudinal passageways throughout. The final structure was about two inches in diameter and two inches in length.

The catalyst was tested for steady-state operation much in the same way that the above catalysts were tested. Thermocouples were installed within the catalyst at distances of 1, 2.5, and 4.8 cm from the entrance of the catalyst structure. Other thermocouples measured the temperature at the outlet of the catalyst and in the gas stream 15 cm after the catalyst.

An air flow of 1000 SLPM and a natural gas flow of 40 SLPM was initiated through the catalyst. The mixed gas temperature ("preheat") was increased at a constant rate. At 400°C the catalyst became active. As is shown in Figure 8A, at 440°C of preheat the catalyst outlet becomes constant at about 770°C. Further increases in the preheat temperature did not cause the catalyst outlet temperature to increase. The palladium limits the catalyst outlet temperature to that point.

The catalyst was additionally tested for steady state operation at 1000 SLPM of air and 40 SLPM of fuel. The catalyst was operated at a constant preheat of 500°C. As is shown in Figure 8B, the catalyst was very stable and maintained a catalyst outlet temperature of about 760°C to 770°C. No decline in activity was noted.

Example 8

Part A

This Part A shows the production of a palladium catalyst on a zirconia coated cordierite support using a hydrazine reduction.

A polymer lined ball mill was loaded with 125 g of $ZrO_2$ powder (having a surface area of 95 $m^2$/gm), 211 ml water, and 15 ml of concentrated nitric acid. The mill was filled with $ZrO_2$ media and the mixture milled for eight hours.

$Pd(NH_3)_2(NO_2)_2$ was dissolved in nitric acid to form a solution containing 0.083 g palladium/ml. Forty-two ml of this palladium solution was added to 50 g of the $ZrO_2$ colloidal sol, the pH adjusted to 9.0, and 1.0 g of hydrazine added. This solution was stirred until the palladium was completely reduced. This sol contained 20% palladium by weight.

A cordierite, monolithic honeycomb 50 mm in diameter and 50 mm long with 15.5 square cells/$cm^2$ (100 square cells per square inch) was dipped in the palladium/$ZrO_2$ sol, the excess sol blown out of the honeycomb channels with air, dried, and calcined at 850°C. This process was repeated until the monolith contained 12% palladium/$ZrO_2$. The final catalyst contained 2.3% palladium by weight and the washcoat had a surface area of 26 $m^2$/gm.

The catalyst was placed in a 5 cm (two inch) I.D. insulated section of a combustion reactor. Air at 1000 Standard Liters Per Minute (SLPM) was passed through a heater, a static gas mixer, and then through the catalyst. Natural gas was introduced into the air stream just upstream of the gas mixer. Gas temperatures were measured before and after the catalyst by thermocouples suspended in the gas stream. The catalyst substrate temperature was measured by use of thermocouples which had been placed in channels at positions of 25 mm and 48 mm from the inlet and sealed with ceramic cement.

Natural gas at 40 SLPM was introduced into the air stream and the air temperature increased to 400°C. The catalyst substrate temperature rose to about 750°C and stabilized. The outlet gas temperature remained at 560°C. These temperatures were very stable for the 3.5 hour duration of the test.

The LOT data and the steady state run data are shown in Figures 9A and 9B, respectively.

Part B

This comparative example shows the production of an alumina supported catalyst.

A very high purity alumina containing less than 50 ppm total impurities was ball milled as in Part A above. A $Pd(HN_3)_2(NO_2)_2$ solution was added and reduced with hydrazine (also as described in Part A) to form a palladium/$Al_2O_3$ sol containing 20% palladium by weight. A cordierite monolith was coated to produce a final catalyst containing 11% palladium/$Al_2O_3$ and 2.2% palladium by weight. The final washcoat had a surface area of 50 $m^2$/gm.

The catalyst was tested as described in Part A. The catalyst was tested both for LOT (Figure 10A) and for steady state performance (Figure 10B). The steady state performance at a preheat of 400°C (Figure 10B) shows rapid deactivation of the catalyst with the substrate temperatures dropping to 420°C at the center of the catalyst and the outlet gas temperature dropping from 560°C to 485°C in only three hours.

The catalysts tested in this Example had similar loadings and preparation procedures. The alumina supported catalyst tested in Part B had a higher surface area and might be expected to be more active. However, the palladium/$Al_2O_3$ catalyst deactivated very rapidly. This suggests that $Al_2O_3$ is a less appropriate support for palladium in catalytic combustion catalysts; $ZrO_2$ is much preferred.

Example 9

Part A

This example shows the production of a corrugated metal foil honeycomb substrate having a zirconia coating.

A $ZrO_2$ colloidal sol was prepared as follows. About 66 g of zirconium isopropoxide was hydrolyzed with 75 cc water. It was then mixed with 100 g of $ZrO_2$ powder having a surface area of 100 $m^2$/gm and an additional 56 ml water. This slurry was ball milled in a polymer lined ball mill using $ZrO_2$ cylindrical grinding media for eight hours. This colloidal sol was diluted to a concentration of 15% $ZrO_2$ by weight with additional water.

An Fe/Cr/Al metal foil was corrugated in a herringbone pattern and then oxidized at 900°C in air to form alumina whiskers on the foil surface. The $ZrO_2$ sol was sprayed onto one side of the corrugated foil. The coated foil was then dried and calcined at 850°C. The final foil contained 2.0 mg $ZrO_2/cm^2$ foil surface.

Palladium 2-ethylhexanoic acid was dissolved in toluene to a concentration of 0.1 g palladium/ml. This solution was sprayed onto the $ZrO_2$ coated metal foil and the foil dried and calcined at 850°C in air. The final foil contained about 0.5 mg palladium/$cm^2$ of foil surface.

The corrugated foil was rolled so that the corrugations did not mesh to form a final metal structure of 5 cm (two inch) diameter and two inch length with longitudinal channels running axially through the structure.

The catalyst was placed in the combustion reactor described in Example 8 and tested for LOT and steady state operation. The air flow rate was 1000 SLPM, the methane rate was 40 SLPM, and the steady state preheat temperature was 450°C. The performace of this catalyst is shown in Figure 11A and 11B.

Part B

This catalyst was prepared to be similar to Part A of this Example but using $Al_2O_3$ as the support.

An $Al_2O_3$ sol was prepared. A polymer lined ball mill was loaded with 250 g of gamma alumina, 422 ml water, and 21 ml of concentrated nitric acid. Cylindrical zirconia media was added and the mixture milled for eight hours.

This alumina sol was diluted to about 15% solids with water, sprayed onto a corrugated metal foil, and calcined at 850°C for ten hours. The final $Al_2O_3$ loading was 2.2 mg/$cm^2$.

A palladium 2-ethylhexanoic acid solution was sprayed onto the $ZrO_2$ coated metal foil and the foil dried and calcined at 850°C in air. The final foil contained about 0.5 mg palladium/$cm^2$ of foil surface.

The catalyst was placed in the reactor described above and tested. The air flow rate was 1000 SLPM, the natural gas flow rate was 40 SLPM, and the steady state preheat temperature was 450°C. The performance of this catalyst is shown in Figures 12A and 12B. The palladium/$ZrO_2$ shows substantially improved stability over the catalyst containing alumina.

Example 10

This Example shows the production and use of a series of the inventive catalysts containing varying amounts of platinum but a set amount of palladium on a cordierite support. The catalysts were tested for two parameters: "light off temperature" (LOT) and stability during steady-state operation.

A monolithic honeycomb structure composed of cordierite ceramic with 100 square cells per $in^2$ was coated with a $Al_2O_3$ colloidal sol (Catapal B) and the monolith calcined in air at 800°C. The resulting monolith contained 23.7% $Al_2O_3$. The monolith was dipped in a solution of $Pd(NO_2)_2(NH_3)_2$ repeatedly, dried, and calcined in air at 850°C for ten hours. The catalyst contained 1.0 % palladium based on the alumina washcoat.

Four 20 mm diameter cylinders (25 mm in length) were cut from the monolith structure prepared above. Three of these sections were then treated with varying amounts of a $Pt(NO_2)_2(NH_3)_2$ solution using drip impregnation. Each was dried and calcined in air at 850°C for one or ten hours. The resulting catalysts contained 0.15%. 0.30%, and 1.2% platinum based on the alumina washcoat.

The catalysts were each placed in a combustion reactor. Three thermocouples were placed in a single channel spaced along the catalyst at distances of one, 2.5, and 4.8 cm from the inlet. This channel was filled with ceramic cement so that the thermocouples measured the substrate temperature (wall) and not the gas temperature.

Air at 1500 standard liters/minute (SLPM) was passed through an electric heater, mixed with methane, and passed over the catalyst.

All four catalysts were then tested using the LOT and steady-state activity procedures outlined above. Graphs of the data retrieved are shown:

| Catalyst Composition | LOT Fig. | Steady State Fig. |
|---|---|---|
| 1% Pd | 13A | 14A |
| 1% Pd, 0.15% Pt | 13B | 14B |
| 1% Pd, 0.30% Pt | 13C | 14C |
| 1% Pd, 1.20% Pt | 13D | 14D |

It may be observed by comparing Figures 13A with Figures 13B, 13C, and 13D that the LOT in each case remained at about 350-360°C irregardless of the increasing amounts of platinum. The self-limiting temperature for the platinum containing catalysts were surprisingly lower than that for the platinum-free catalyst and in no event did the temperatures reach the adiabatic combustion temperature. The theoretical adiabatic combustion temperature for this gas mixture is about 1160°C. The temperature of the gas leaving the catalyst was constant for each of the platinum containing catalysts showing overall stability even though some deactivation was observed in the early regions of the catalysts containing the lower amounts of platinum (Figures 13B and 13C).

Example 11

This Example shows the beneficial effect of adding platinum metal to a catalyst of palladium on a metal support.

Two catalysts were prepared. The first catalyst was a "control" in which palladium alone was used as the catalyst. The second catalyst was one using both platinum and palladium.

Pd-only metal supported catalyst

One side of an aluminum-containing steel foil (CAMET), after oxidation to form an alumina microcoating, was spray-coated on one side with two coats of an alumina sol (Catapal-B), dried, and calcined at 850°C. The foil was sprayed with a solution of $Pd(NH_3)_2(NO_2)_2$, dried, and calcined at 850°C for 10 hours. The resulting foil was the rolled into a monolith having about 23 cells/$cm^2$ (150 cells per square inch) (CPSI). The coating contained about 1.3 mg-Pd/$cm^2$ based on the alumina washcoat.

Pd/Pt supported catalyst

One side of an aluminum-containing steel foil (CAMET), after oxidation to form an alumina microcoating, was spray-coated on one side with two coats of an alumina sol (Catapal-B), dried, and calcined at 850°C. The foil was sprayed with a solution of $Pd(NH_3)_2(NO_2)_2$, dried, sprayed with a solution of $Pt(NH_3)_2(NO_2)_2$, and dried. The dried foil was calcined at 850°C for ten hours. The resulting foil was the rolled into a monolith having about 23 cells/$cm^2$ (150 cells per square inch) (CPSI). The coating contained about 1.3 mg-Pd/$cm^2$ and about 0.13 mg-Pt/$cm^2$ based on the alumina washcoat. The Pd-Pt molar ratio was about 15.

Each of the catalysts was tested using the steady-state test outlined above. The air rate was 1000 SLPM and the fuel/air ratio was either of 0.019 or 0.040. The preheat level in each instance was 500°C. The temperature of the gas leaving the catalyst and the preheat temperature were measured in each case.

By comparing Figure 15A with Figure 15B, both runs using a fuel/air ratio of 0.019, the post catalyst temperature of the palladium catalyst decreased to a level of 590°C and at the conclusion of the three hour test was still declining. The inventive palladium/platinum catalyst demonstrated in Figure 15B, in comparison, increased to that level and when the test was terminated at 1.7 hours, was generally level.

The runs shown in Figures 16A and 16B show, at a fuel/air ratio of 0.040, that the platinum-stabilized palladium catalyst is significantly more stable. In the Figure 16B run, the catalyst is still operating at a stable level of about 650°C. In contrast, the stability of the unstablilized catalyst in the Figure 16A run has caused the outlet temperature to degrade to 600°C at about three hours.

This Example demonstrates the difference between the catalyst based on palladium alone and based both on palladium and platinum. The metal support in this example was coated with alumina.

Example 12

This example shows the preparation of palladium/$ZrO_2$-cordierite catalyst with graded palladium concentration and a comparative non-graded catalyst.

Part A

A 125 g amount of $ZrO_2$ having a surface area of 45 $m^2$/gm was impregnated with 45 ml of a solution containing 0.0834 g palladium/ml. This solution was prepared by dissolving $Pd(HN_3)_2(NO_2)_2$ in nitric acid. The palladium/$ZrO_2$ mixture was dried and calcined at 500°C.

A polymer lined ball mill was loaded with 125 g of the palladium/$ZrO_2$ mixture, 230 ml of water, 2.0 ml 70% $HNO_3$ (nitric acid), and $ZrO_2$ media.

A sample of 50 ml of the resulting sol was mixed with an additional 36 ml of 0.0834 g palladium/ml solution, the pH adjusted to 9.0 with $NH_4OH$, and 0.64 g hydrazine added with stirring. The palladium was reduced over a period of several-hours. This sol (after full calcination) produced a washcoat containing 13.6% palladium on $ZrO_2$.

A cordierite monolith with 15.5 cells/$cm^2$ (100 cells/$in^2$) (2 inches (5 cm) in diameter by 2 inches (5 cm) long) was dipped into the above palladium/$ZrO_2$ sol, the excess sol was blown from the channels with a stream of air, and the monolith was dried and calcined at 850°C. The resulting single coat had 7.69% palladium/$ZrO_2$ loading and 1.03% palladium loading on the monolith.

This catalyst was again dipped in the palladium/$ZrO_2$ sol but only to a depth of 12 mm, the excess sol was blown from the channels, and the monolith was dried and calcined. The palladium concentration on this monolith was 4.2% palladium on the 12 mm inlet section and 1.0% palladium on the 39 mm outlet portion. The average palladium concentration was 1.8% palladium.

Part A

This example shows a non-graded palladium/$ZrO_2$-cordierite catalyst for comparison.

Another cordierite monolithic structure was dipped and blown out using a process similar to that shown in Part A. The final catalyst was calcined at 850°C. The final catalyst had a relatively uniform palladium concentration of 1.9% from inlet to outlet.

Example 13

This example compares the relative activities of the two catalysts of Example 12. The two catalysts were subjected to a test in which the methane and air were preheated. The preheat temperature was constantly increased beginning at 325°C and outlet temperatures for the partially combusted gas and a variety of internal temperatures were measured and recorded.

The catalysts were separately loaded into an adiabatic reactor. Air was introduced at a rate of 800 standard liters per minute (SLPM) and methane was introduced at 36 SLPM.

Part A

As may be seen in Figure 17, at 350°C preheat the Example 12, Part A graded catalyst lit-off and became active. The monolith wall temperature rose to 780°C and the outlet gas temperature stabilized at about 550°C. As the preheat was continually increased, the catalyst outlet was visually uniform in temperature and appeared to be a dull red color. At a preheat temperature of 448°C, a bright white spot appeared as a portion of the catalyst increased in temperature to above 800°C. The white region began to grow in size and the fuel was cut off to prevent destruction of the catalyst.

This graded catalyst had an operating window between 350°C and 448°C or a 98°C span.

Part B

The comparison catalyst from Example 12 Part B was tested in a similar fashion. As may be seen in Figure 18, this catalyst lit-off at approximately 350°C and exhibited a hot spot (>800°C) at a preheat temperature of about 390°C. This catalyst had a window between 350°C and 360°C or only a span of about 40°C.

The graded catalyst had a much larger operating window even though both catalysts had the same palladium loading.

The invention has been disclosed both by description and by the use of examples. The examples are only examples and must not be used to limit the invention in any way.

## Claims

1. A partial combustion process comprising the steps of:

    (a) mixing an amount of an oxygen-containing gas with a combustible fuel to produce a combustible gas mixture; and,

    (b) passing the combustible gas mixture into a combustion zone containing a catalyst configuration comprising palladium catalyst on at least a portion of a catalyst support comprising a ferrous alloy coated with a washcoat comprising zirconia and having passageways for the passage and partial combustion of the combustible gas mixture to produce a partially combusted exhaust gas having a bulk temperature less than the adiabatic combustion temperature of the combustible gas mixture and a catalyst temperature no higher than the TGA transition temperature for the palladium catalyst.

2. The process of Claim 1, where the palladium catalyst additionally comprises silver.

3. The process of Claim 1, where the palladium catalyst is at least partially covered by a diffusion layer or another catalytically inactive oxide.

4. The process of Claim 3, where the diffusion barrier comprises zirconia.

5. The process of Claim 3, where the diffusion layer is a washcoat.

6. The process of Claim 1, where the combustible gas comprises methane and the combustible gas mixture is passed into the partial combustion zone at a temperature of at least approximately 325°C.

7. The process of Claim 1, where the partial combustion zone has a gauge pressure between -25 kPa and 3.5 MPa.

8. The process of Claim 1, where the catalyst support has longitudinal passageways in the form of a honeycomb, tubes, or rolled corrugation.

9. The process of Claim 8, where only a portion of the longitudinal passageway surfaces contain palladium.

10. The process of Claim 1, where the portion of the longitudinal passageways surfaces containing palladium are adjacent to passageway surfaces not containing palladium and those surfaces are in integral heat exchange relationship to each other.

11. The process of Claim 1, where the passageways have a leading zone containing a relatively higher activity palladium-containing catalyst and a trailing zone containing a relatively lower activity palladium-containing catalyst.

12. The process of Claim 11, where the leading zone comprises palladium at a relatively higher concentration than the palladium concentration in the trailing zone.

13. The process of Claim 11, where the leading zone comprises palladium in a relatively thicker layer than in the following zone.

14. The process of Claim 11, where the trailing zone additionally comprises a diffusion barrier on the palladium-containing catalyst.

15. A partial combustion process comprising the steps of:

(a) mixing an amount of air and methane to produce a combustible gas mixture having an adiabatic combustion temperature substantially above 900°C; and,
(b) passing the combustible gas mixture into a combustion zone containing a catalyst support of a spiral of corrugated ferrous alloy sheet coated with a washcoat comprising zirconia and having longitudinal passageways for the passage and partial combustion of the combustible gas mixture and having a catalyst comprising palladium catalyst in at least a portion of the passageways in said support, to produce a partially combusted exhaust gas having a bulk temperature less than the adiabatic combustion temperature of the combustible gas mixture and a catalyst temperature less than the TGA temperature of the palladium catalyst.

16. The process of Claim 15, where the catalyst comprising palladium is at least partially covered by a diffusion barrier comprising a catalytically inactive oxide.

17. The process of Claim 15, where the palladium catalyst additionally comprises silver.

18. The process of Claim 15, where the combustible gas mixture is preheated to a temperature of more than approximately 325°C prior to passage into the combustion zone.

19. The process of Claim 15, where only a portion of the surfaces of the longitudinal passageways comprise palladium.

20. The process of Claim 15, where only a portion of the longitudinal passageways comprise palladium.

21. The process of Claim 19, where the portion of the surfaces of the longitudinal passageway surfaces containing palladium are adjacent to passageway surfaces not containing palladium and those surfaces are in integral heat exchange relationship to each other.

22. The process of Claim 15, where the passageways have a leading zone containing a relatively higher activity palladium-containing catalyst and a trailing zone containing a relatively lower activity palladium-containing catalyst.

23. The process of Claim 22, where the leading zone comprises palladium at a relatively higher concentration than the palladium concentration in the trailing zone.

24. The process of Claim 22, where the leading zone comprises palladium in a relatively thicker layer than in the following zone.

25. A catalyst structure comprised of:

(a) a metallic catalyst support comprising a ferrous alloy having passageways adapted for the passage of combustible gas and having surfaces in those passageways for the placement of a catalyst material;
(b) a catalyst material comprising palladium on zirconia on at least a portion of the metallic support passageways; and,
(c) a diffusion layer comprising a refractory oxide which is catalytically inactive in the combustion of the combustible gas, upon the palladium catalytic material.

26. The structure of Claim 25, where the metallic catalyst support comprises a ferrous alloy.

27. The structure of Claim 25, additionally comprising a covering on at least a portion of the passageways of a member selected from the group of alumina, zirconia, silica, titania, refractory metal oxides, non-catalytic oxides, or mixtures thereof.

**28.** The structure of Claim 27, where the covering comprises zirconia.

**29.** The structure of Claim 28, where the diffusion barrier comprises zirconia.

**30.** The structure of Claim 25, where the catalyst material additionally comprises one or more adjunct catalyst metals selected from silver, gold, platinum, ruthenium, rhodium, iridium, or osmium.

**31.** The structure of Claim 30, where the adjunct catalyst is silver.

**32.** The structure of Claim 26, where the metallic catalyst support comprises a corrugated steel sheet having opposite surfaces rolled into a monolith.

**33.** The structure of Claim 32, where the metallic catalyst support additionally comprises a steel separator sheet adjacent the corrugated steel sheet all rolled into a monolith.

**34.** The structure of Claim 32, where catalyst material is placed on alternating surfaces on the corrugated steel sheet.

**35.** The structure of Claim 25, where the passageways have a leading zone containing a relatively higher activity palladium-containing catalyst and a trailing zone containing a relatively lower activity palladium-containing catalyst.

**36.** The structure of Claim 35, where the leading zone comprises palladium at a relatively higher concentration than the palladium concentration in the trailing zone.

**37.** The structure of Claim 35, where the leading zone comprises palladium in a relatively thicker layer than in the following zone.

**Patentansprüche**

**1.** Teilverbrennungsverfahren, umfassend die Schritte:

(a) mischen einer Menge eines sauerstoffhaltigen Gases mit einem brennbaren Treibstoff zur Erzeugung eines brennbaren Gasgemisches; und

(b) Einleiten des brennbaren Gasgemisches in eine Verbrennungszone, die eine Katalysatorkonfiguration enthält, umfassend einen Palladiumkatalysator auf mindestens einem Abschnitt eines Katalysatorträgers, der eine mit einem Zirkoniumdioxid umfassenden Washcoat beschichtete Eisenlegierung umfaßt und Durchgänge für den Durchtritt und die Teilverbrennung des brennbaren Gasgemisches besitzt, so daß ein teilverbranntes Abgas mit einer Temperatur im Hauptteil unter der adiabatischen Verbrennungstemperatur des brennbaren Gasgemisches erzeugt wird und mit einer Katalysatortemperatur, die nicht über der TGA-Übergangstemperatur des Palladiumkatalysators liegt.

**2.** Verfahren nach Anspruch 1, wobei der Palladium-Katalysator außerdem Silber umfaßt.

**3.** Verfahren nach Anspruch 1, wobei der Palladium-Katalysator mindestens teilweise mit einer Diffusionsschicht oder einem anderen katalytisch inaktiven Oxid überzogen ist.

**4.** Verfahren nach Anspruch 3, wobei die Diffusionsschranke Zirkoniumdioxid umfaßt.

**5.** Verfahren nach Anspruch 3, wobei die Diffusionsschicht ein Washcoat ist.

**6.** Verfahren nach Anspruch 1, wobei das brennbare Gas Methan umfaßt, und das brennbare Gasgemisch bei einer Temperatur von mindestens etwa 325°C in die Teilverbrennungszone geleitet wird.

**7.** Verfahren nach Anspruch 1, wobei die Teilverbrennungszone einen Manometerdruck zwischen -25 kPa und 3,5 MPa aufweist.

**8.** Verfahren nach Anspruch 1, wobei der Katalysatorträger längsgerichtete Durchgänge in Form von Waben, Röhren oder gerollten Rippen besitzt.

**9.** Verfahren nach Anspruch 8, wobei nur ein Teil der längsgerichteten Durchgangsoberflächen Palladium enthält.

**10.** Verfahren nach Anspruch 1, wobei der Teil der palladiumhaltigen langsgerichteten Durchgangsoberflächen neben den Durchgangsoberflächen liegt, die kein Palladium enthalten, und diese Flächen zueinander in einer integralen Wärmeaustausch-Beziehung stehen.

**11.** Verfahren nach Anspruch 1, wobei die Durchgänge eine Vorlaufzone aufweisen, die einen palladiumhaltigen Katalysator mit vergleichsweise höherer Aktivität enthält, und eine Nachlaufzone, die einen palladiumhaltigen Katalysator mit vergleichsweise geringerer Aktivität enthält.

**12.** Verfahren nach Anspruch 11, wobei die Vorlaufzone Palladium in einer vergleichsweisen höheren Konzentration umfaßt als die Palladiumkonzentration in der Nachlaufzone.

**13.** Verfahren nach Anspruch 11, wobei die Vorlaufzone Palladium in einer vergleichsweise dickeren Schicht als die folgende Zone umfaßt.

**14.** Verfahren nach Anspruch 11, wobei die Nachlaufzone zusätzlich eine Diffusionsschranke auf dem palladiumhaltigen Katalysator umfaßt.

**15.** Teilverbrennungsverfahren, umfassend die Schritte:

(a) Mischen einer Menge Luft und Methan uni ein brennbares Gasgemisch, dessen adiabatische Verbrennungstemperatur im Wesentlichen über 900°C liegt herzustellen; und
(b) Einleiten des brennbaren Gasgemisches in eine Verbrennungszone, die einen Katalysatorträger enthält, der aus einer Spirale aus geripptem Eisenlegierungsblech, das mit einem Zirkoniumdioxid umfassenden Washcoat beschichtet ist, besteht und längsgerichtete Durchgänge für den Durchtritt und die Teilverbrennung des brennbaren Gasgemisches besitzt und einen Katalysator, umfassend einen Palladiumkatalysator, in zumindest einem Teil der Durchgänge in diesem Träger aufweist, so daß ein teilverbranntes Abgas mit einer Temperatur im Hauptteil unter der adiabatischen Verbrennungstemperatur des brennbaren Gasgemisches erzeugt wird und mit einer Katalysatortemperatur, die nicht über der TGA-Übergangstemperatur des Palladiumkatalysators liegt.

**16.** Verfahren nach Anspruch 15, wobei der palladiumhaltige Katalysator mindestens teilweise mit einer Diffusionsschranke überzogen ist, die ein katalytisch inaktives Oxid umfaßt.

**17.** Verfahren nach Anspruch 15, wobei der Palladiumkatalysator außerdem Silber umfaßt.

**18.** Verfahren nach Anspruch 15, wobei das brennbare Gasgemisch vor dem Eintritt in die Verbrennungszone auf eine Temperatur über etwa 325°C vorgewärmt wird.

**19.** Verfahren nach Anspruch 15, wobei nur ein Teil der Oberflächen der längsgerichteten Durchgänge Palladium umfaßt.

**20.** Verfahren nach Anspruch 15, wobei nur ein Teil der längsgerichteten Durchgänge Palladium umfaßt.

**21.** Verfahren nach Anspruch 19, wobei der Teil der Oberflächen der palladiumhaltigen längsgerichteten Durchgangsoberflächen neben den Durchgangsoberflächen liegt, die kein Palladium enthalten, und diese Oberflächen zueinander in einer integralen Wärmeaustausch-Beziehung stehen

**22.** Verfahren nach Anspruch 15, wobei die Durchgänge eine Vorlaufzone aufweisen, die einen palladiumhaltigen Katalysator mit vergleichsweise höherer Aktivität enthält, und eine Nachlaufzone, die einen palladiumhaltigen Katalysator mit vergleichsweise geringerer Aktivität enthält.

**23.** Verfahren nach Anspruch 22, wobei die Vorlaufzone Palladium in einer vergleichsweise höheren Konzentration umfaß als die Palladiumkonzentration in der Nachlaufzone.

24. Verfahren nach Anspruch 22, wobei die Vorlaufzone Palladium in einer vergleichsweise dickeren Schicht als die folgende Zone umfaßt.

25. Katalysatorstruktur, unfassend:

(a) einen metallischen Katalysatorträger, der eine Eisenlegierung umfaßt und Durchgänge besitzt, die für den Durchtritt eines brennbaren Gases ausgelegt sind, und der in den Durchgängen Oberflächen zum Aufbringen eines Katalysatormaterials aufweist;
(b) ein Katalysatormaterial, umfassend Palladium auf Zirkoniumdioxid auf mindestens einem Teil der Durchgänge des metallischen Trägers; und
(c) eine Diffusionsschicht, umfassend ein feuerbeständiges Oxid, das bei der Verbrennung des brennbaren Gases auf dem katalytischen Palladiummaterial katalytisch inaktiv ist.

26. Struktur nach Anspruch 25, wobei der metallische Katalysatorträger eine Eisenlegierung umfaßt.

27. Struktur nach Anspruch 25, die auf mindestens einem Teil der Durchgänge zusätzlich einen Überzug aus einer Substanz umfaßt, die aus Aluminiumoxid, Zirkoniumdioxid, Siliciumdioxid, Titandioxid, feuerbeständigen Metalloxiden, nicht-katalytischen Oxiden oder Gemischen davon ausgewählt ist.

28. Struktur nach Anspruch 27, wobei der Überzug Zirkoniumdioxid umfaßt.

29. Struktur nach Anspruch 28, wobei die Diffusionsschranke Zirkoniumdioxid umfaßt.

30. Struktur nach Anspruch 25, wobei das Katalysatormaterial zusätzlich ein oder mehrere Zusatzkatalysatormetalle umfaßt, ausgewählt aus Silber, Gold, Platin, Ruthenium, Rhodium, Iridium oder Osmium.

31. Struktur nach Anspruch 30, wobei der Zusatzkatalysator Silber ist.

32. Struktur nach Anspruch 26, wobei der metallische Katalysatorträger ein gewelltes Stahlblech umfaßt, dessen gegenüberliegende Oberflächen zu einem Körper gerollt sind.

33. Struktur nach Anspruch 32, wobei der metallische Katalysatorträger neben dem gewellten Stahlblech zusätzlich ein Stahltrennblech umfaßt, die beide zu einem Körper gerollt sind.

34. Struktur nach Anspruch 32, wobei das Katalysatormaterial auf alternierenden Oberflächen des gewellten Stahlblechs aufgebracht ist.

35. Struktur nach Anspruch 25, wobei die Durchgänge eine Vorlaufzone aufweisen, die einen palladiumhaltigen Katalysator mit vergleichsweise höherer Aktivität enthält, und eine Nachlaufzone, die einen palladiumhaltigen Katalysator mit vergleichsweise geringerer Akivität enthält.

36. Struktur nach Anspruch 35, wobei die Vorlaufzone Palladium in einer vergleichsweise höheren Konzentration umfaßt als die Palladiumkonzentration in der Nachlaufzone.

37. Struktur nach Anspruch 35, wobei die Vorlaufzone Palladium in einer vergleichsweise dickeren Schicht als die folgende Zone umfaßt.

## Revendications

1. Procédé de combustion partielle, comprenant les étapes consistant :

(a) à mélanger une quantité d'un gaz contenant de l'oxygène avec un combustible pour produire un mélange de gaz combustible ; et
b) à faire passer le mélange de gaz combustible dans une zone de combustion contenant une configuration catalytique comprenant un catalyseur au palladium au moins sur une partie d'un support de catalyseur comprenant un alliage ferreux revêtu d'une couche à activité catalytique (dite de type) "washcoat" comprenant de l'oxyde de zirconium et ayant des passages pour le trajet et la combustion partielle du mélange de gaz combustible, pour produire un gaz d'échappement partiellement brûlé ayant une température globale inférieure à la température de combustion adiabatique du mélange de gaz combustible et une température de catalyseur non supérieure à la température de transition mesurée par analyse thermogravimétrique (TGA) pour le catalyseur au palladium.

**2.** Procédé selon la revendication 1, dans lequel le catalyseur au palladium comprend en plus de l'argent.

**3.** Procédé selon la revendication 1, dans lequel le catalyseur au palladium est au moins partiellement recouvert par une couche de diffusion ou un autre oxyde catalytiquement inactif.

**4.** Procédé selon la revendication 3, dans lequel la barrière de diffusion comprend de l'oxyde de zirconium.

**5.** Procédé selon la revendication 3, dans lequel la couche de diffusion est une couche de type ⟨⟨washcoat⟩⟩.

**6.** Procédé selon la revendication 1, dans lequel le gaz combustible comprend du méthane et le mélange de gaz combustible est envoyé dans la zone de combustion partielle à une température d'au moins environ 325 °C.

**7.** Procédé selon la revendication 1, dans lequel la zone de combustion partielle a une pression manométrique entre -25 kPa et 3,5 MPa.

**8.** Procédé selon la revendication 1, dans lequel le support de catalyseur a des passages longitudinaux sous la forme de nids d'abeilles, de tubes ou d'une ondulation enroulée.

**9.** Procédé selon la revendication 8, dans lequel seule une partie des surfaces des passages longitudinaux contient du palladium.

**10.** Procédé selon la revendication 1, dans lequel la partie des surfaces des passages longitudinaux contenant du palladium est adjacente aux surfaces des passages ne contenant pas de palladium, et ces surfaces sont en relation d'échange de chaleur intégral entre elles.

**11.** Procédé selon la revendication 1, dans lequel les passages ont une zone avant contenant un catalyseur au palladium à activité relativement plus élevée et une zone arrière contenant un catalyseur au palladium à activité relativement plus faible.

**12.** Procédé selon la revendication 11, dans lequel la zone avant comprend du palladium à une concentration relativement plus élevée que la concentration de palladium dans la zone arrière.

**13.** Procédé selon la revendication 11, dans lequel la zone avant comprend du palladium en une couche relativement plus épaisse que dans la zone suivante.

**14.** Procédé selon la revendication 11, dans lequel la zone arrière comprend en plus une barrière de diffusion sur le catalyseur au palladium.

**15.** Procédé de combustion partielle, comprenant les étapes consistant :

(a) à mélanger une quantité d'air et de méthane pour produire un mélange de gaz combustible ayant une température de combustion adiabatique très supérieure à 900 °C ; et
(b) à faire passer le mélange de gaz combustible dans une zone de combustion contenant un support de catalyseur qui est une feuille ondulée en alliage ferreux, revêtue avec une couche de type ⟨⟨washcoat⟩⟩comprenant de l'oxyde de zirconium et ayant des passages longitudinaux pour le passage et la combustion partielle du mélange de gaz combustible, et ayant un catalyseur comprenant un catalyseur au palladium au moins dans une partie des passages dans ledit support, pour produire un gaz d'échappement partiellement brûlé ayant une température globale inférieure à la température de combustion adiabatique du mélange de gaz combustible et une température de catalyseur inférieure à la température mesurée par TGA du catalyseur au palladium.

**16.** Procédé selon la revendication 15, dans lequel le catalyseur comprenant du palladium est au moins partiellement recouvert par une couche de diffusion comprenant un oxyde catalytiquement inactif.

**17.** Procédé selon la revendication 15, dans lequel le catalyseur au palladium comprend en plus de l'argent.

**18.** Procédé selon la revendication 15, dans lequel le mélange de gaz combustible est préchauffé à une température de plus environ 325 °C avant de passer dans la zone de combustion.

**19.** Procédé selon la revendication 15, dans lequel une partie des surfaces des passages longitudinaux comprend du palladium.

**20.** Procédé selon la revendication 15, dans lequel seule une partie des passages longitudinaux comprend du palladium.

**21.** Procédé selon la revendication 19, dans lequel la partie des surfaces des passages longitudinaux contenant du palladium est adjacente aux surfaces des passages ne contenant pas de palladium, et ces surfaces sont en relation d'échange de chaleur intégral entre elles.

**22.** Procédé selon la revendication 15, dans lequel les passages ont une zone avant contenant un catalyseur au palladium à activité relativement plus élevée et une zone arrière contenant un catalyseur au palladium à activité relativement plus faible.

**23.** Procédé selon la revendication 22, dans lequel la zone avant comprend du palladium à une concentration relativement plus élevée que la concentration du palladium dans la zone arrière.

**24.** Procédé selon la revendication 22, dans lequel la zone avant comprend du palladium en une couche relativement plus épaisse que dans la zone suivante.

**25.** Structure catalytique, constituée par :

(a) un support de catalyseur métallique, comprenant un alliage ferreux ayant des passages adaptés pour laisser passer un gaz combustible, et ayant des surfaces dans ces passages pour disposer une matière catalytique ;
(b) une matière catalytique comprenant du palladium sur de l'oxyde de zircone, disposée sur au moins sur une partie des passages du support métallique ; et
(c) une couche de diffusion comprenant un oxyde réfractaire qui est catalytiquement inactif lors de la combustion du gaz combustible, disposée au-dessus la matière catalytique au palladium.

**26.** Structure selon la revendication 25, dans laquelle le support de catalyseur métallique comprend un alliage ferreux.

**27.** Structure selon la revendication 25, comprenant en plus un revêtement sur au moins une partie des passages, en un élément choisi dans le groupe constitué par l'alumine, l'oxyde de zirconium, la silice, l'oxyde de titane, les oxydes métalliques réfractaires, les oxydes non catalytiques, ou les mélanges de ceux-ci.

**28.** Structure selon la revendication 27, dans laquelle le revêtement comprend de l'oxyde de zirconium.

**29.** Structure selon la revendication 28, dans laquelle la barrière de diffusion comprend de l'oxyde de zirconium.

**30.** Structure selon la revendication 25, dans laquelle la matière catalytique comprend en plus un ou plusieurs métaux catalytiques supplémentaires choisis parmi l'argent, l'or, le platine, le ruthénium, le rhodium, l'iridium ou l'osmium.

**31.** Structure selon la revendication 30, dans laquelle le catalyseur supplémentaire est l'argent.

**32.** Structure selon la revendication 26, dans laquelle le support de catalyseur métallique comprend une feuille d'acier ondulée dont les surfaces opposées sont enroulées en un monolithe.

**33.** Structure selon la revendication 32, dans laquelle le support de catalyseur métallique comprend en plus une feuille séparatrice en acier adjacente à la feuille d'acier ondulée le tout enroulé en un monolithe.

**34.** Structure selon la revendication 32, dans laquelle la matière catalytique est placée sur des surfaces alternées sur la feuille d'acier ondulée.

**35.** Structure selon la revendication 25, dans laquelle les passages ont une zone avant contenant un catalyseur au palladium à activité relativement plus élevée et une zone arrière contenant un catalyseur au palladium à activité relativement plus faible.

36. Procédé selon la revendication 35, dans lequel la zone avant comprend du palladium à une concentration relativement plus élevée que la concentration de palladium dans la zone arrière.

37. Procédé selon la revendication 35, dans laquelle la zone avant comprend du palladium en une couche relativement plus épaisse que dans la zone suivante.

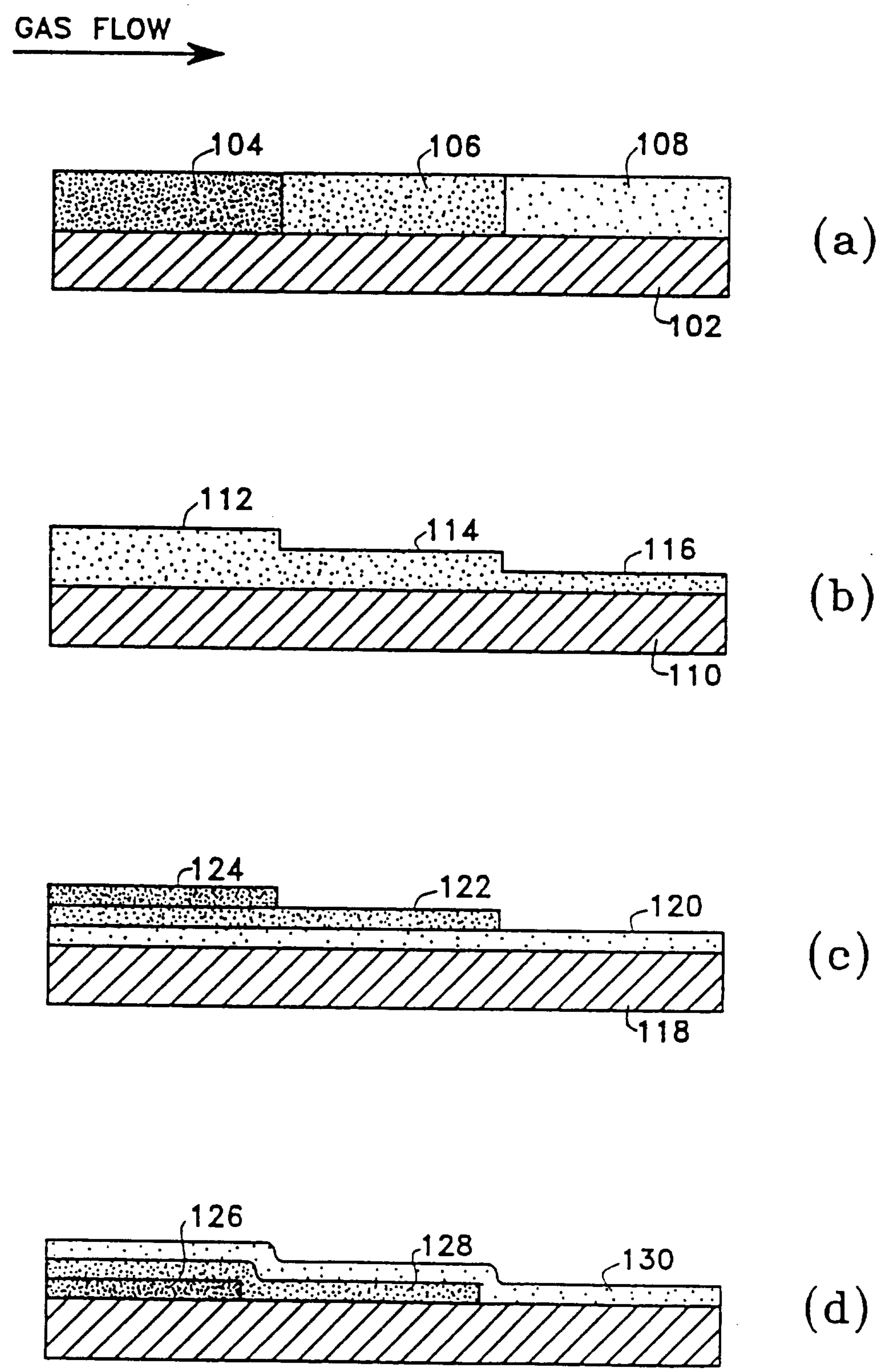
GAS FLOW
104
106
108
(a)
102
112
114
116
(b)
110
124
122
120
(c)
118
126
128
130
(d)

Fig. 1

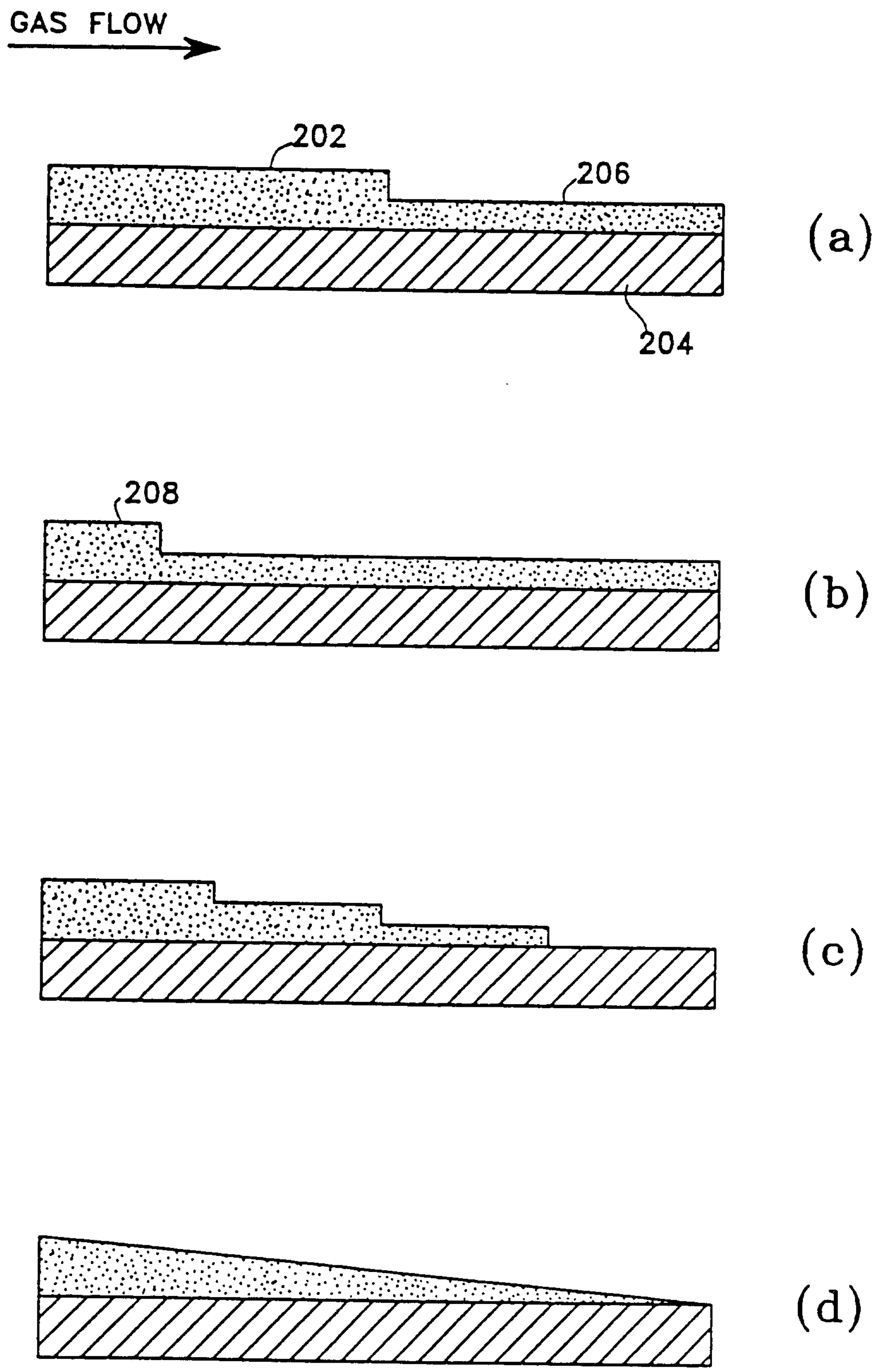


Fig. 2

Fig. 3

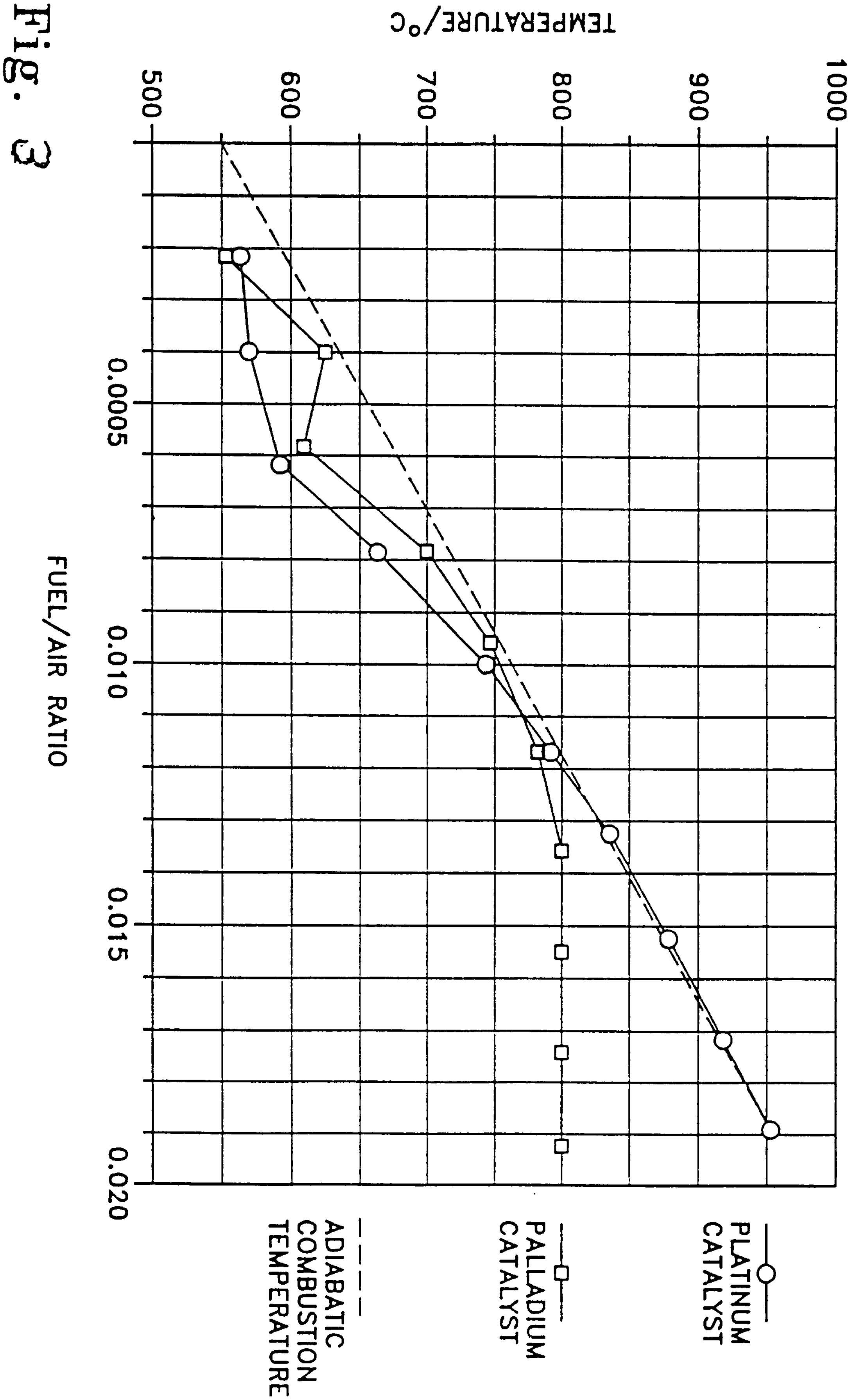
TEMPERATURE/°C
500
600
700
800
900
1000
FUEL/AIR RATIO
0.0005
0.010
0.015
0.020
PLATINUM CATALYST
PALLADIUM CATALYST
ADIABATIC COMBUSTION TEMPERATURE

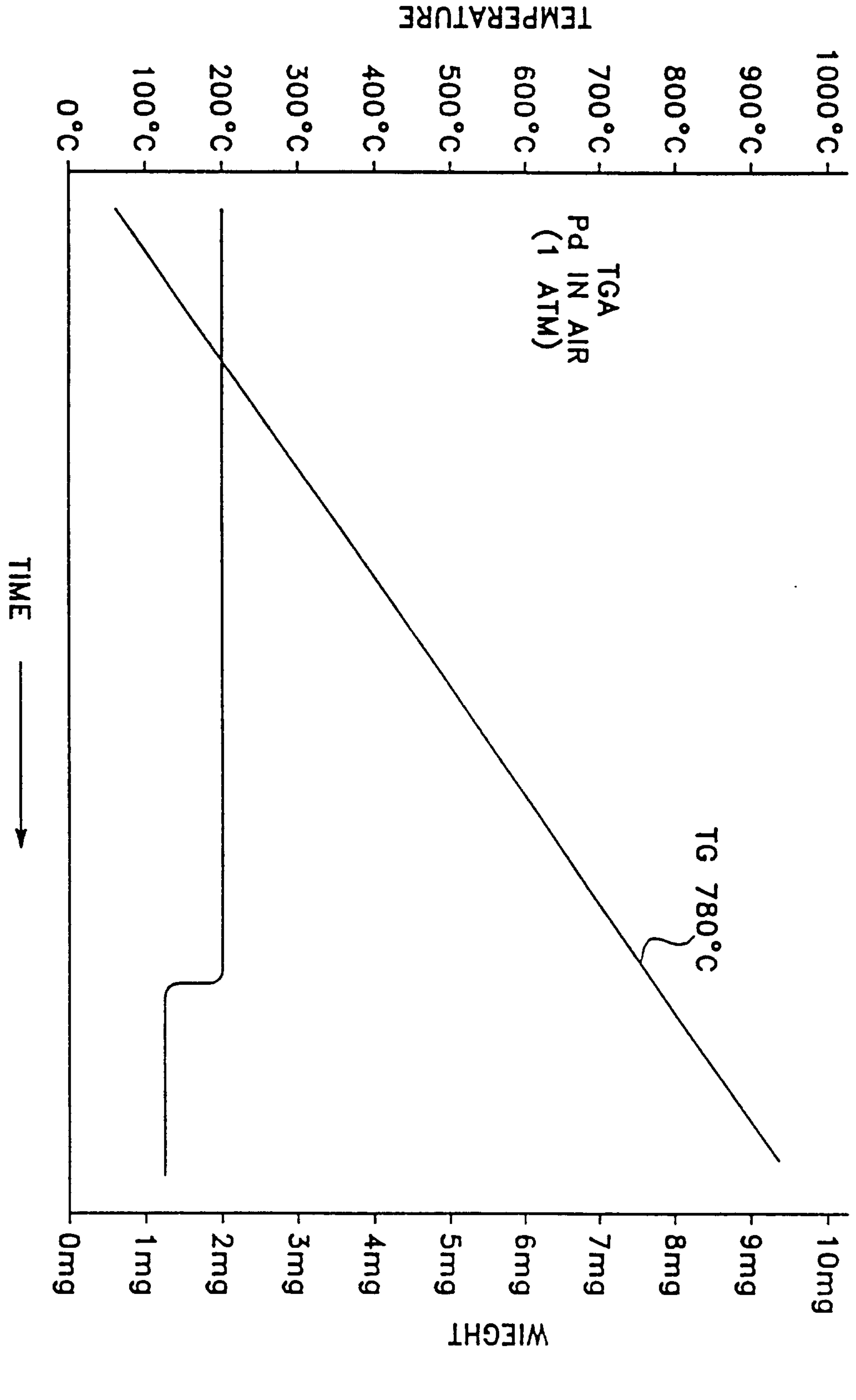
TEMPERATURE
1000°C
900°C
800°C
700°C
600°C
500°C
400°C
300°C
200°C
100°C
0°C
TGA
Pd IN AIR
(1 ATM)
TG 780°C
TIME
0mg
1mg
2mg
3mg
4mg
5mg
6mg
7mg
8mg
9mg
10mg
WIEGHT

Fig. 4A

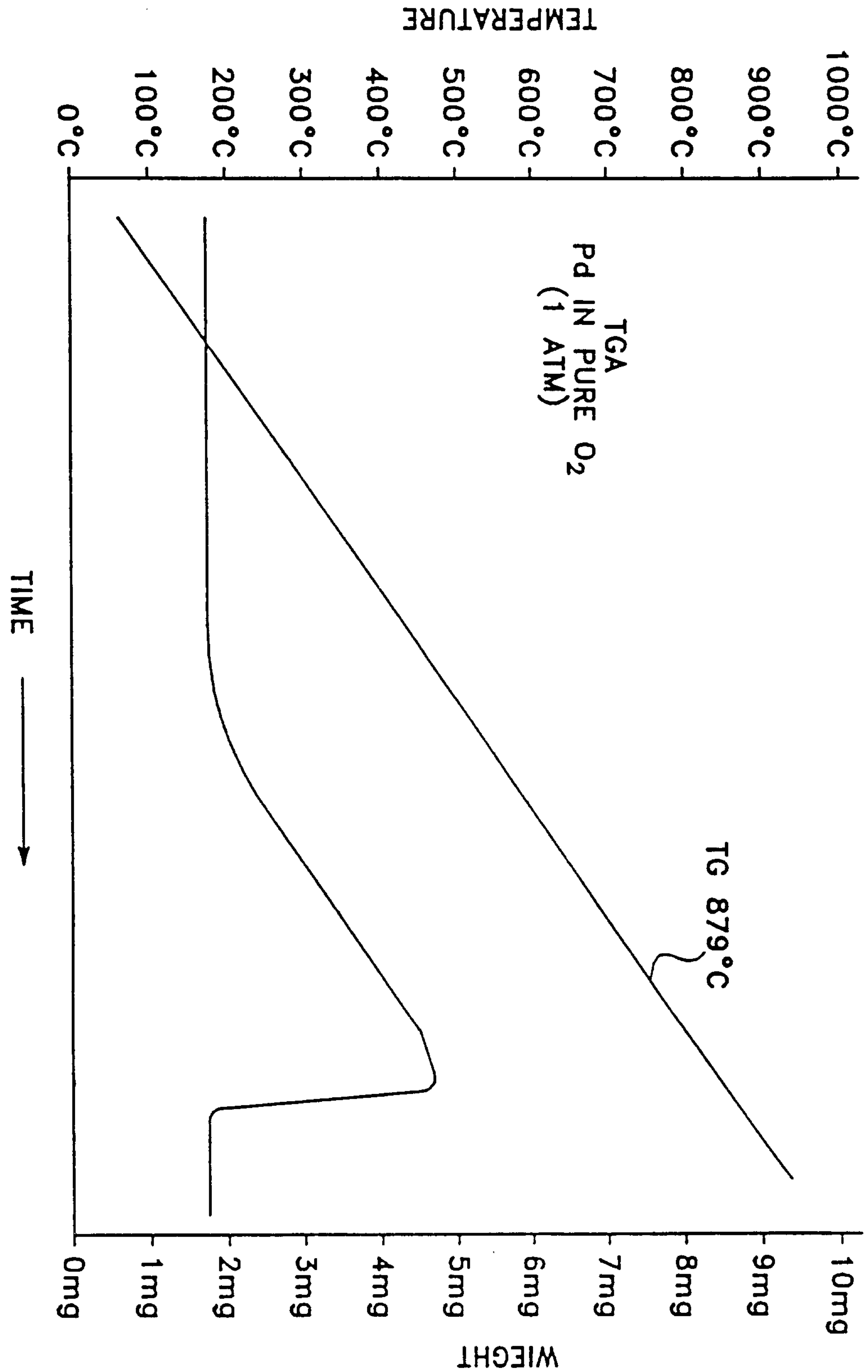
TEMPERATURE
0°C
100°C
200°C
300°C
400°C
500°C
600°C
700°C
800°C
900°C
1000°C
TGA
Pd IN PURE $O_2$
(1 ATM)
TG 879°C
TIME
0mg
1mg
2mg
3mg
4mg
5mg
6mg
7mg
8mg
9mg
10mg
WIEGHT

Fig. 4B

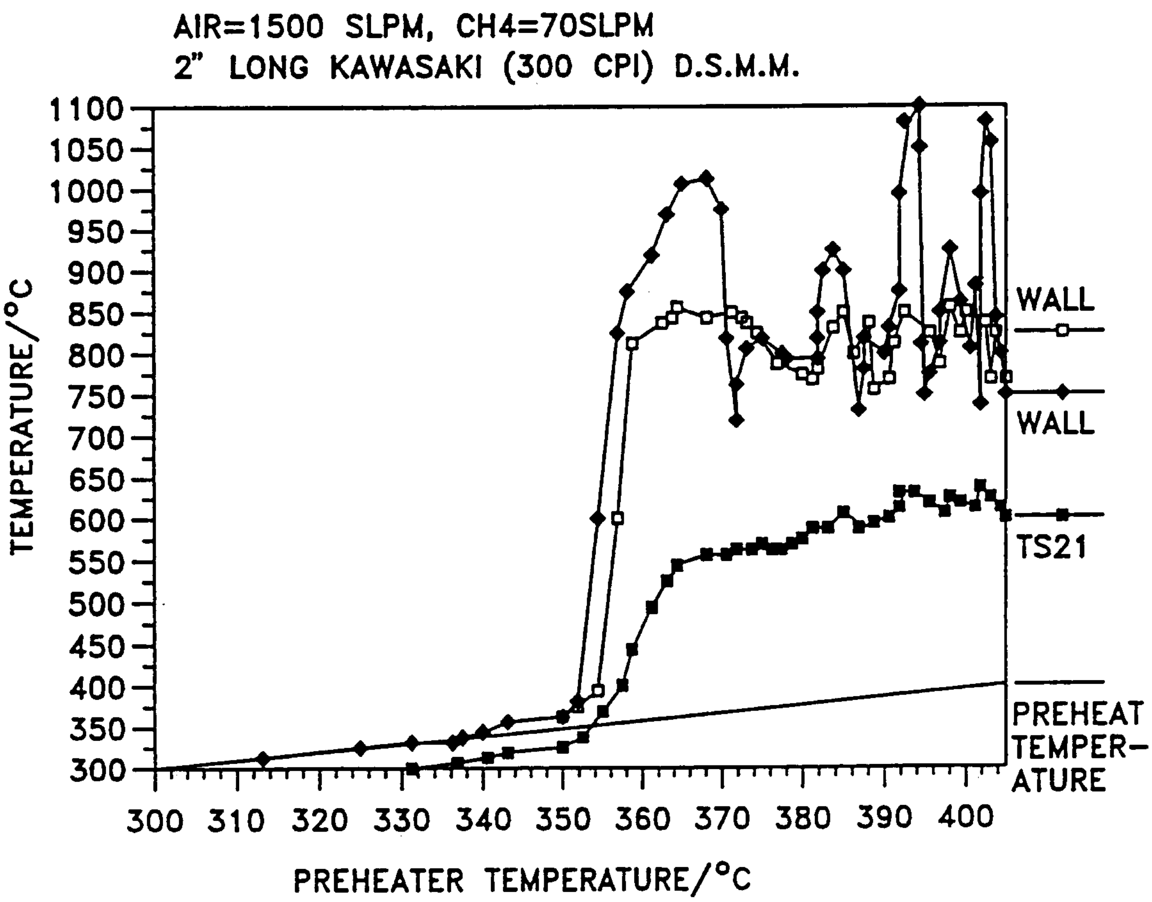
AIR=1500 SLPM, CH4=70SLPM
2" LONG KAWASAKI (300 CPI) D.S.M.M.
TEMPERATURE/°C
1100
1050
1000
950
900
850
800
750
700
650
600
550
500
450
400
350
300
300 310 320 330 340 350 360 370 380 390 400
PREHEATER TEMPERATURE/°C
WALL
WALL
TS21
PREHEAT TEMPER-ATURE

Fig. 5

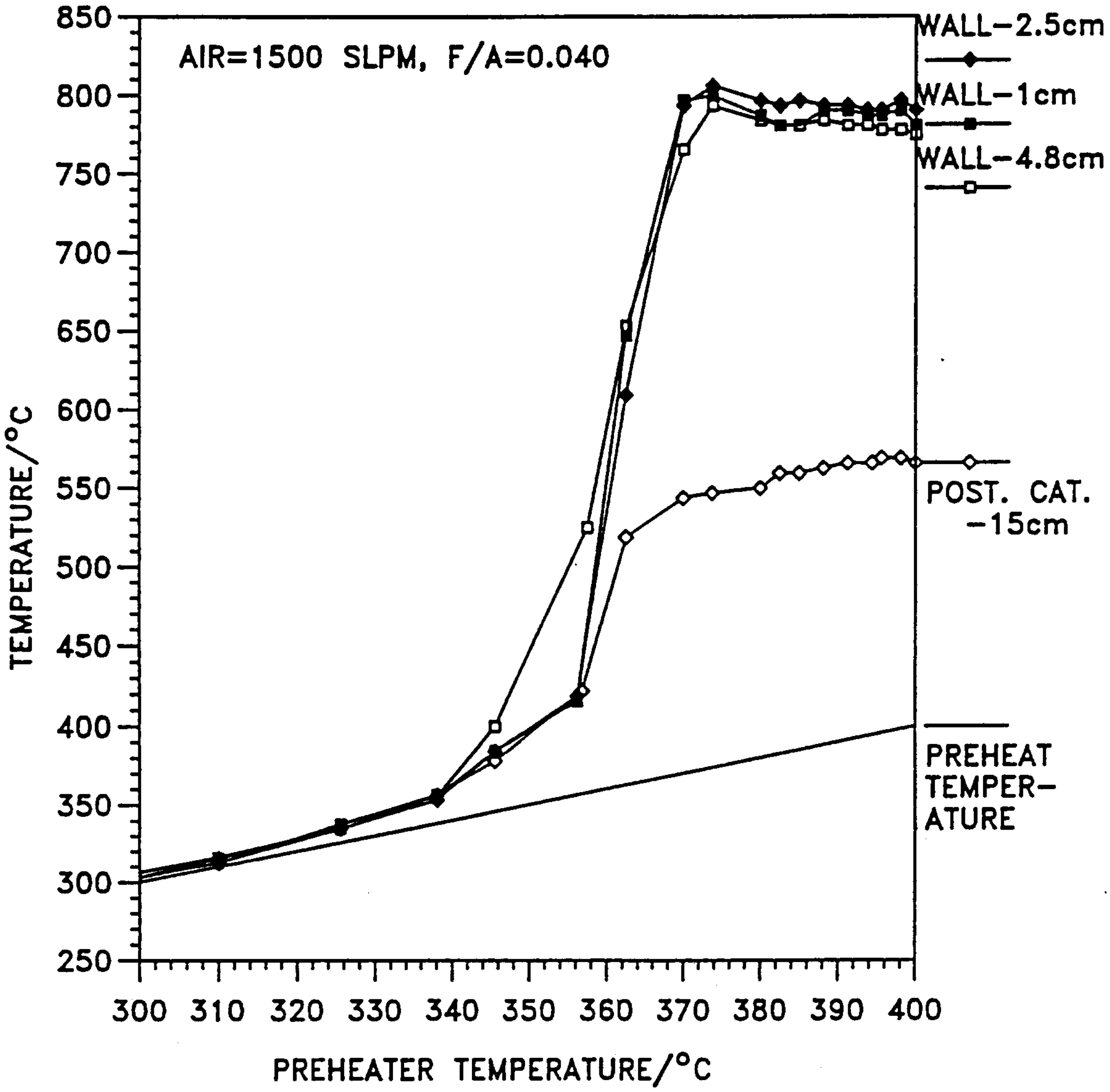
AIR=1500 SLPM, F/A=0.040
850
800
750
700
650
600
550
500
450
400
350
300
250
TEMPERATURE/°C
300 310 320 330 340 350 360 370 380 390 400
PREHEATER TEMPERATURE/°C
WALL-2.5cm
WALL-1cm
WALL-4.8cm
POST. CAT. -15cm
PREHEAT TEMPER-ATURE

Fig. 6

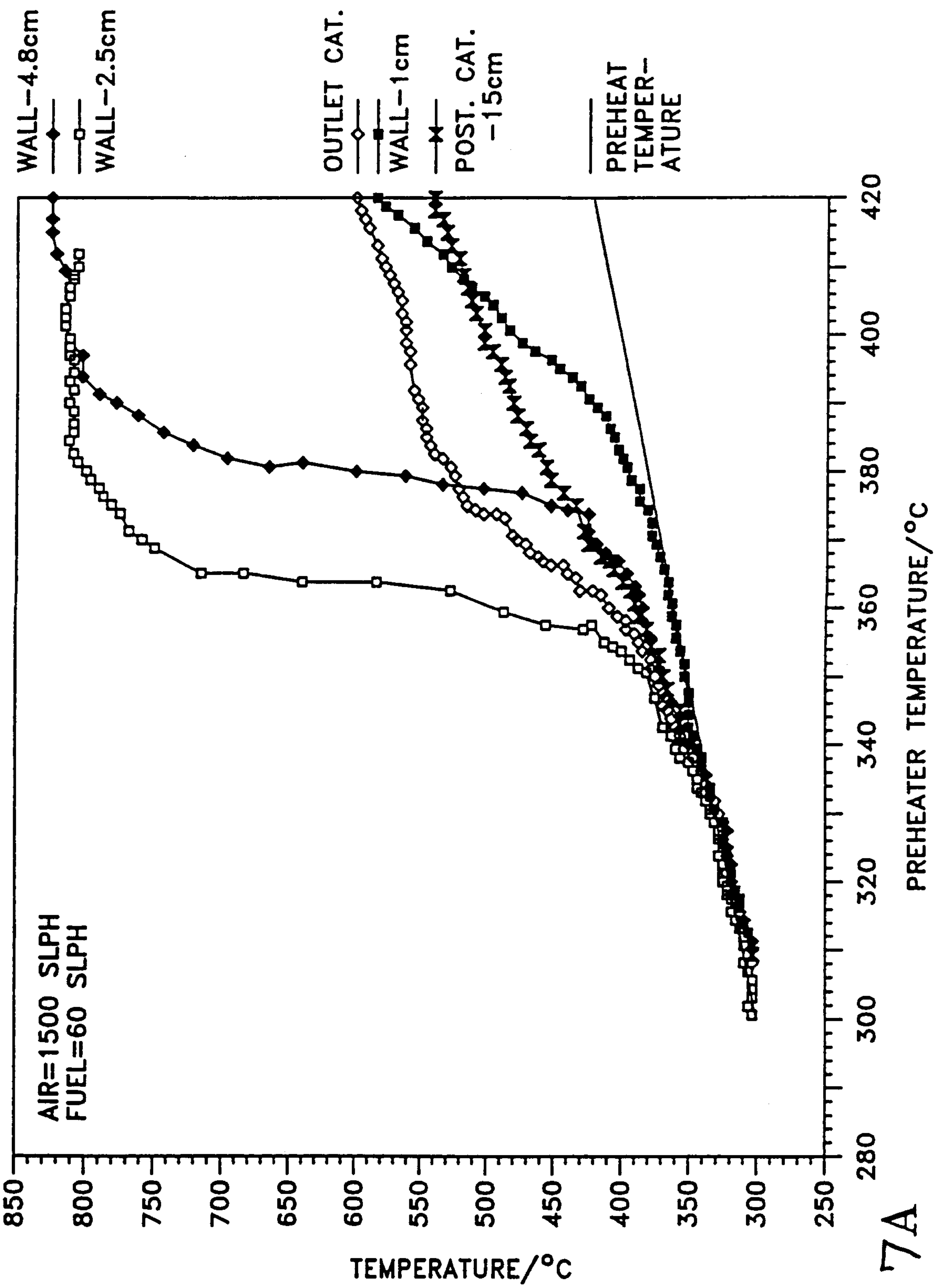
WALL-4.8cm
WALL-2.5cm
OUTLET CAT.
WALL-1cm
POST. CAT. -15cm
PREHEAT TEMPER-ATURE
AIR=1500 SLPH
FUEL=60 SLPH
TEMPERATURE/°C
850
800
750
700
650
600
550
500
450
400
350
300
250
PREHEATER TEMPERATURE/°C
280
300
320
340
360
380
400
420

Fig. 7A

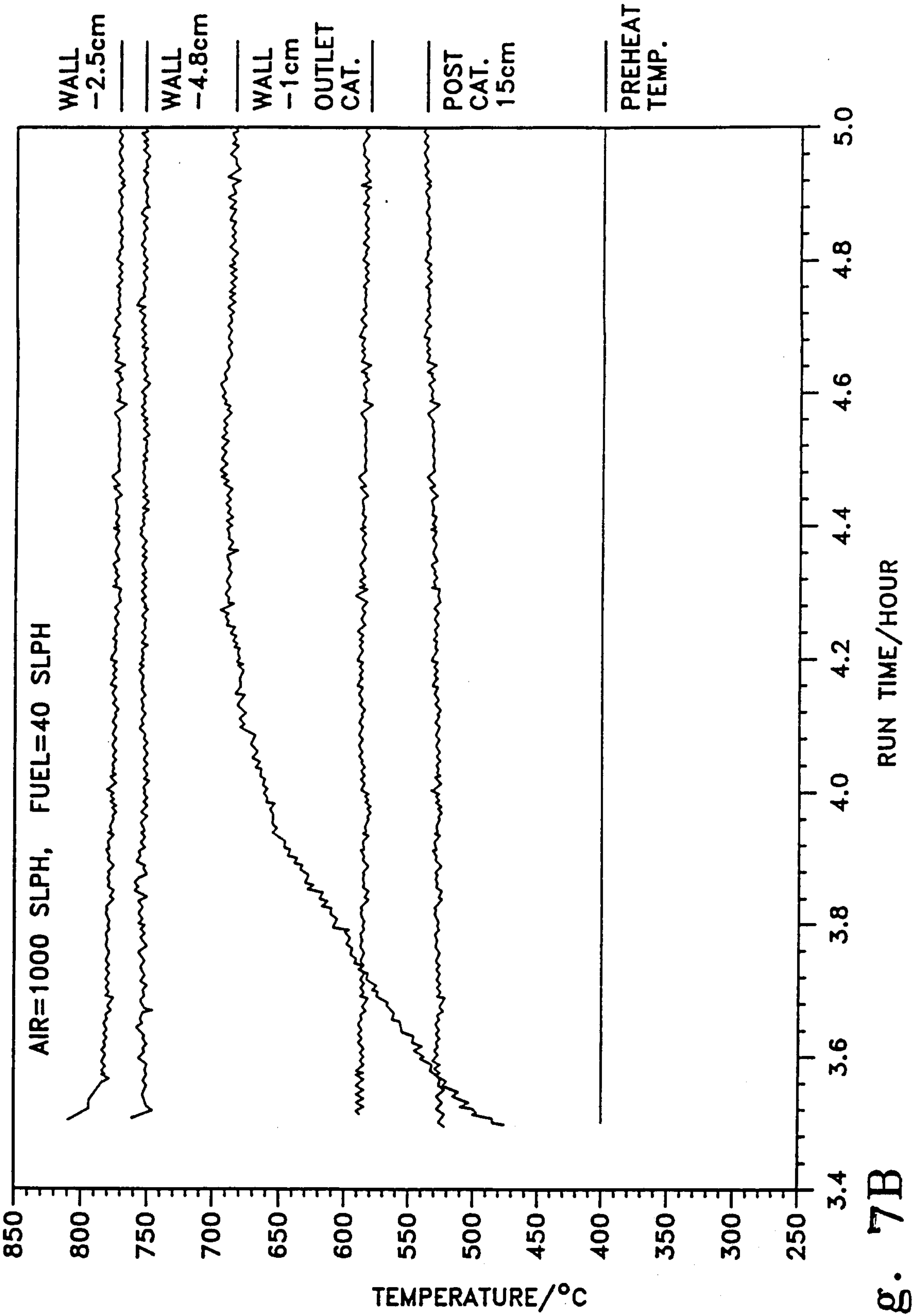
AIR=1000 SLPH, FUEL=40 SLPH
WALL -2.5cm
WALL -4.8cm
WALL -1cm
OUTLET CAT.
POST CAT. 15cm
PREHEAT TEMP.
TEMPERATURE/°C
850
800
750
700
650
600
550
500
450
400
350
300
250
RUN TIME/HOUR
3.4
3.6
3.8
4.0
4.2
4.4
4.6
4.8
5.0

Fig. 7B

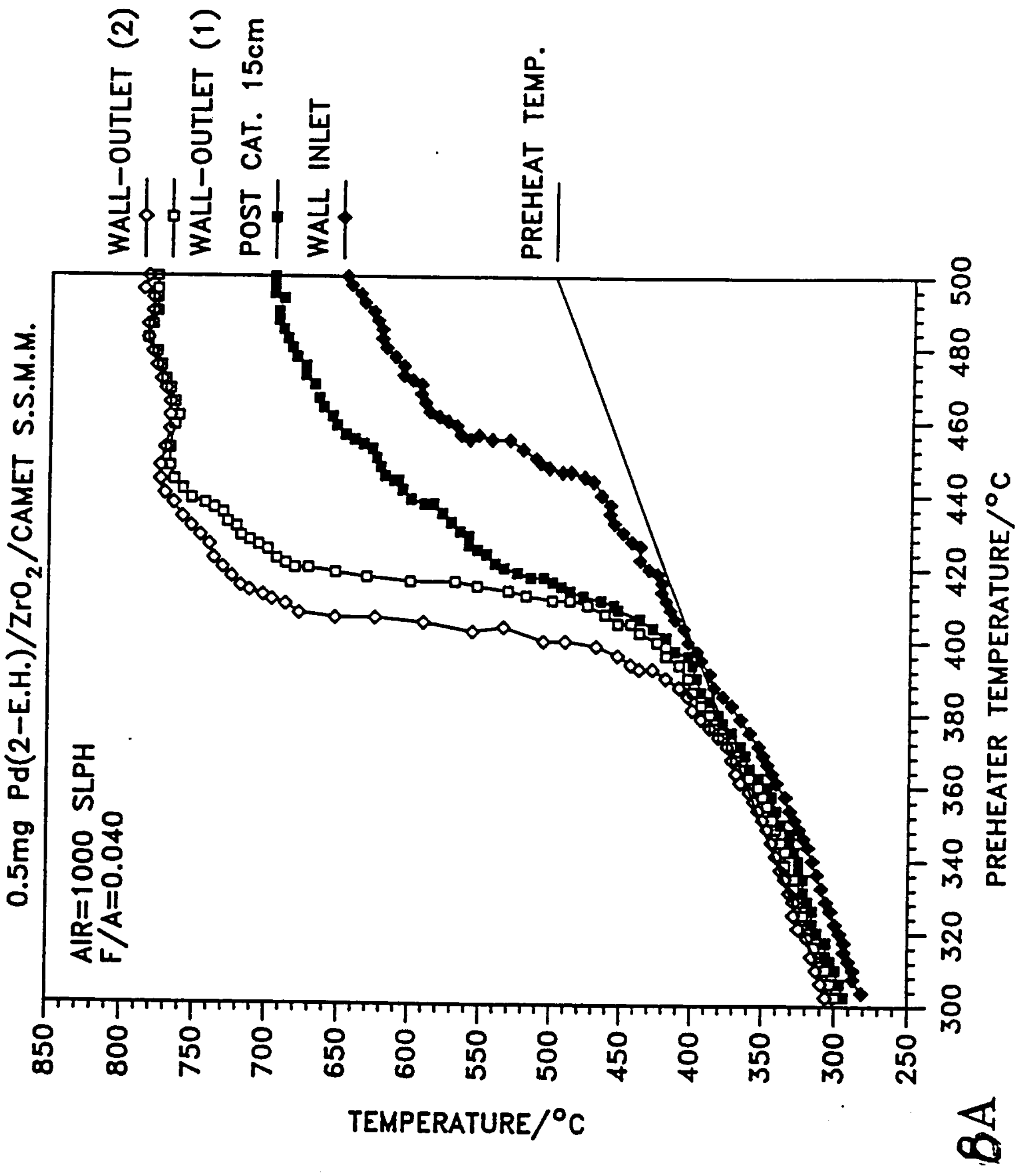
0.5mg Pd(2-E.H.)/ZrO2/CAMET S.S.M.M.
AIR=1000 SLPH
F/A=0.040
WALL-OUTLET (2)
WALL-OUTLET (1)
POST CAT. 15cm
WALL INLET
PREHEAT TEMP.
TEMPERATURE/°C
PREHEATER TEMPERATURE/°C

Fig. 8A

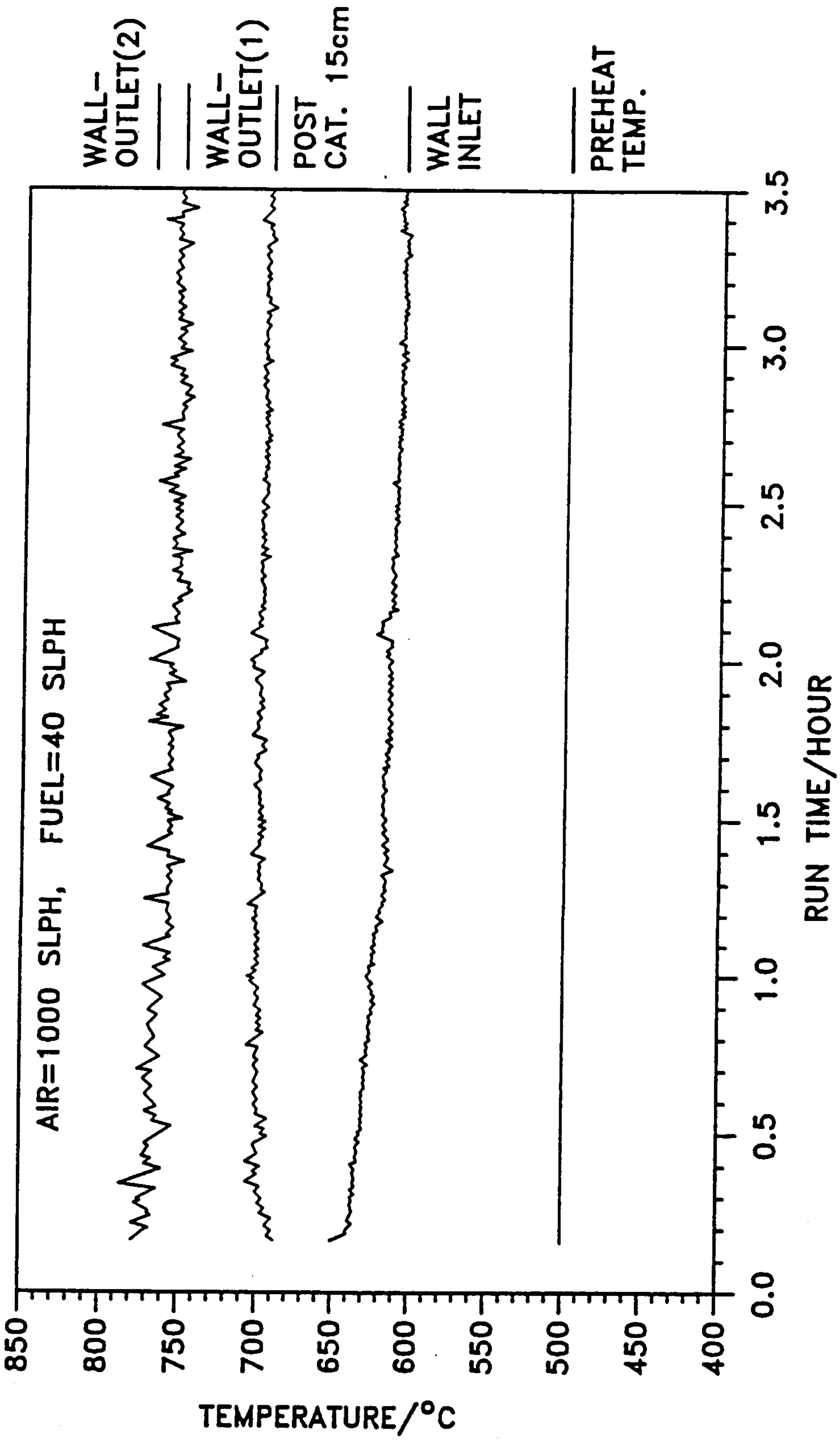
AIR=1000 SLPH, FUEL=40 SLPH
WALL-OUTLET(2)
WALL-OUTLET(1)
POST CAT. 15cm
WALL INLET
PREHEAT TEMP.
850
800
750
700
650
600
550
500
450
400
TEMPERATURE/°C
0.0
0.5
1.0
1.5
2.0
2.5
3.0
3.5
RUN TIME/HOUR

Fig. 8B

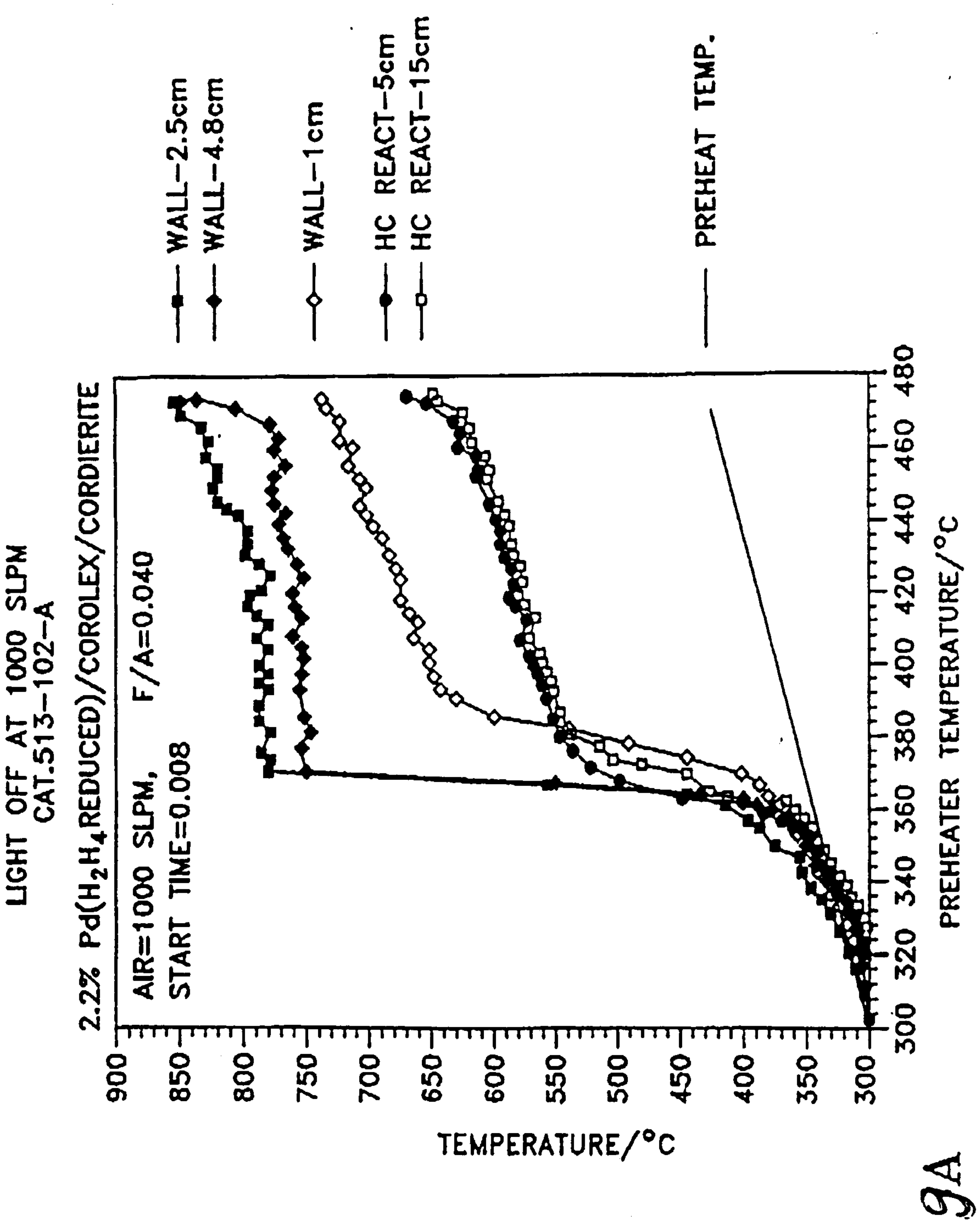
LIGHT OFF AT 1000 SLPM
CAT.513-102-A
2.2% Pd(H2H4 REDUCED)/COROLEX/CORDIERITE
AIR=1000 SLPM, F/A=0.040
START TIME=0.008
TEMPERATURE/°C
900
850
800
750
700
650
600
550
500
450
400
350
300
PREHEATER TEMPERATURE/°C
300
320
340
360
380
400
420
440
460
480
WALL-2.5cm
WALL-4.8cm
WALL-1cm
HC REACT-5cm
HC REACT-15cm
PREHEAT TEMP.

Fig. 9A

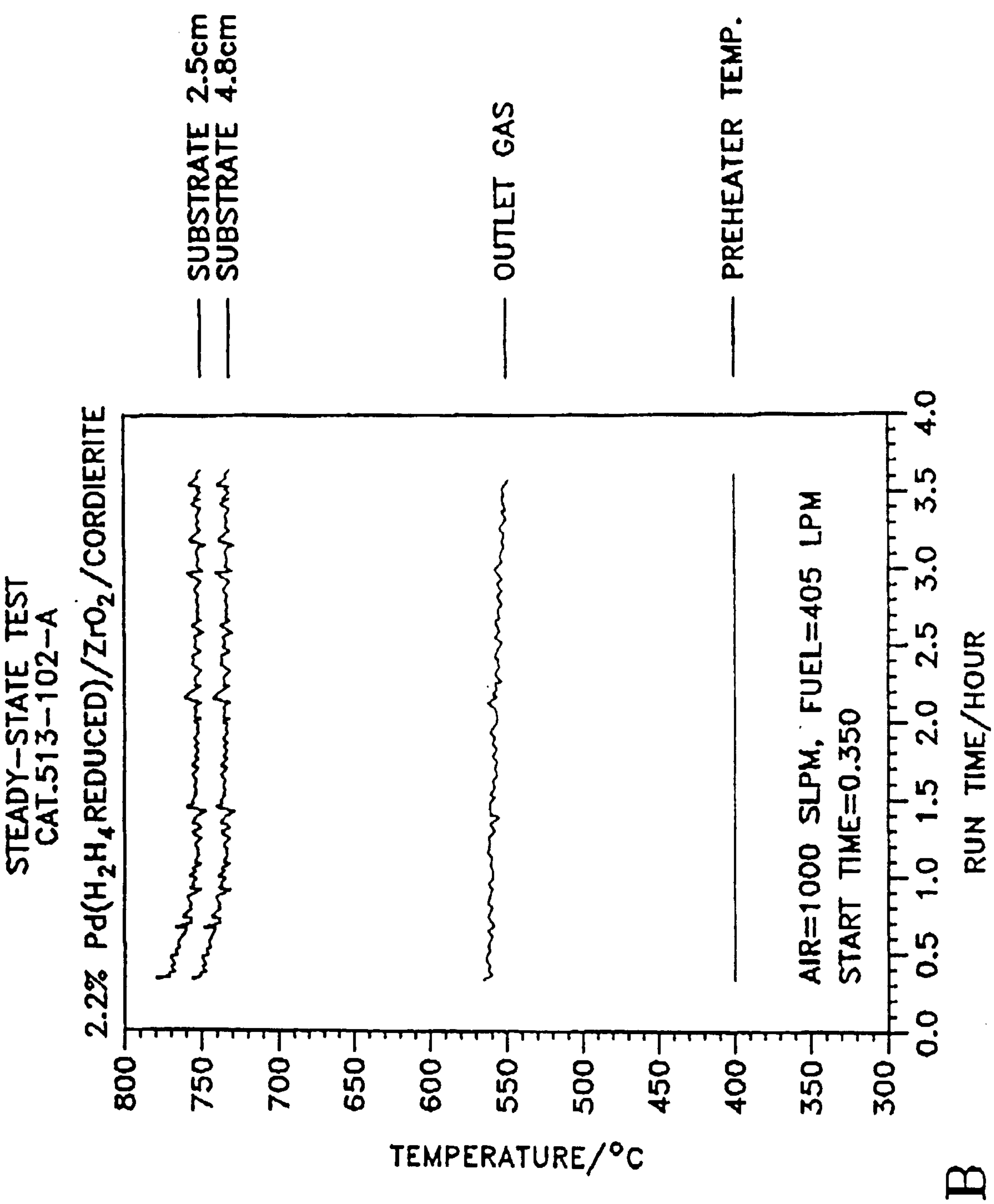

STEADY-STATE TEST
CAT.513-102-A
2.2% Pd(H2H4 REDUCED)/ZrO2/CORDIERITE
SUBSTRATE 2.5cm
SUBSTRATE 4.8cm
OUTLET GAS
PREHEATER TEMP.
AIR=1000 SLPM, FUEL=405 LPM
START TIME=0.350
800
750
700
650
600
550
500
450
400
350
300
TEMPERATURE/°C
0.0
0.5
1.0
1.5
2.0
2.5
3.0
3.5
4.0
RUN TIME/HOUR


Fig. 9B

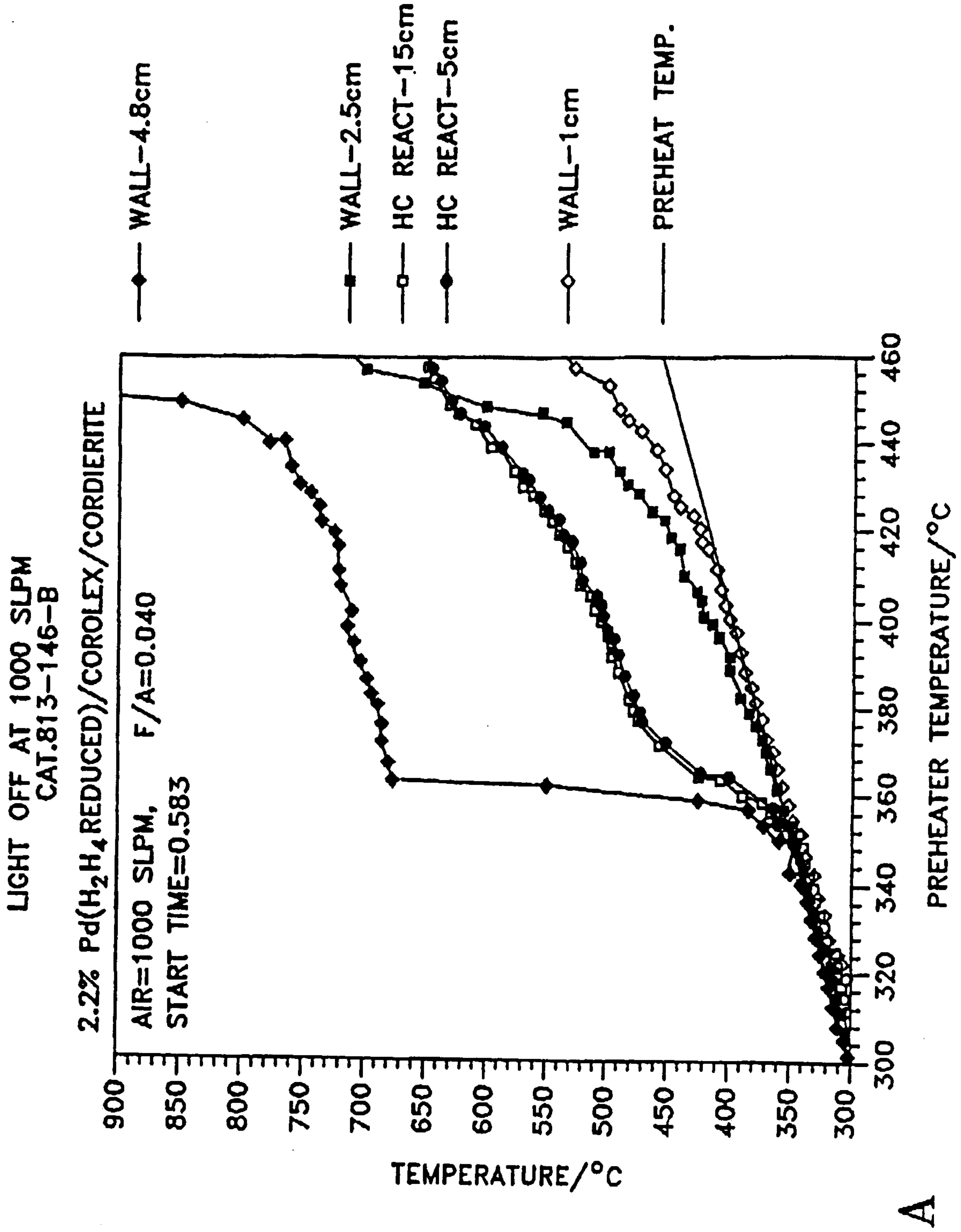
LIGHT OFF AT 1000 SLPM
CAT.813-146-B
2.2% Pd(H2H4 REDUCED)/COROLEX/CORDIERITE
AIR=1000 SLPM, F/A=0.040
START TIME=0.583
WALL-4.8cm
WALL-2.5cm
HC REACT-15cm
HC REACT-5cm
WALL-1cm
PREHEAT TEMP.
TEMPERATURE/°C
PREHEATER TEMPERATURE/°C
900
850
800
750
700
650
600
550
500
450
400
350
300
320
340
360
380
400
420
440
460

Fig.10A

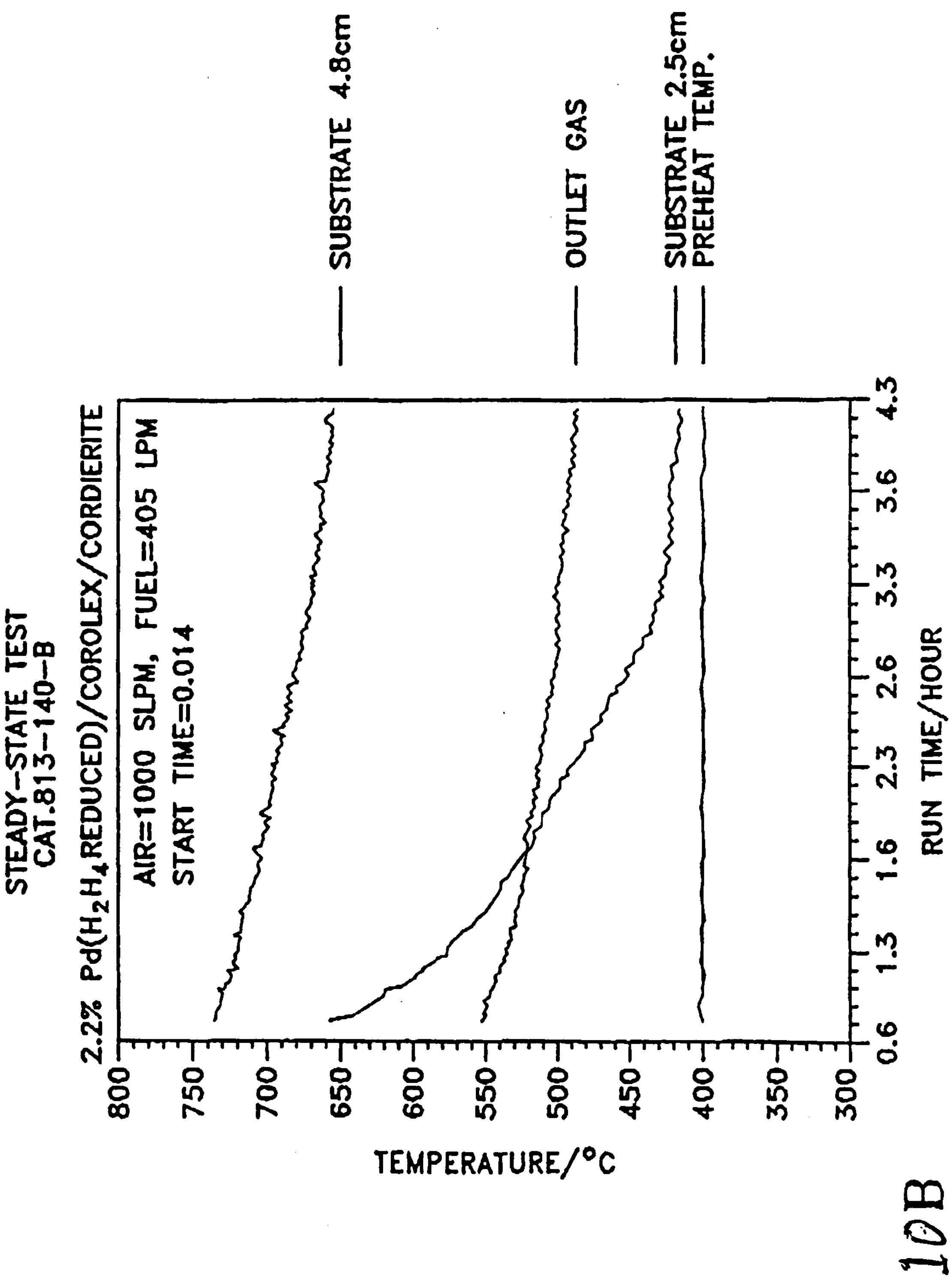
STEADY-STATE TEST
CAT.813-140-B
2.2% Pd(H2H4REDUCED)/COROLEX/CORDIERITE
AIR=1000 SLPM, FUEL=405 LPM
START TIME=0.014
SUBSTRATE 4.8cm
OUTLET GAS
SUBSTRATE 2.5cm
PREHEAT TEMP.
TEMPERATURE/°C
800
750
700
650
600
550
500
450
400
350
300
RUN TIME/HOUR
0.6
1.3
1.6
2.3
2.6
3.3
3.6
4.3

Fig.10B

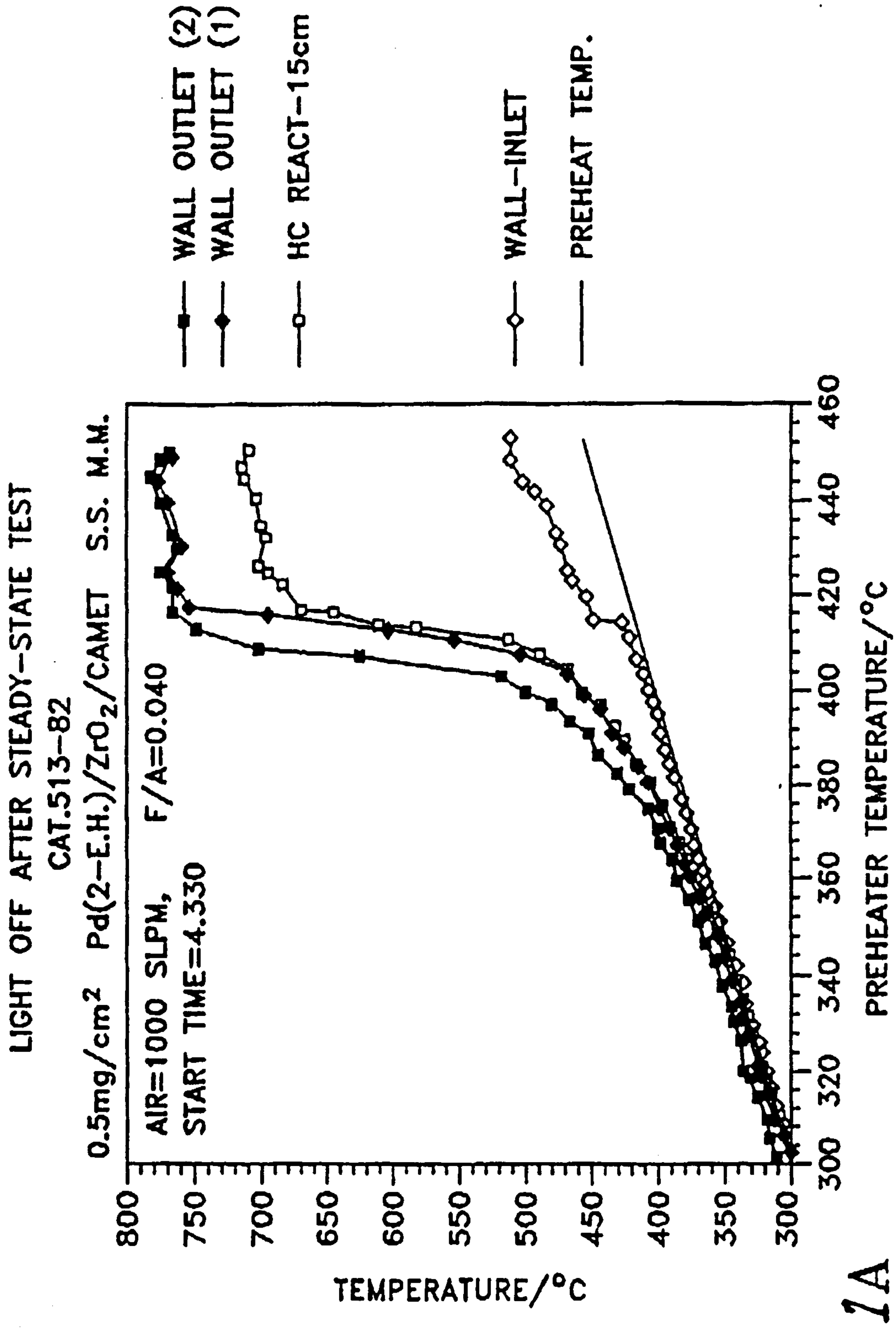
LIGHT OFF AFTER STEADY-STATE TEST
CAT.513-82
0.5mg/cm² Pd(2-E.H.)/ZrO₂/CAMET S.S. M.M.
AIR=1000 SLPM, F/A=0.040
START TIME=4.330
TEMPERATURE/°C
800
750
700
650
600
550
500
450
400
350
300
PREHEATER TEMPERATURE/°C
300
320
340
360
380
400
420
440
460
WALL OUTLET (2)
WALL OUTLET (1)
HC REACT-15cm
WALL-INLET
PREHEAT TEMP.

Fig. 11A

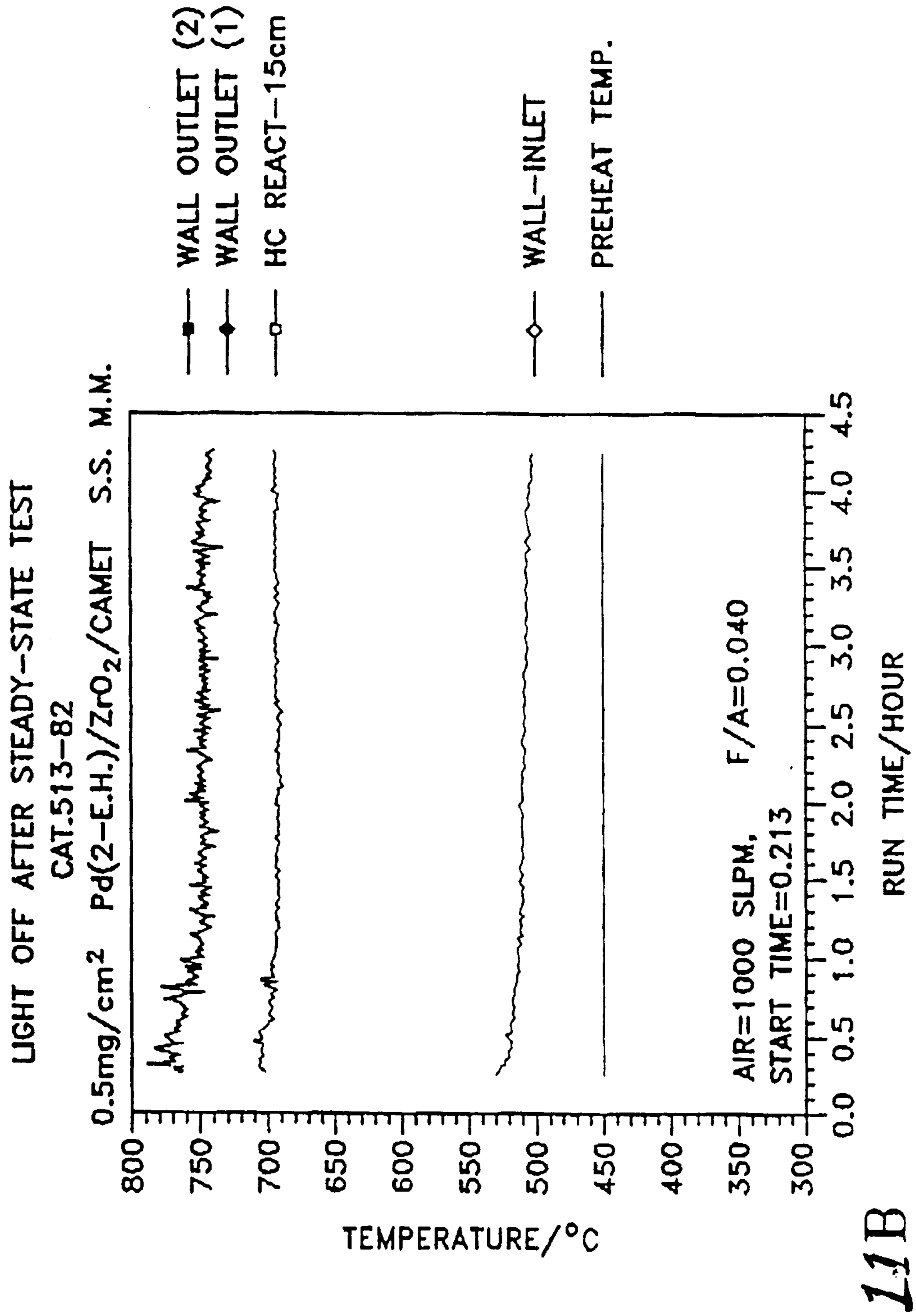
LIGHT OFF AFTER STEADY-STATE TEST
CAT.513-82
0.5mg/cm2 Pd(2-E.H.)/ZrO2/CAMET S.S. M.M.
WALL OUTLET (2)
WALL OUTLET (1)
HC REACT-15cm
WALL-INLET
PREHEAT TEMP.
AIR=1000 SLPM, F/A=0.040
START TIME=0.213
TEMPERATURE/°C
800
750
700
650
600
550
500
450
400
350
300
0.0
0.5
1.0
1.5
2.0
2.5
3.0
3.5
4.0
4.5
RUN TIME/HOUR

Fig. 11B

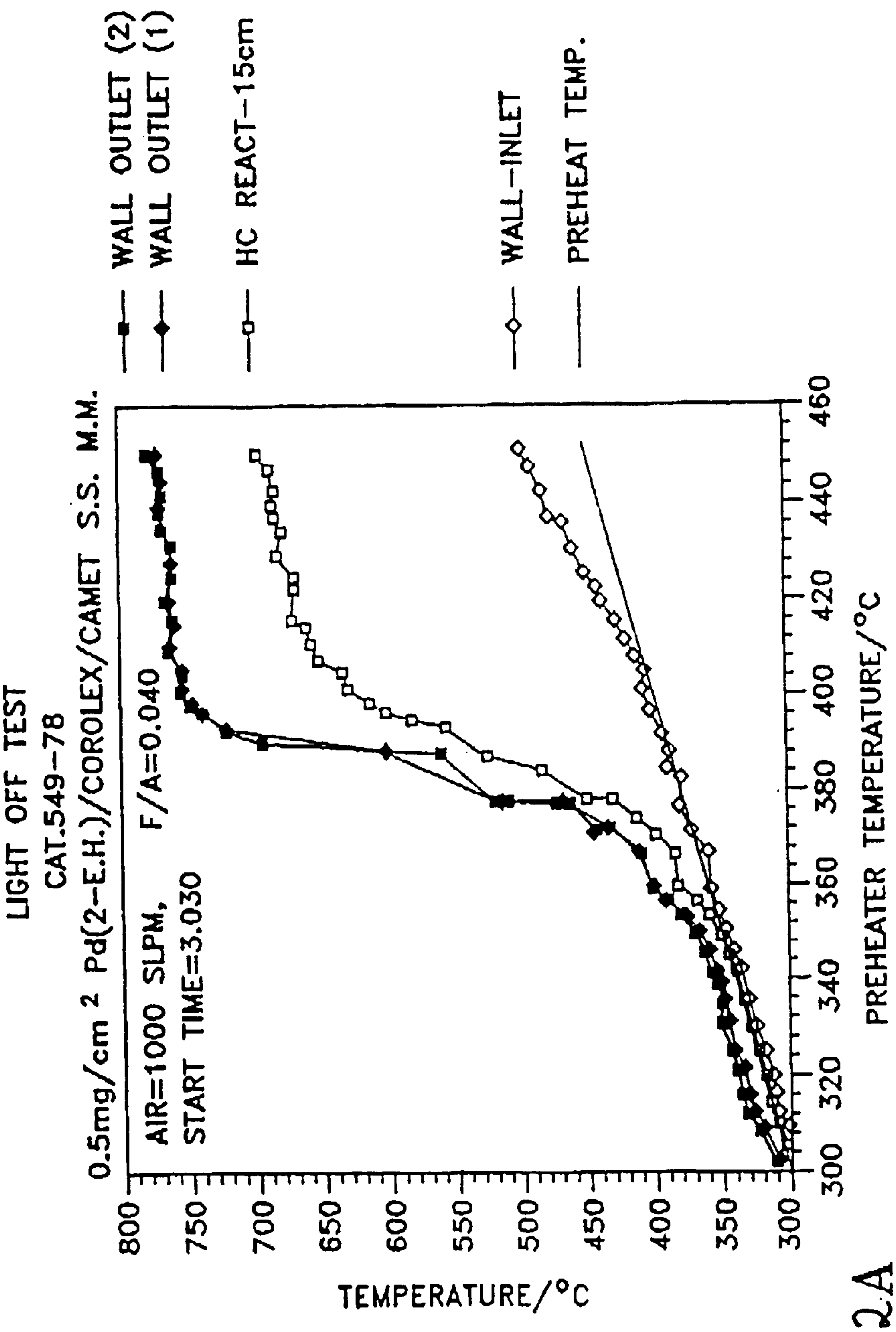
LIGHT OFF TEST
CAT.549-78
0.5mg/cm 2 Pd(2-E.H.)/COROLEX/CAMET S.S. M.M.
AIR=1000 SLPM, F/A=0.040
START TIME=3.030
TEMPERATURE/°C
PREHEATER TEMPERATURE/°C
WALL OUTLET (2)
WALL OUTLET (1)
HC REACT-15cm
WALL-INLET
PREHEAT TEMP.

Fig. 12A

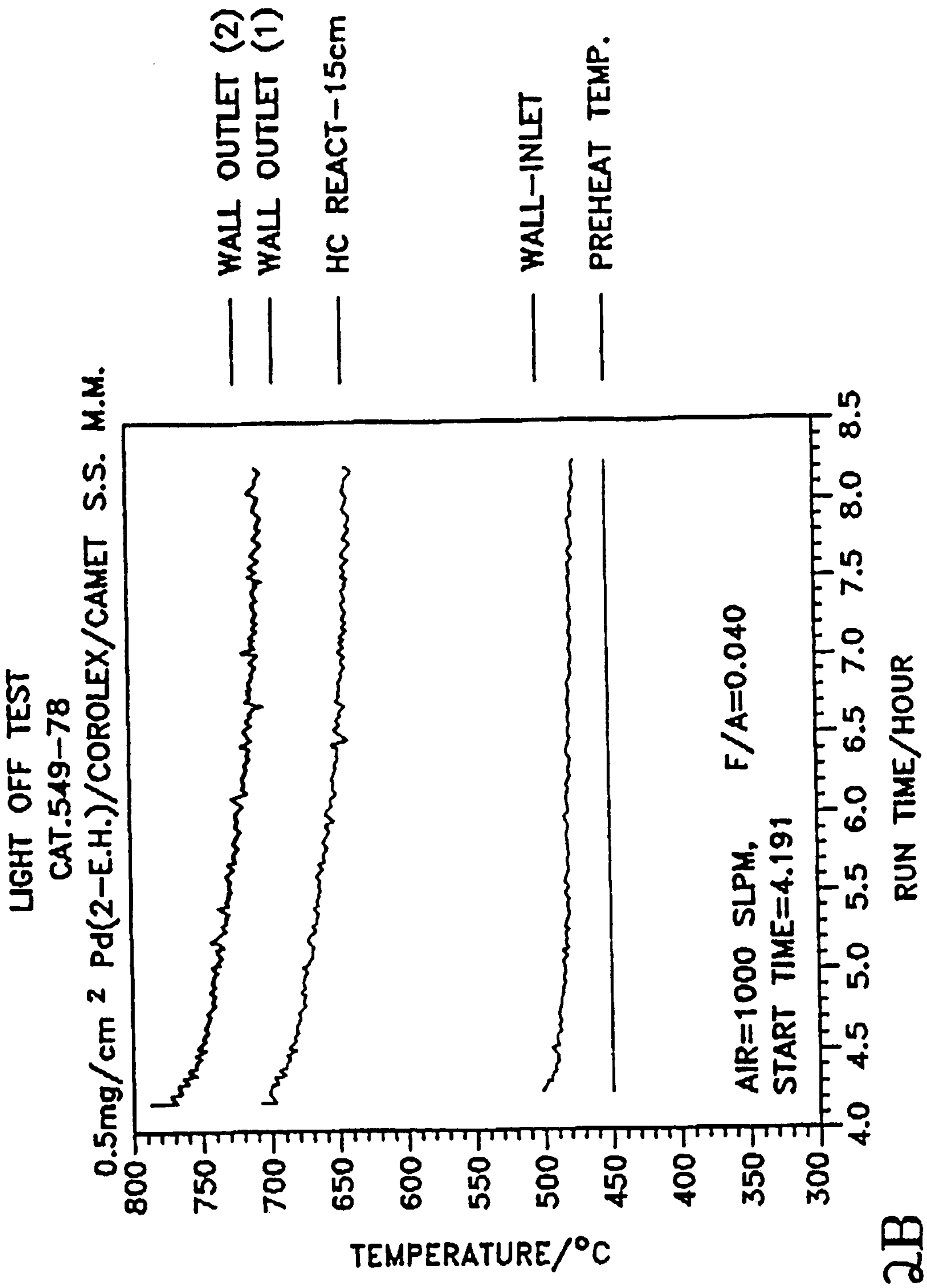
LIGHT OFF TEST
CAT.549-78
0.5mg/cm 2 Pd(2-E.H.)/COROLEX/CAMET S.S. M.M.
WALL OUTLET (2)
WALL OUTLET (1)
HC REACT-15cm
WALL-INLET
PREHEAT TEMP.
AIR=1000 SLPM, F/A=0.040
START TIME=4.191
TEMPERATURE/°C
800
750
700
650
600
550
500
450
400
350
300
RUN TIME/HOUR
4.0
4.5
5.0
5.5
6.0
6.5
7.0
7.5
8.0
8.5

Fig. 12B

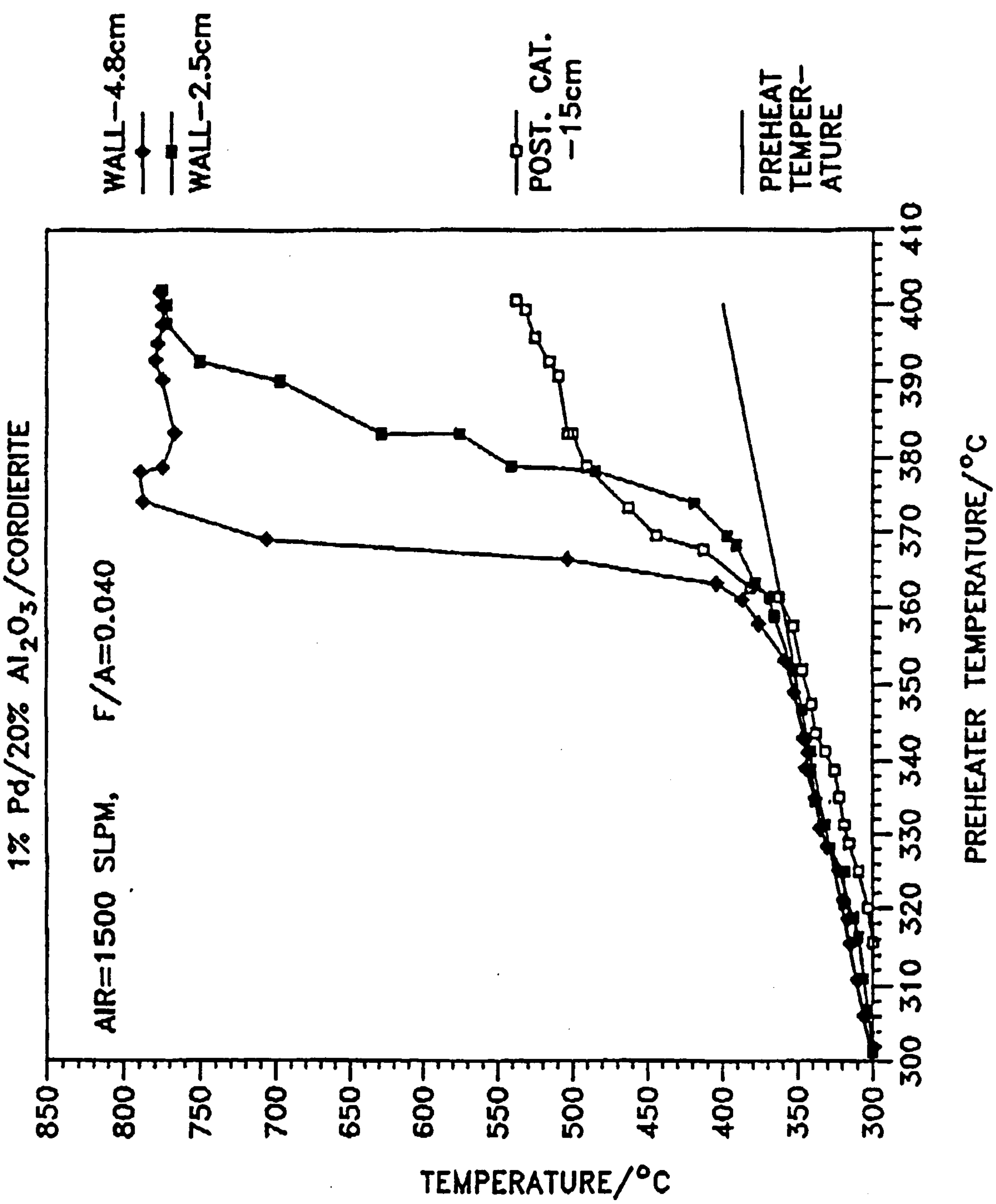
1% Pd/20% $Al_2O_3$/CORDIERITE
AIR=1500 SLPM, F/A=0.040
WALL-4.8cm
WALL-2.5cm
POST. CAT. -15cm
PREHEAT TEMPER-ATURE
TEMPERATURE/°C
850
800
750
700
650
600
550
500
450
400
350
300
PREHEATER TEMPERATURE/°C
300
310
320
330
340
350
360
370
380
390
400
410

Fig. 13A

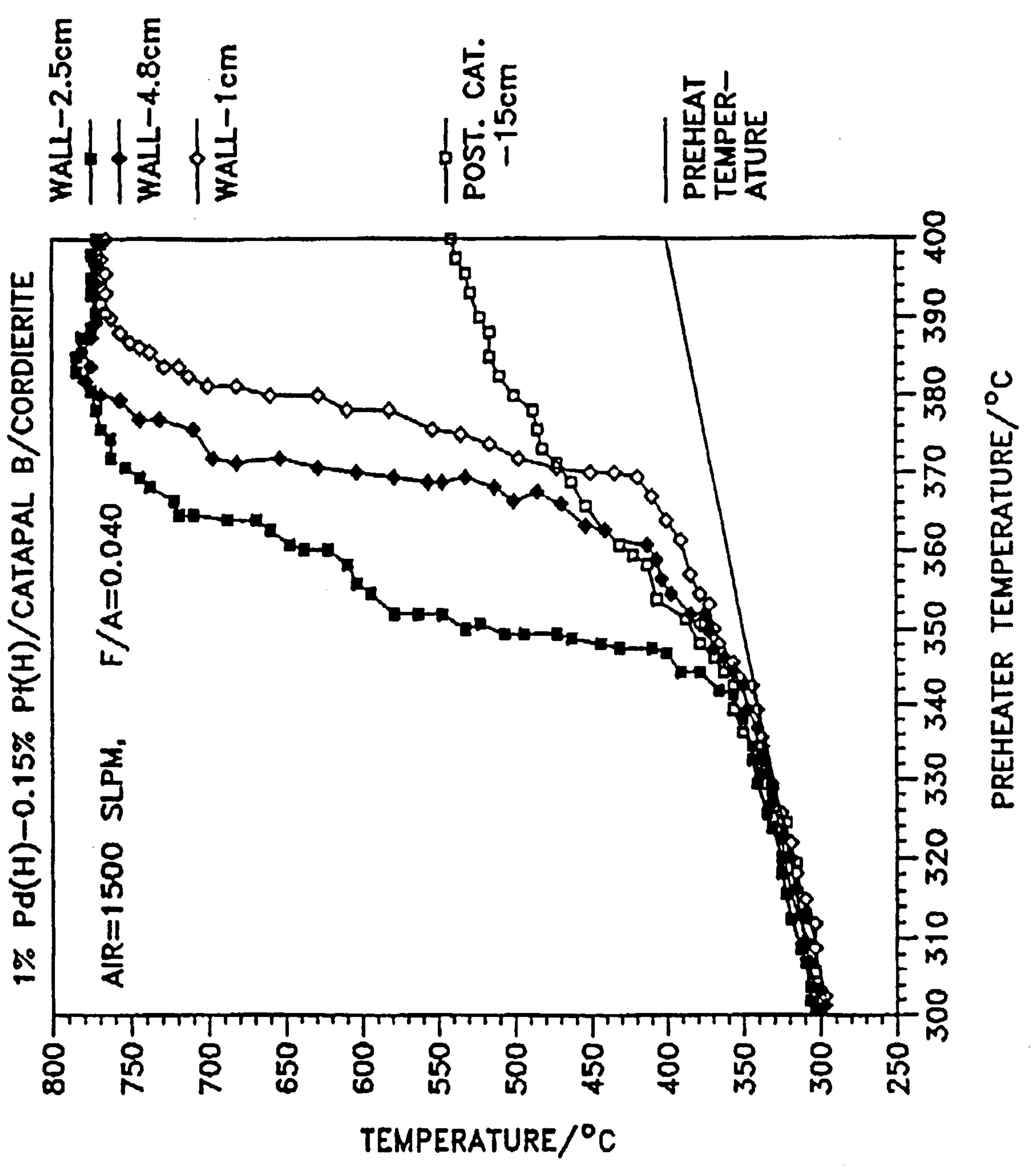
1% Pd(H)–0.15% Pt(H)/CATAPAL B/CORDIERITE
AIR=1500 SLPM, F/A=0.040
WALL–2.5cm
WALL–4.8cm
WALL–1cm
POST. CAT. –15cm
PREHEAT TEMPER–ATURE
TEMPERATURE/°C
PREHEATER TEMPERATURE/°C
800
750
700
650
600
550
500
450
400
350
300
250
300
310
320
330
340
350
360
370
380
390
400

Fig. 13B

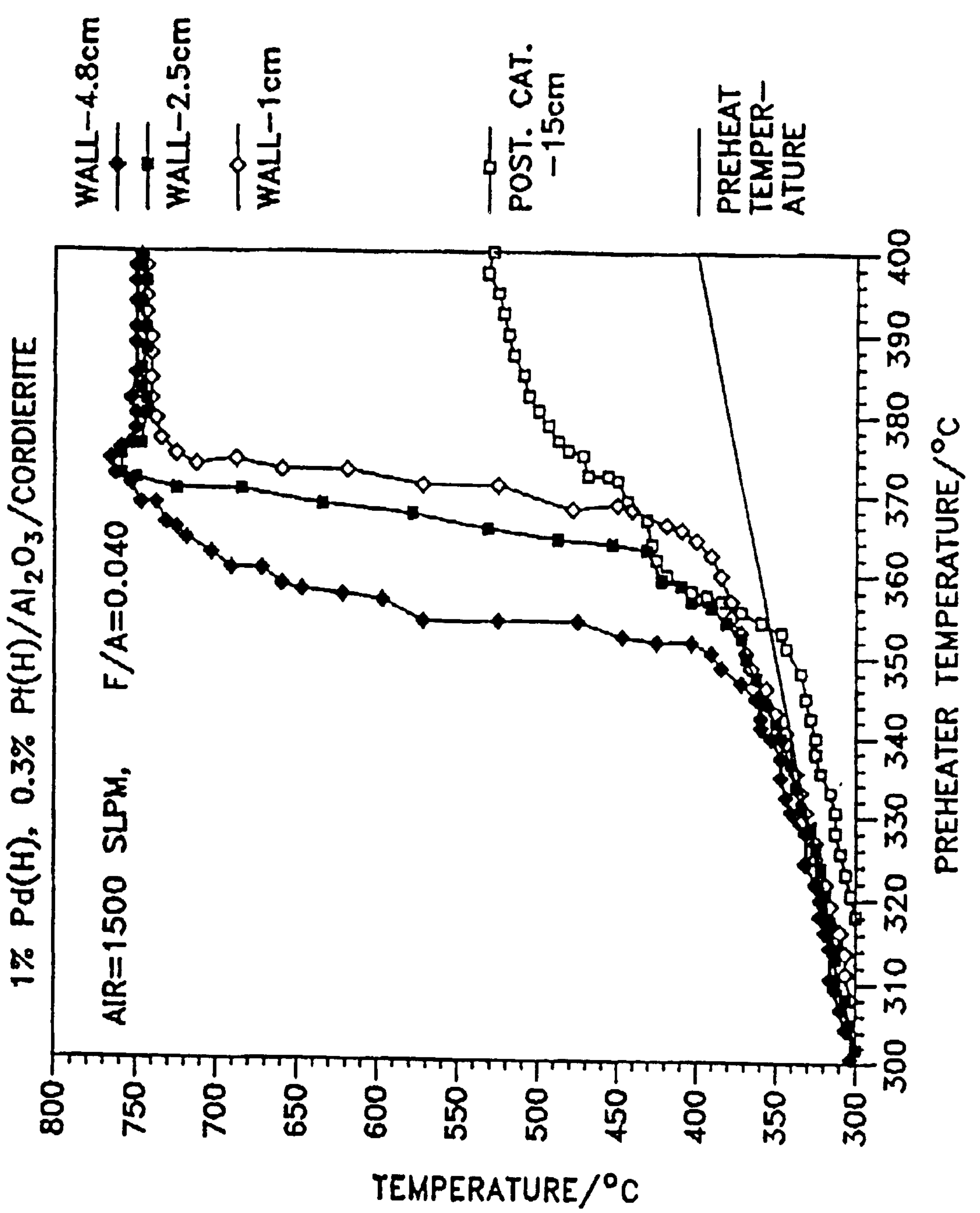

1% Pd(H), 0.3% Pt(H)/Al2O3/CORDIERITE
AIR=1500 SLPM, F/A=0.040
WALL–4.8cm
WALL–2.5cm
WALL–1cm
POST. CAT. –15cm
PREHEAT TEMPER–ATURE
TEMPERATURE/°C
800 750 700 650 600 550 500 450 400 350 300
PREHEATER TEMPERATURE/°C
300 310 320 330 340 350 360 370 380 390 400


Fig. 13C

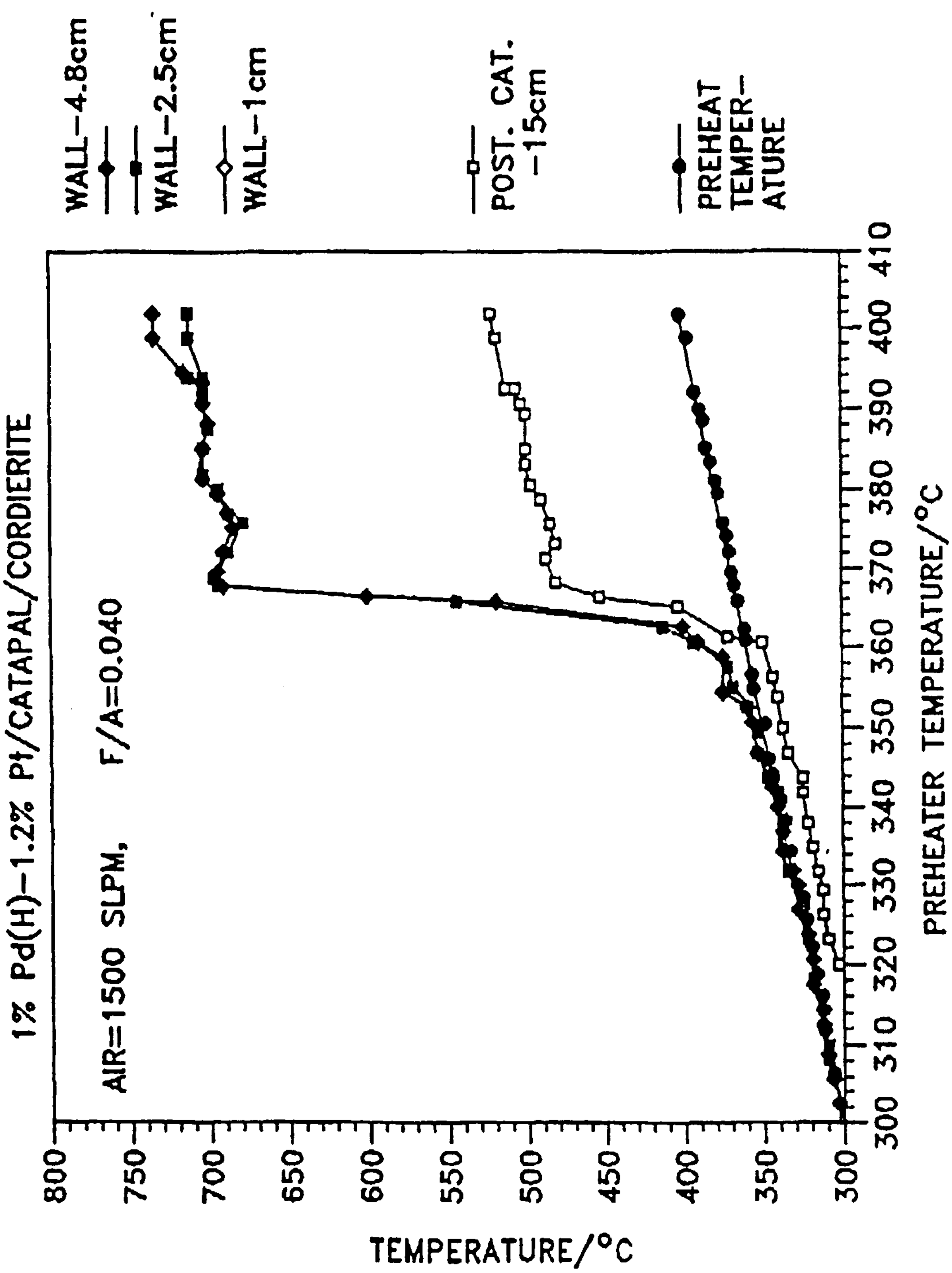
1% Pd(H)–1.2% Pt/CATAPAL/CORDIERITE
AIR=1500 SLPM,
F/A=0.040
WALL–4.8cm
WALL–2.5cm
WALL–1cm
POST. CAT. –15cm
PREHEAT TEMPER–ATURE
TEMPERATURE/°C
800
750
700
650
600
550
500
450
400
350
300
PREHEATER TEMPERATURE/°C
300
310
320
330
340
350
360
370
380
390
400
410

Fig. 13D

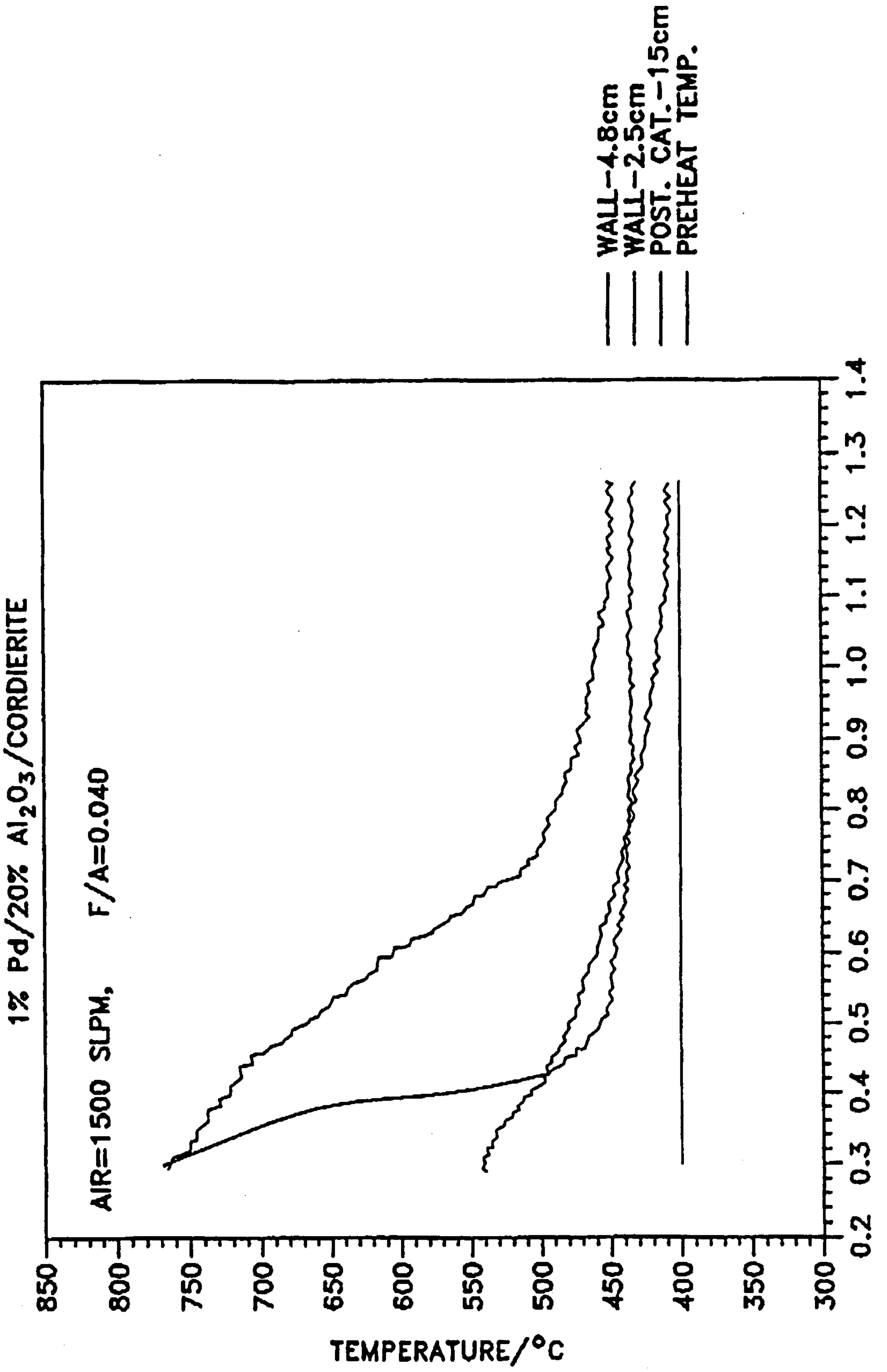
1% Pd/20% $Al_2O_3$/CORDIERITE
AIR=1500 SLPM,
F/A=0.040
WALL-4.8cm
WALL-2.5cm
POST. CAT.-15cm
PREHEAT TEMP.
TEMPERATURE/°C
850
800
750
700
650
600
550
500
450
400
350
300
RUN TIME/HOUR
0.2
0.3
0.4
0.5
0.6
0.7
0.8
0.9
1.0
1.1
1.2
1.3
1.4

Fig. 14A

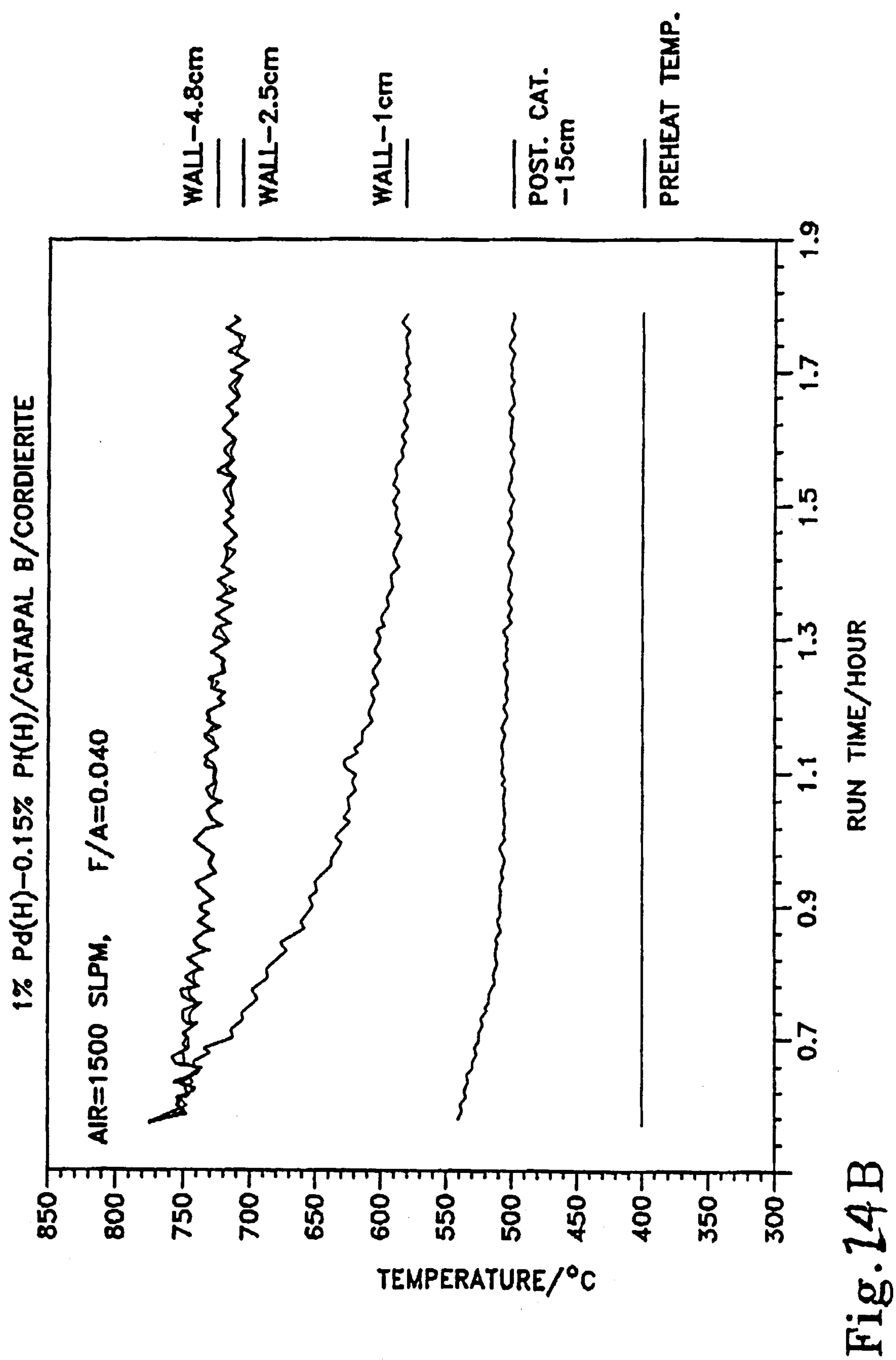
1% Pd(H)-0.15% Pt(H)/CATAPAL B/CORDIERITE
AIR=1500 SLPM,
F/A=0.040
WALL-4.8cm
WALL-2.5cm
WALL-1cm
POST. CAT. -15cm
PREHEAT TEMP.
TEMPERATURE/°C
850
800
750
700
650
600
550
500
450
400
350
300
RUN TIME/HOUR
0.7
0.9
1.1
1.3
1.5
1.7
1.9

Fig. 14B

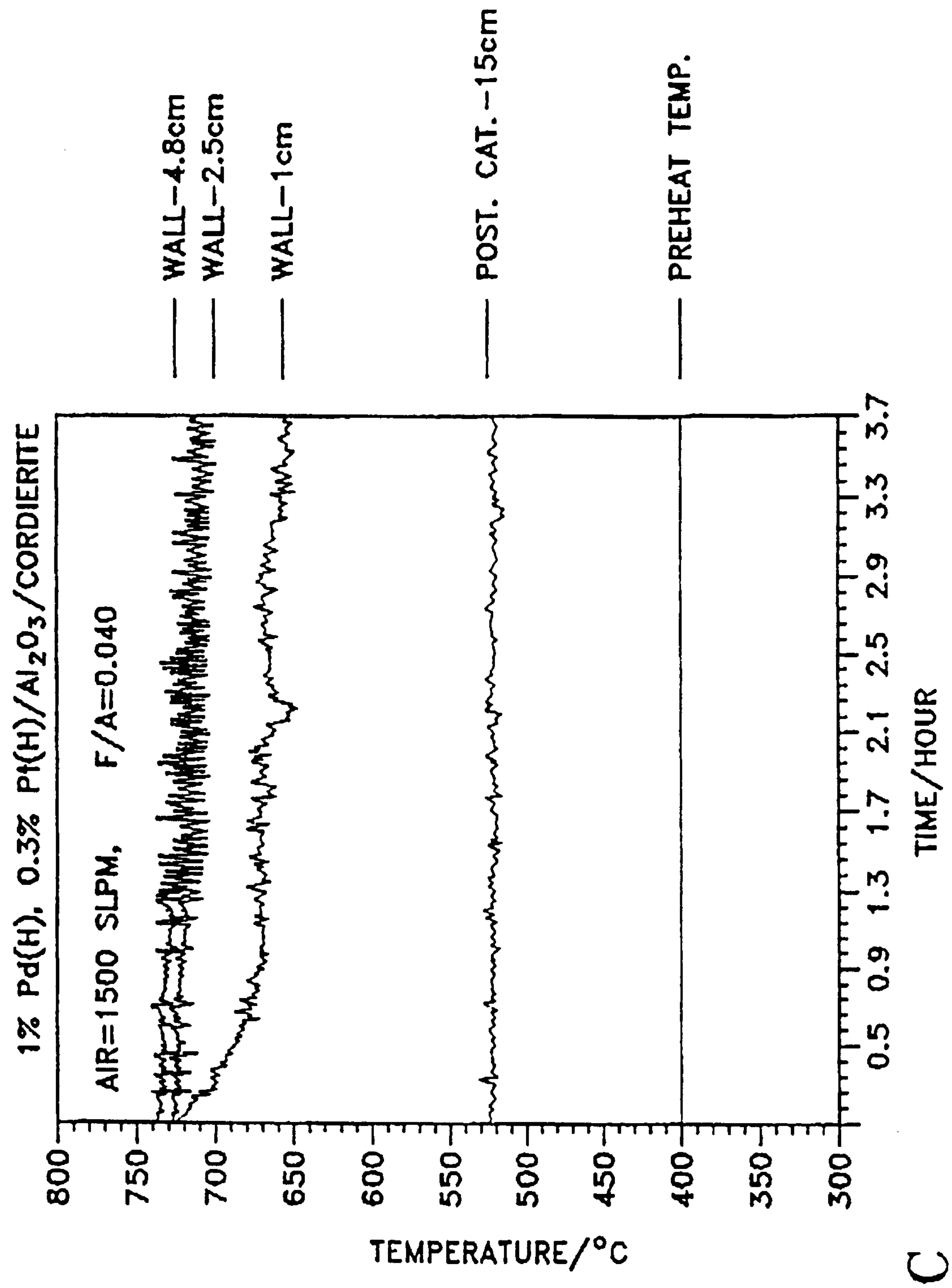
1% Pd(H), 0.3% Pt(H)/$Al_2O_3$/CORDIERITE
AIR=1500 SLPM,
F/A=0.040
WALL-4.8cm
WALL-2.5cm
WALL-1cm
POST. CAT.-15cm
PREHEAT TEMP.
800
750
700
650
600
550
500
450
400
350
300
TEMPERATURE/°C
0.5
0.9
1.3
1.7
2.1
2.5
2.9
3.3
3.7
TIME/HOUR

Fig.14C

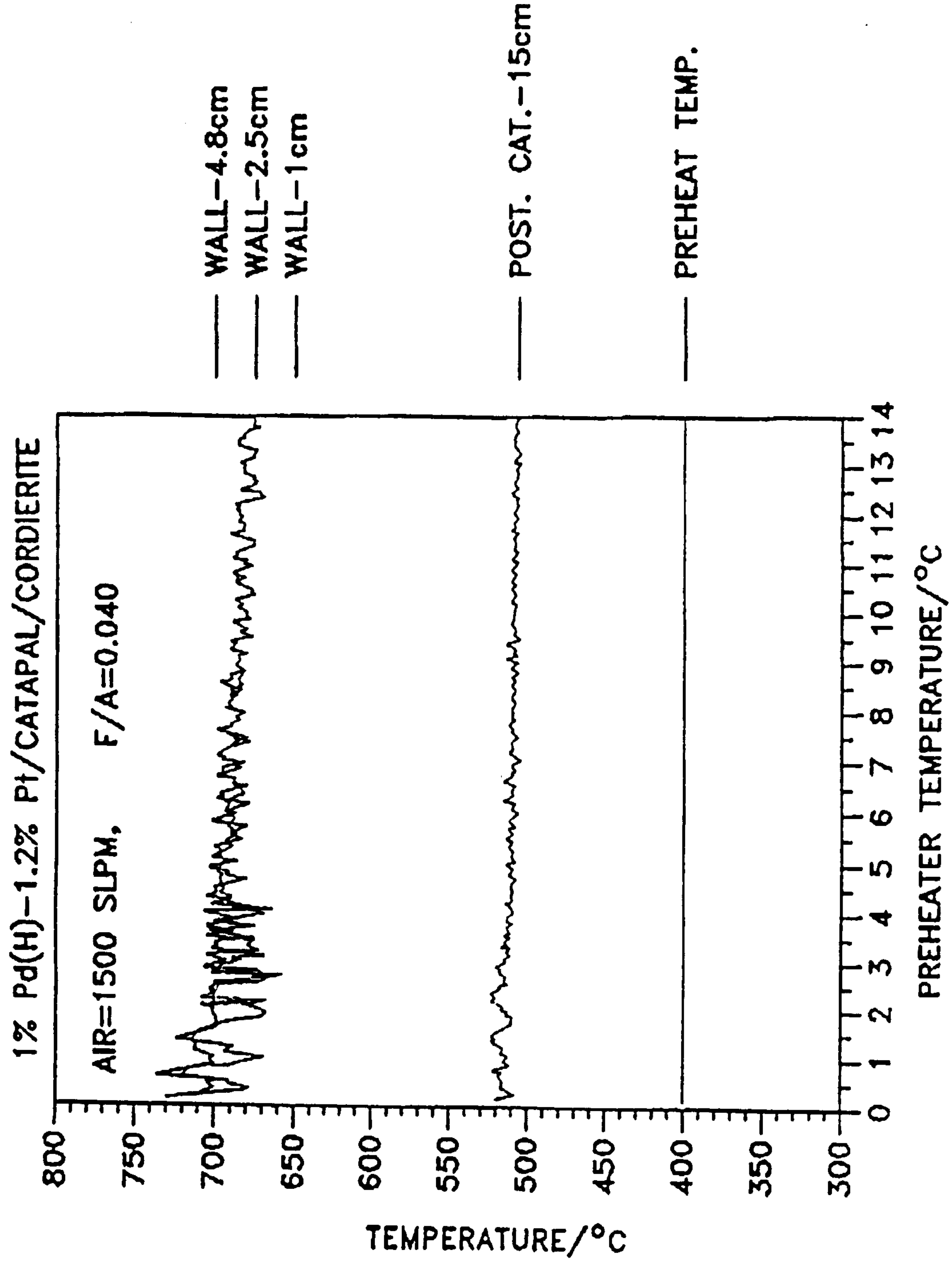
1% Pd(H)-1.2% Pt/CATAPAL/CORDIERITE
AIR=1500 SLPM,
F/A=0.040
WALL-4.8cm
WALL-2.5cm
WALL-1cm
POST. CAT.-15cm
PREHEAT TEMP.
TEMPERATURE/°C
800
750
700
650
600
550
500
450
400
350
300
PREHEATER TEMPERATURE/°C
0 1 2 3 4 5 6 7 8 9 10 11 12 13 14

Fig. 14D

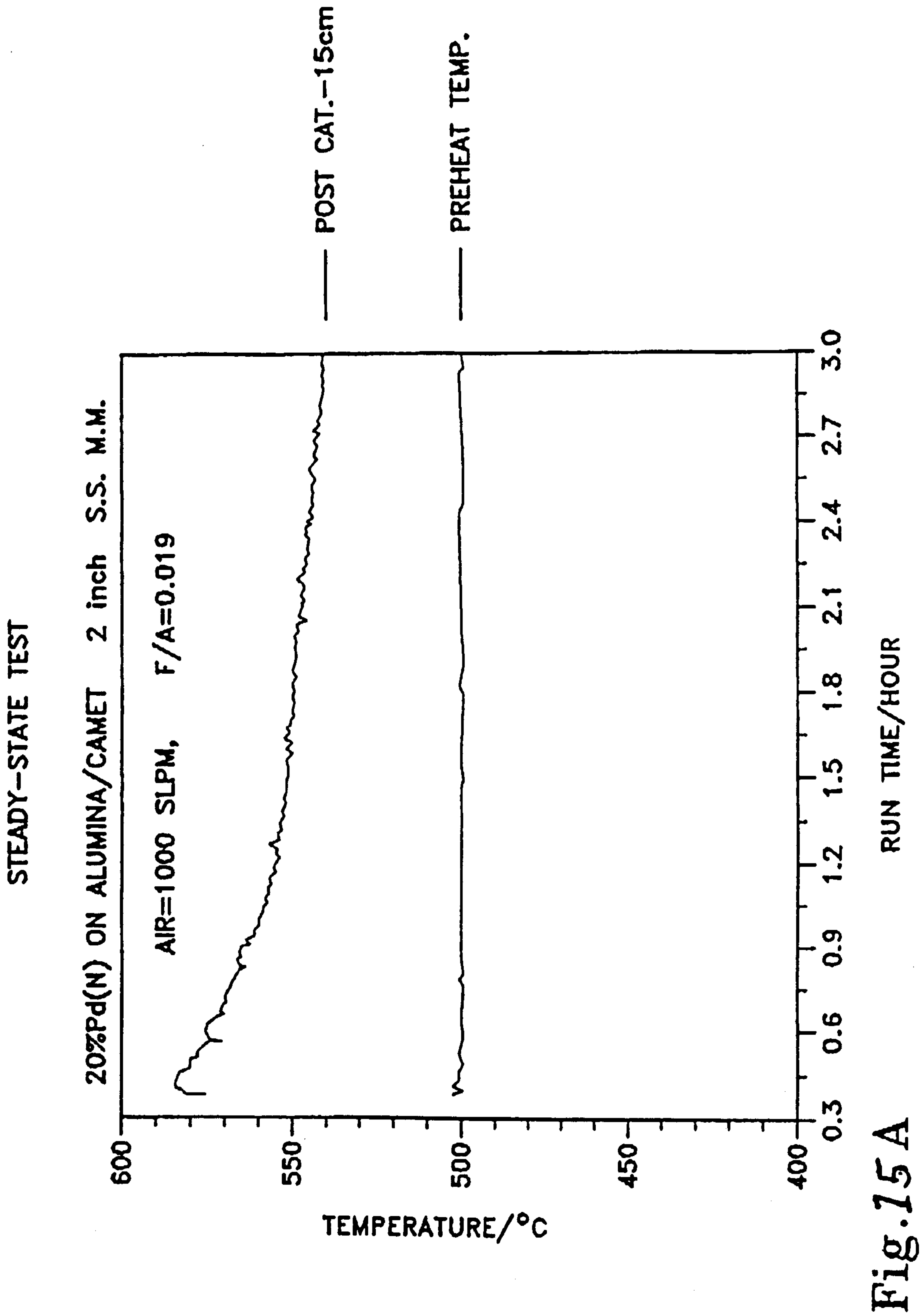
STEADY-STATE TEST
20%Pd(N) ON ALUMINA/CAMET 2 inch S.S. M.M.
AIR=1000 SLPM, F/A=0.019
POST CAT.-15cm
PREHEAT TEMP.
600
550
500
450
400
TEMPERATURE/°C
0.3
0.6
0.9
1.2
1.5
1.8
2.1
2.4
2.7
3.0
RUN TIME/HOUR

Fig.15A

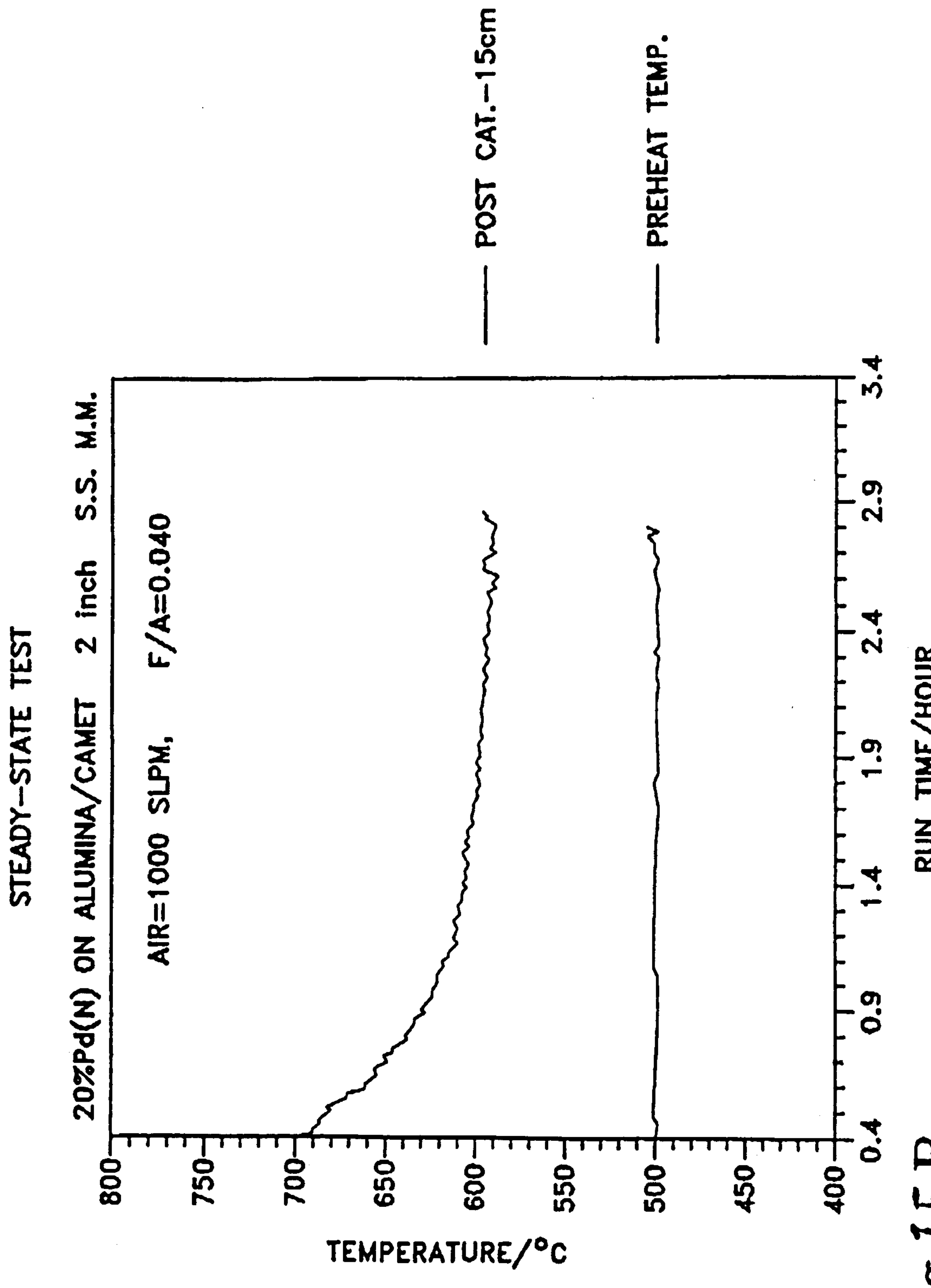
STEADY-STATE TEST
20%Pd(N) ON ALUMINA/CAMET 2 inch S.S. M.M.
AIR=1000 SLPM, F/A=0.040
POST CAT.-15cm
PREHEAT TEMP.
TEMPERATURE/°C
800
750
700
650
600
550
500
450
400
RUN TIME/HOUR
0.4
0.9
1.4
1.9
2.4
2.9
3.4

Fig.15B

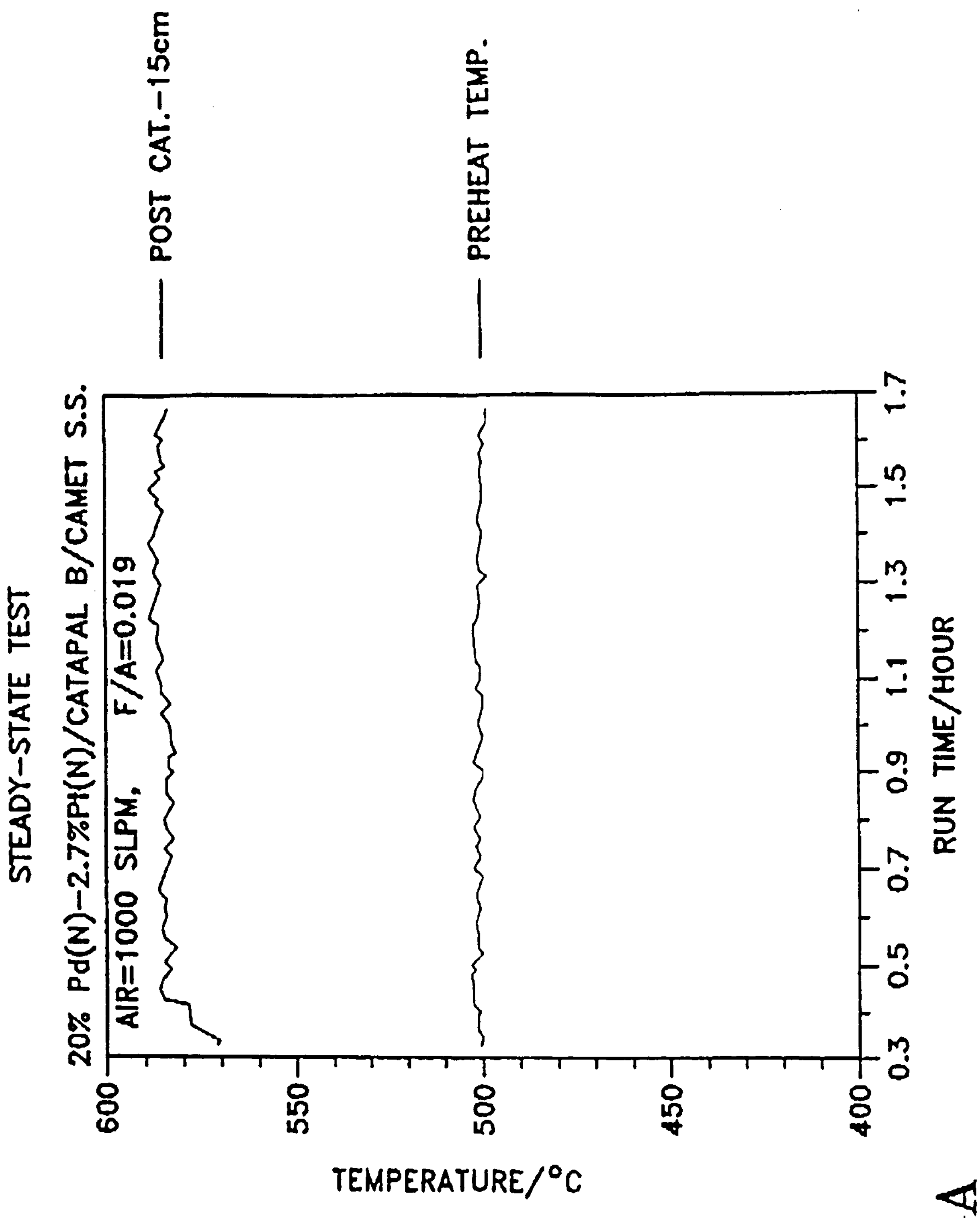
STEADY-STATE TEST
20% Pd(N)-2.7%Pt(N)/CATAPAL B/CAMET S.S.
AIR=1000 SLPM, F/A=0.019
POST CAT.-15cm
PREHEAT TEMP.
600
550
500
450
400
TEMPERATURE/°C
0.3
0.5
0.7
0.9
1.1
1.3
1.5
1.7
RUN TIME/HOUR

Fig.16A

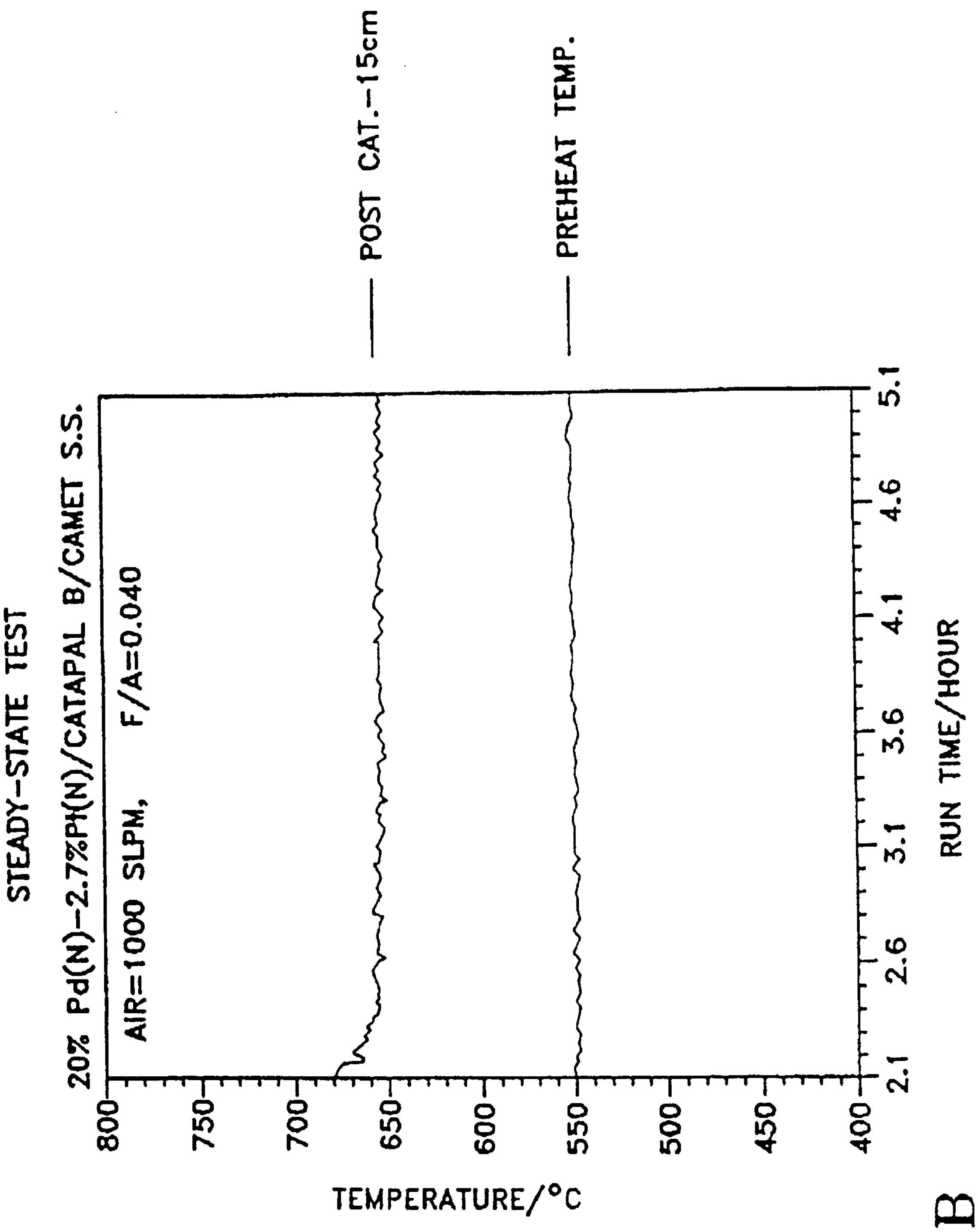
STEADY-STATE TEST
20% Pd(N)-2.7%Pt(N)/CATAPAL B/CAMET S.S.
AIR=1000 SLPM, F/A=0.040
POST CAT.-15cm
PREHEAT TEMP.
800
750
700
650
600
550
500
450
400
TEMPERATURE/°C
2.1
2.6
3.1
3.6
4.1
4.6
5.1
RUN TIME/HOUR

Fig. 16B

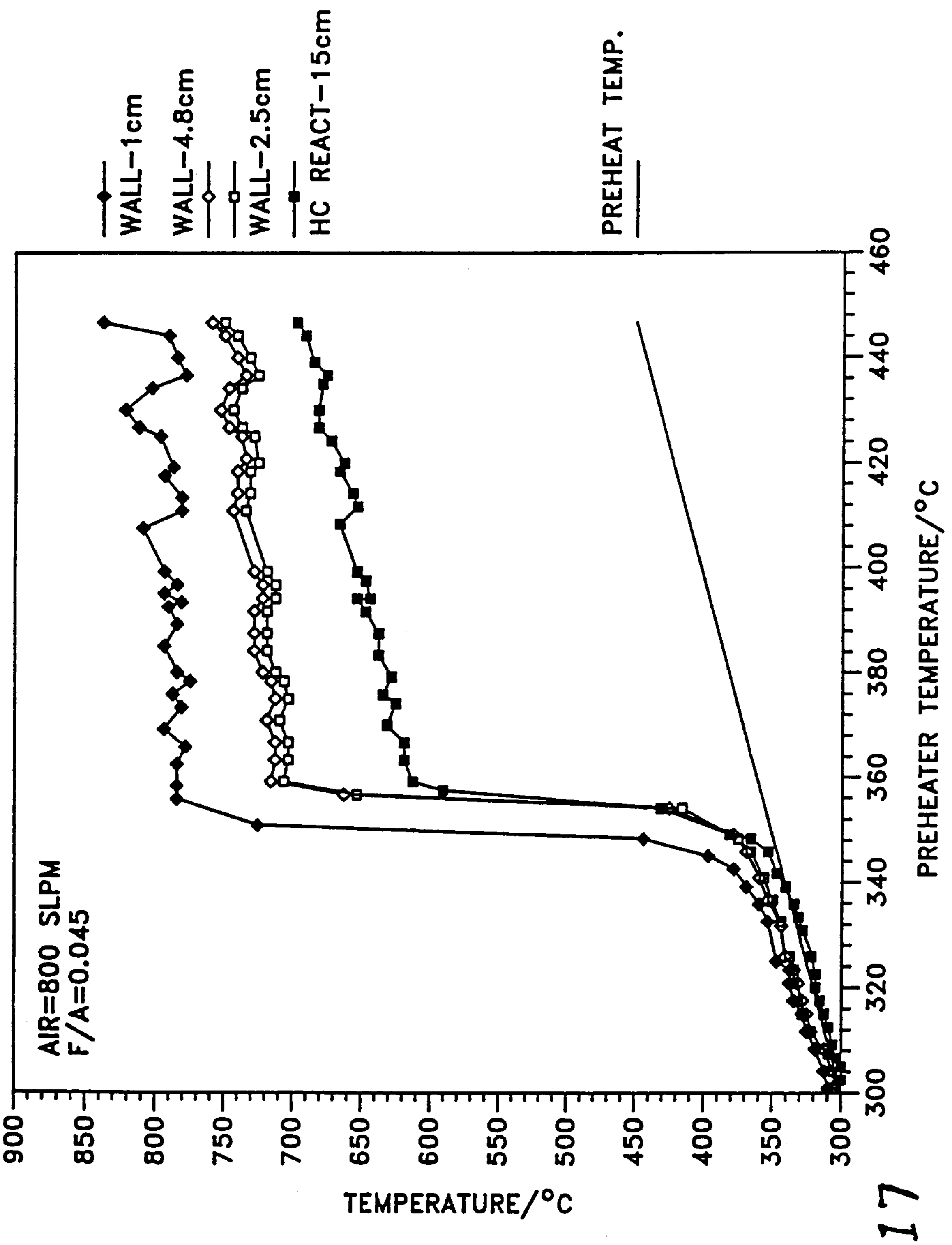
AIR=800 SLPM
F/A=0.045
WALL-1cm
WALL-4.8cm
WALL-2.5cm
HC REACT-15cm
PREHEAT TEMP.
TEMPERATURE/°C
900
850
800
750
700
650
600
550
500
450
400
350
300
PREHEATER TEMPERATURE/°C
300
320
340
360
380
400
420
440
460

Fig. 17

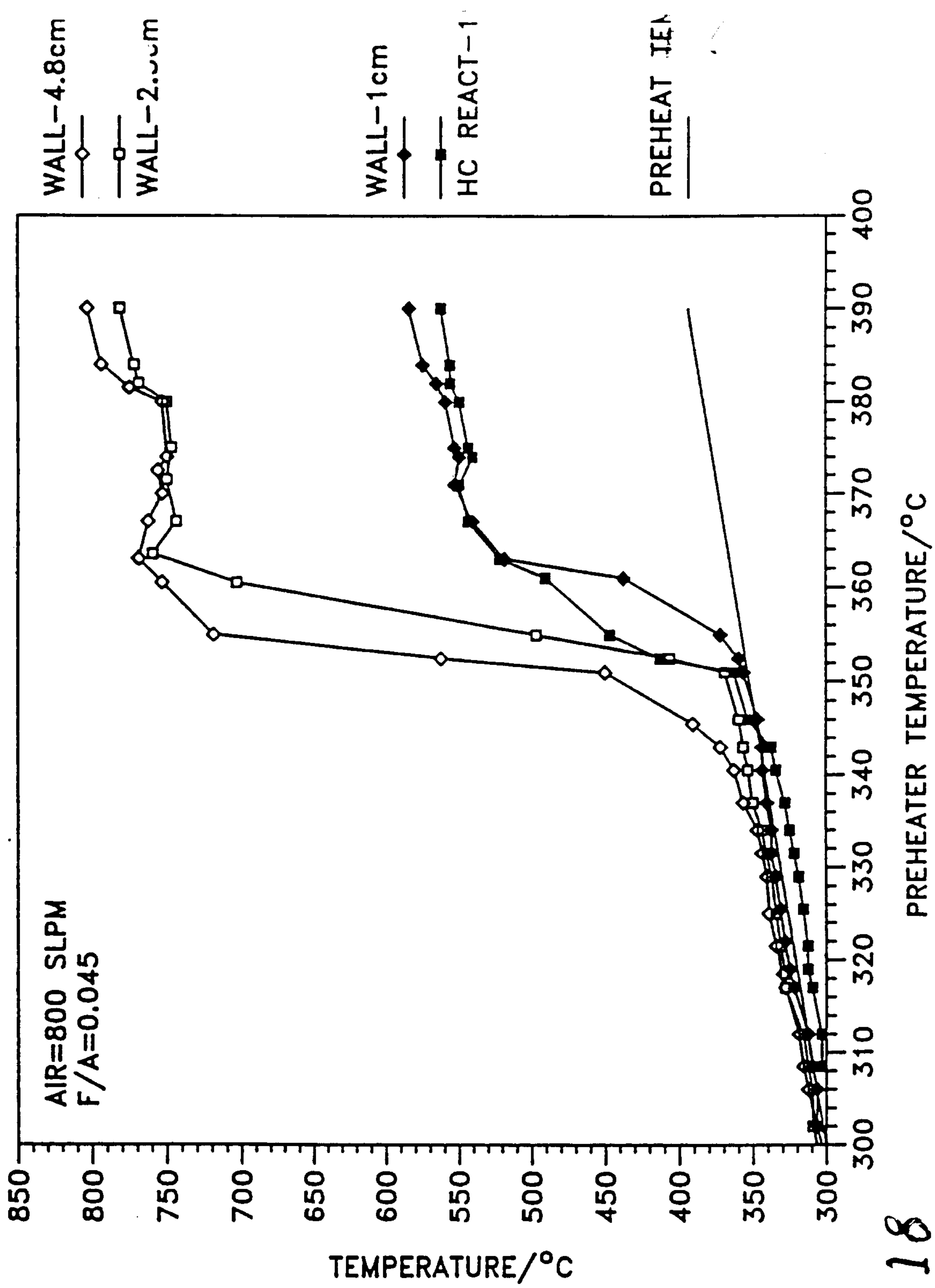
WALL-4.8cm
WALL-2.
WALL-1cm
HC REACT-1
PREHEAT
AIR=800 SLPM
F/A=0.045
850
800
750
700
650
600
550
500
450
400
350
300
TEMPERATURE/°C
300
310
320
330
340
350
360
370
380
390
400
PREHEATER TEMPERATURE/°C

Fig. 18